(19)

**Europäisches Patentamt**

**European Patent Office**

**Office européen des brevets**

(11) **EP 3 640 729 A1**

(12) **EUROPEAN PATENT APPLICATION**

(43) Date of publication:
**22.04.2020 Bulletin 2020/17**

(21) Application number: **19201913.1**

(22) Date of filing: **08.10.2019**

(51) Int Cl.:
**G03B 17/14** (2006.01)     **G03B 17/38** (2006.01)
**G03B 17/56** (2006.01)     **H04N 5/232** (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **12.10.2018   JP 2018193486**

(71) Applicant: **CANON KABUSHIKI KAISHA
Ohta-ku
Tokyo 146-8501 (JP)**

(72) Inventor: **SUGIYAMA, Kazumichi
Ohta-ku, Tokyo 146-8501 (JP)**

(74) Representative: **Houle, Timothy James
Canon Europe Ltd
European Patent Department
3 The Square
Stockley Park
Uxbridge, Middlesex UB11 1ET (GB)**

(54) **IMAGING APPARATUS, ACCESSORY APPARATUS AND CONTROL METHODS THEREFOR**

(57)     A camera body, to which an accessory apparatus such as an adapter 10 is attachable, shifts a communication mode from a broadcast communication mode to a peer-to-peer (P2P) communication mode in response to a bandwidth occupancy command transmitted via a signal line DATA in a broadcast communication mode. The transmission of the bandwidth occupancy command is performed based on a communication state with a smartphone, and identification information of the adapter 10.

**FIG.16**

**EP 3 640 729 A1**

**EP 3 640 729 A1**

**Description**

BACKGROUND OF THE INVENTION

Field of the Invention

The present invention relates to communication between an imaging apparatus and an accessory apparatus.

Description of the Related Art

In a lens interchangeable camera system capable of mounting an interchangeable lens, which is an accessory apparatus, on an imaging apparatus (hereinafter, also referred to as a camera body), a camera body and an interchangeable lens communicate with each other. In this case, it is necessary to perform large-volume data communication in real-time in order to realize imaging control such as image processing and image recording having a high quality and responsiveness, and furthermore, imaging control such as a smooth aperture control and a focus control.

Similarly, a configuration in which the camera body and an adapter, which is an accessory apparatus mounted between the interchangeable lens and the camera body, can communicate with each other is necessary. There are cases in which an adapter such as a wide converter or a tele-converter (extender) is mounted between the camera body and the interchangeable lens. When a user operates such an adapter, it is necessary that the adapter performs communication with the camera body in the same manner as the interchangeable lens.

Japanese Patent Application Laid-Open No. 2006-171392 discusses a camera system in which an adapter corrects changes of the optical parameters when the adapter is mounted between the camera body and the interchangeable lens.

According to Japanese Patent Application Laid-Open No. 2006-171392, the camera body can obtain the optical parameters of the interchangeable lens taking the optical properties of the adapter into consideration. However, in the configuration disclosed in Japanese Patent Application Laid-Open No. 2006-171392, the communication between the interchangeable lens and the camera body in consideration of the communication between the interchangeable lens and the adapter or the communication between the interchangeable lens and the camera body via the adapter is only performed. Accordingly, the configuration discussed in Japanese Patent Application Laid-Open No. 2006-171392 does not discuss the configuration or a communication control for the camera body to separately communicate with the adapter.

SUMMARY OF THE INVENTION

According to a first aspect of the present invention, there is provided an imaging apparatus as specified in claims 1 to 6. According to a second aspect of the present invention, there is provided an accessory apparatus as specified in claims 7 to 12. According to a third aspect of the present invention, there is provided a control method for an imaging apparatus as specified in claim 13. According to a fourth aspect of the present invention, there is provided a control method for an accessory apparatus as specified in claim 14.

Further features of the present invention will become apparent from the following description of exemplary embodiments with reference to the attached drawings.

BRIEF DESCRIPTION OF THE DRAWINGS

Fig. 1 is a block diagram illustrating a configuration of a camera system according to a first exemplary embodiment of the present invention.
Fig. 2A is a block diagram illustrating a first communication path according to the first exemplary embodiment.
Fig. 2B is a block diagram illustrating a second communication path according to the first exemplary embodiment.
Fig. 2C is a diagram illustrating signal waveforms when realizing the second communication according to the first exemplary embodiment in a clock-synchronous manner.
Fig. 3A is a diagram illustrating a communication format of the first communication according to the first exemplary embodiment.
Fig. 3B is a diagram illustrating signal waveforms when realizing the second communication according to the first exemplary embodiment in a clock-asynchronous manner.
Fig. 4A is a diagram illustrating communication waveforms in a broadcast communication according to the first exemplary embodiment.
Fig. 4B is another diagram illustrating communication waveforms in the broadcast communication according to the

2

first exemplary embodiment.

Fig. 5 is a diagram illustrating communication waveforms in a peer-to-peer (P2P) communication according to the first exemplary embodiment.

Fig. 6 is a diagram illustrating the communication waveforms according to the first exemplary embodiment when switching a communication mode.

Fig. 7A is a flowchart illustrating processing by a camera body in a broadcast communication according to the first exemplary embodiment.

Fig. 7B is a flowchart illustrating processing by an interchangeable lens and an adapter in a broadcast communication according to the first exemplary embodiment.

Fig. 8A is a flowchart illustrating processing by the camera body in P2P communication according to the first exemplary embodiment.

Fig. 8B is a flowchart illustrating processing by the interchangeable lens and an adapter in the P2P communication according to the first exemplary embodiment.

Fig. 9 is a sequence diagram illustrating control performed in response to an operation of an operation member of the adapter according to the first exemplary embodiment.

Fig. 10 is a sequence diagram illustrating control performed in response to an operation of an operation member of adapter according to a second exemplary embodiment.

Figs. 11A and 11B are flowcharts illustrating processing by the adapter according to the first exemplary embodiment.

Figs. 12A and 12B are flowcharts illustrating processing by the camera body according to the first exemplary embodiment.

Fig. 13 is a flowchart illustrating processing by the interchangeable lens according to the first exemplary embodiment.

Fig. 14 is a sequence diagram illustrating control performed in response to an operation of an operation member of an adapter according to a third exemplary embodiment.

Fig. 15 is a block diagram illustrating a configuration of a smartphone according to a fourth exemplary embodiment of the present invention.

Fig. 16 is a flowchart illustrating processing by a camera body according to the fourth exemplary embodiment.

Figs. 17A and 17B are a sequence diagram illustrating a sequence of a firmware update in an adapter via a camera body by a smartphone according to a fifth exemplary embodiment.

Fig. 18A is a flowchart illustrating processing by the camera body according to the fifth exemplary embodiment.

Fig. 18B is a flowchart illustrating processing by the smartphone according to the fifth exemplary embodiment.

Fig. 18C is a flowchart illustrating processing by the adapter according to the fifth exemplary embodiment.

Fig. 19A, 19B, 19C, and 19D are diagrams illustrating a screen display example of the firmware update processing according to the fifth exemplary embodiment.

Fig. 20 is a block diagram illustrating a configuration of a camera system according to a sixth exemplary embodiment.

Fig. 21 is a diagram illustrating communication waveforms in a bandwidth occupancy communication according to the sixth exemplary embodiment.

Fig. 22 is a sequence diagram illustrating a sequence of control in response to an operation of a smartphone according to the sixth exemplary embodiment.

Fig. 23A is a flowchart illustrating processing by a camera according to the sixth exemplary embodiment.

Fig. 23B is a flowchart illustrating processing by the smartphone according to the sixth exemplary embodiment.

Fig. 23C is a flowchart illustrating processing by an adapter according to the sixth exemplary embodiment.

Figs. 24A, 24B, 24C, 24D, and 24E are diagrams illustrating a screen display example in drive control processing of a universal head drive motor of the adapter according to the sixth exemplary embodiment.

Fig. 25 is a diagram illustrating communication waveforms of a bandwidth occupancy communication in a bandwidth occupancy communication mode according to the sixth exemplary embodiment.

Fig. 26A is a flowchart illustrating processing by a camera body in the bandwidth occupancy communication according to the sixth exemplary embodiment.

Fig. 26B is a flowchart illustrating processing by the adapter in the bandwidth occupancy communication according to the sixth exemplary embodiment.

Fig. 27 is a diagram illustrating communication waveforms in another example of a bandwidth occupancy communication in a bandwidth occupancy communication mode according to a seventh exemplary embodiment.

Fig. 28A is a flowchart illustrating processing by a camera body in the other example of the bandwidth occupancy communication according to the seventh exemplary embodiment.

Fig. 28B is a flowchart illustrating processing by an adapter in the other example of the bandwidth occupancy communication according to the seventh exemplary embodiment.

DESCRIPTION OF THE EMBODIMENTS

Exemplary embodiments of the present invention will be described below with reference to the drawings. Each of the embodiments of the present invention described below can be implemented solely or as a combination of a plurality of the embodiments or features thereof where necessary or where the combination of elements or features from individual embodiments in a single embodiment is beneficial.

<Configuration of Camera System>

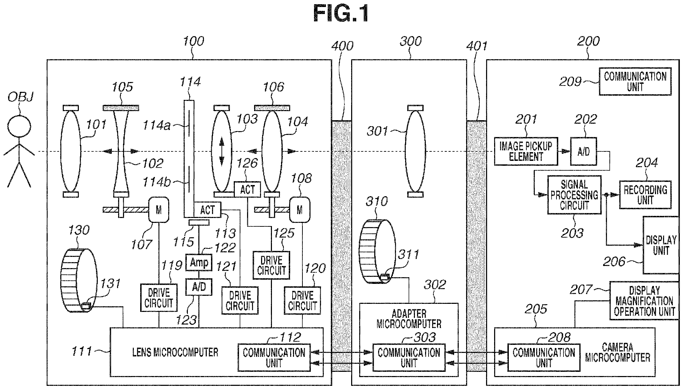

Fig. 1 illustrates a configuration of an imaging system (hereinafter, referred to as a camera system) including an imaging apparatus 200 (hereinafter, referred to as a camera body) as an example according to a first exemplary embodiment, an interchangeable lens 100 and an adapter apparatus 300 (hereinafter, referred to simply as an adapter), which is an example of an intermediate accessory apparatus. The camera body 200 according to the present exemplary embodiment can be used with the interchangeable lens 100 and the adapter 300 mounted thereon.

Fig. 1 illustrates the camera system in which one adapter 300 is mounted between the camera body 200 and the interchangeable lens 100 as an example, but a plurality of adapters may be connected and mounted between the camera body 200 and the interchangeable lens 100.

In the camera system according to the present exemplary embodiment, a plurality of communication methods is used to perform communication between the camera body 200, the interchangeable lens 100, and the adapter 300. The camera body 200, the interchangeable lens 100, and the adapter 300 perform transmission of the control command and data (information) via each of first communication units thereof. Further, each of the first communication units supports a plurality of communication methods, and the most suitable communication method can be selected for various situations based on the type of data to be communicated and purpose of the communication, by simultaneously switching to the same communication method.

Further, in the camera system according to the present exemplary embodiment, in addition to paths for communication via each of first communication unit of the camera body 200, the interchangeable lens 100, and the adapter 300, the camera system has a path for communicating via a second communication unit of each of the camera body 200 and the interchangeable lens 100.

First, more specific configurations of the interchangeable lens 100, the camera body 200, and the adapter 300 will be described.

The interchangeable lens 100 and the adapter 300 are mechanically and electrically connected with each other via a mount 400 serving as a coupling mechanism. Similarly, the adapter 300 and the camera body 200 are mechanically and electrically connected with each other via a mount 401 serving as a coupling mechanism. The mount 400 schematically illustrates a state in which the mount of the interchangeable lens 100 is coupled with the mount of the adapter 300, and these mounts are detachable from each other. Further, the mount 401 schematically illustrates a state in which the mount of the adapter 300 is coupled with the mount of the camera body 200, and these mounts are detachable from each other.

A communication terminal (described below) is provided on a mount face of the mount of each of the interchangeable lens 100, the adapter 300, and the camera body 100. In a state in which units are connected via a mount such as the mount 400 or the mount 401, communication via the communication terminal becomes possible by connecting the corresponding communication terminals.

The interchangeable lens 100 and the adapter 300 obtain a power source from the camera body 200 via power source terminals (not illustrated) provided in the mounts 400 and 401. The power source necessary to operate the various actuators to be described below is supplied to a lens microcomputer 111 and an adapter microcomputer 302. The interchangeable lens 100, the camera body 200, and the adapter 300 communicate with each other via the communication terminals (described below) provided on the mounts 400 and 401.

The interchangeable lens 100 has an image pickup optical system. The image pickup optical system includes, in order from the subject OBJ side, a field lens 101, a magnification-varying lens 102 for varying magnification, and an aperture unit 114 for adjusting a light amount. Furthermore, the image pickup optical system includes an anti-vibration lens 103 for reducing (corrects) image blur, and a focus lens 104 for adjusting focus.

The magnification-varying lens 102 and the focus lens 104 are respectively held by lens holding frames 105 and 106. The lens holding frames 105 and 106 are moveably guided in the optical axis direction (indicated by a dashed line in Fig. 1) by a guide shaft (not illustrated), and driven in the optical axis direction by stepping motors 107 and 108. The stepping motors 107 and 108 respectively move a zoom lens 102 and the focus lens 104 synchronized with a drive pulse.

The anti-vibration lens 103 reduces image blur caused by camera vibration (hand vibration and the like) by shifting to the direction orthogonal to the optical axis of the image pickup optical system.

The lens microcomputer 111 is a lens control unit that controls the operation of each unit in the interchangeable lens 100. Further, the lens microcomputer 111 receives a control command and a transmission request command transmitted from the camera body 200 via a lens first communication unit 112 including a lens communication interface circuit. The lens microcomputer 111 performs a lens control corresponding to the control command, and transmits lens data corresponding to the transmission request command to the camera body 200 via the lens first communication unit 112.

Further, the lens microcomputer 111 outputs a drive signal to a zoom drive circuit 119 and a focus drive circuit 120 in response to commands relating to magnification varying and focusing among the control commands to drive the stepping motors 107 and 108. Zoom processing for controlling the magnification varying operation by the zoom lens 102 and auto focus (AF) processing for controlling a focus adjustment operation by the focus lens 104 are performed thereby.

The aperture unit 114 is provided with aperture blades 114a and 114b. The state (position) of the aperture blades 114a and 114b is detected by a Hall element 115. The output from the Hall element 115 is input into the lens microcomputer 111 via an amplifier circuit 122 and an analog to digital (A/D) conversion circuit 123. The lens microcomputer 111 outputs the drive signal to an aperture drive circuit 121 based on the input signal from the A/D conversion circuit 123 to drive an aperture actuator 113. In this way, a light amount adjustment operation is controlled with the aperture unit 114.

Furthermore, the lens microcomputer 111 drives an anti-vibration actuator 126 (e.g., voice coil motor) via an anti-vibration drive circuit 125 based on the camera vibration detected by a vibration sensor (not illustrated) such as a vibration gyro sensor provided in the interchangeable lens 100. Anti-vibration processing for controlling the shift operation (anti-vibration operation) of the anti-vibration lens 103 is performed in this way.

Further, the interchangeable lens 100 has a manual operation ring 130 (i.e., electronic ring), which can be rotated by a user, and a ring rotation detector 131. The ring rotation detector 131 is configured by a photo interrupter which outputs, for example, a 2-phase signal generated according to the rotation of the manual operation ring 130. The lens microcomputer 111 can use the 2-phase signal to detect the rotation operation amount (including the direction) of the manual operation ring 130. Further, the lens microcomputer 111 can notify the camera microcomputer 205 of the rotation operation amount of the manual operation ring 130 via the lens first communication unit 112.

The adapter 300 is an extender for changing, for example, the focal length, and has a magnification-varying lens 301 and an adapter microcomputer 302. The adapter microcomputer 302 is an adapter control unit (also referred to as an accessory control unit or a communication control unit) that controls the operation of each unit in the adapter 300. Further, the adapter microcomputer 302 receives a control command and a transmission request command transmitted from the camera body 200 via an adapter first communication unit 303 (accessory communication unit) including a communication interface circuit. The adapter microcomputer 302 performs the adapter control corresponding to the control command, and transmits the adapter data corresponding to the transmission request command to the camera body 200 via the adapter first communication unit 303. In the present exemplary embodiment, the case when the adapter 300 is an extender is described, but the adapter 300 may be a wide converter that changes the focal length, and may be a mount converter that changes the flange back length.

Further, the adapter 300 has an adapter operation ring 310 (i.e., electronic ring) as an operation member, which can be rotated by a user, and a ring rotation detector 311, like the interchangeable lens 100. The ring rotation detector 311 also is configured by a photo interrupter that outputs, for example, a 2-phase signal according to the rotation of the adapter operation ring 310, like the ring rotation detector 131 of the interchangeable lens 100. The adapter microcomputer 302 can detect, by using the 2-phase signal, the rotation operation amount (including the direction) of the adapter operation ring 310. Further, the adapter microcomputer 302 can notify the camera microcomputer 205 of the rotation operation amount of the adapter operation ring 310 via the adapter first communication unit 303.

The operation member provided on the adapter 300 may be, other than the operation ring, a switch, a button, or a touch panel. Further, a plurality of operation members may be provided on the adapter 300.

The camera body 200 has an image pickup element 201 such as a charge-coupled device (CCD) sensor or a complementary metal-oxide semiconductor (CMOS) sensor, an A/D conversion circuit 202, a signal processing circuit 203, a recording unit 204, a camera microcomputer 205, and a display unit 206.

The image pickup element 201 performs photoelectric conversion on an object image formed by the image pickup optical system in the interchangeable lens 100 and outputs an electronic signal (analog signal). The A/D conversion circuit 202 converts the analog signal from the image pickup element 201 into a digital signal. The signal processing circuit 203 performs various types of image processing on the digital signal from the A/D conversion circuit 202 to generate an image signal. Further, the signal processing circuit 203 generates focus information indicating a contrast state (focus state of the image pickup optical system) of the object image from the image signal and luminance information indicating an exposure state. The signal processing circuit 203 outputs the image signal to the display unit 206, and the display unit 206 displays the image signal as a live view image to be used in the confirmation of the composition and the focus state.

A camera microcomputer 205 (also referred to as a communication control unit) serving as a camera control unit controls the camera body 200 in response to the input from a camera operation member such as an image instruction switch (not illustrated) and various setting switches. Further, the camera microcomputer 205 transmits a control command relating to the magnification varying operation of the zoom lens 102 in response to the operation of a zoom switch (not illustrated) to the lens microcomputer 111 via a camera first communication unit 208 including a communication interface circuit 207. Furthermore, the camera microcomputer 205 transmits control commands relating to a light amount adjustment operation of the aperture unit 114 based on the luminance information and a focus adjustment operation of the focus lens 104 based on the focus information to the lens microcomputer 111 via the camera first communication unit 208. Further, the camera microcomputer 205 transmits a transmission request command for acquiring the control information and the state information of the interchangeable lens 100 to the lens microcomputer 111 as needed. Furthermore, the camera microcomputer 205 transmits a transmission request command for acquiring the control information and the state information of the adapter 300 to the adapter microcomputer 302.

A communication unit 209 is an interface for connecting with an external device. The camera body 200 according to the present exemplary embodiment can exchange data with the external device via the communication unit 209. For example, the image data generated by the signal processing circuit 203 can be transmitted to the external device via the communication unit 209. In the present exemplary embodiment, the communication unit 209 includes an interface for communicating with the external device by a wireless local area network (LAN) that conforms to the IEEE 802.11 standards. The camera microcomputer 205 implements wireless communication between the external devices by controlling the communication unit 209. The communication method is not limited to the wireless LAN, and examples include an infrared communication method.

Further, the communication unit 209 may be a near-field wireless communication unit including, for example, an antenna for wireless communication and a modulator/demodulator circuit and a communication controller for processing wireless signals. In this case, the communication unit 209 outputs a modulated wireless signal from the antenna and demodulates a wireless signal received by the antenna in order to implement contactless near-field communication that conforms to the standards of ISO/IEC 18092 (i.e., Near Field Communication (NFC)). The communication is started by bringing the communication unit 209 as a near-field wireless communication unit of the camera body 200 and a near-field wireless communication unit of an external device such as a smartphone into close contact with each other. In the case of connection using the near-field wireless communication unit, it is not necessarily required to bring the near-field wireless communication units into contact with each other. Since the near-field wireless communication units can communicate with each other even at a certain distance, the near-field wireless communication units should be close enough to be able to perform near-field wireless communication in order to connect the devices with each other. In the following description, bringing the near-field wireless communication units close enough to be able to perform near-field wireless communication is referred to as bringing close. Further, communication will not be started when the near-field wireless communication units are within a range where near-field wireless communication is impossible. Further, when the near-field wireless communication units are within a range where near-field wireless communication is possible and in communication connection with each other, the communication connection is released when the near-field wireless communication units are separated to be within a range where near-field wireless communication is impossible. The contactless near-field communication implemented by the near-field wireless communication units is not limited to NFC, and other wireless communication may be employed. For example, a contactless near-field communication that conforms to the ISO/IEC 14443 standards may be employed.

Further, as another example, the communication unit 209 may be a near-field wireless communication unit including, for example, an antenna for wireless communication and a modulator/demodulator circuit and the communication controller for processing the wireless signal. In this case, the communication unit 209 may be configured to output a modulated wireless signal from the antenna, and demodulate the wireless signal received by the antenna to implement the near-field wireless communication that conforms to the IEEE 802.15 standards (i.e., Bluetooth®). In the present exemplary embodiment, for the Bluetooth® communication, Bluetooth® Low Energy version 4.0, which has a low power consumption, is used. This Bluetooth® communication has a narrow communication range compared with wireless LAN communication (i.e., the distance at which communication is possible is short). Further, the Bluetooth® communication has a slow communication speed compared with the wireless LAN communication. On the one hand, Bluetooth® communication has a low power consumption compared with the wireless LAN communication.

The communication unit 209 may be configured to perform wired communication by connecting the camera body 200 with an external device by a cable and the like.

<Communication Path For First Communication>

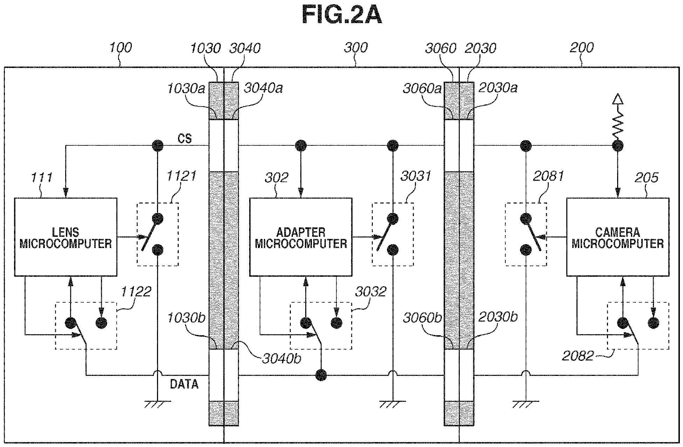

Next, a communication path configured between a first communication unit (not shown) of the camera microcomputer 205, a first communication unit (not shown) of the adapter microcomputer 302, and a first communication unit (not shown) of the lens microcomputer 111 (not shown) is described with reference to Fig. 2A. The communication performed through this communication path is referred to as the first communication.

The camera microcomputer 205, the lens microcomputer 111, and the adapter microcomputer 302 communicate using a signal line (channel) connected via the communication terminal provided in each of the mounts 400 and 401 described above.

A mount 1030 of the interchangeable lens 100 and a mount 3040 of the adapter 300 are included in the mount 400. The mount 1030 includes a communication terminal 1030a and a communication terminal 1030b. Further, the mount 3040 includes a communication terminal 3040a and a communication terminal 3040b. In a state in which the interchangeable lens 100 is mounted on the adapter 300, the communication terminal 1030a and the communication terminal 3040a are in contact with each other. Further, in a state in which the interchangeable lens 100 is mounted on the adapter 300, the communication terminal 1030b and the communication terminal 3040b are in contact with each other.

A mount 2030 of the camera body 200 and a mount 3060 of the adapter 300 are included in the mount 401. The mount 2030 includes a communication terminal 2030a and a communication terminal 2030b. In a state in which the adapter 300 is mounted on the camera body 200, the communication terminal 2030a and the communication terminal 3060a are in contact with each other. Further, in the state in which the adapter 300 is mounted on the camera body 200, the communication terminal 2030b and the communication terminal 3060b are in contact with each other.

A signal line CS (i.e., second signal line, corresponding to a signal transmission channel) for transmitting a signal for communication control and a signal line DATA (i.e., first signal line, corresponding to a data communication channel) for communicating the data are provided as signal lines

The signal line CS is a signal line used for communication via the communication terminals 1030a, 3040a, 2030a, and 3060a. The signal line CS is connected to the camera microcomputer 205, the adapter microcomputer 302, and the lens microcomputer 111. Accordingly, the camera microcomputer 205, the adapter microcomputer 302, and the lens microcomputer 111 can detect High (herein referred to as "Hi") and Low as the states of the CS. Further, the signal line CS is connected in a pulled-up manner to the power source (not illustrated) in the camera body 200. The signal line CS can be connected (open drain connection) to a ground GND via a ground switch 1121 in the interchangeable lens 100, a ground switch 2081 in the camera body 200, and a ground switch 3031 in the adapter 300.

With this configuration, the camera microcomputer 205, the adapter microcomputer 302, and the lens microcomputer 111 can respectively set the signal line CS to Low by turning ON (connecting) the ground switches 2081, 1121, and 3031. Further, the camera microcomputer 205, the adapter microcomputer 302, and the lens microcomputer 111 can respectively set the signal line CS to Hi by turning OFF (disconnecting) the ground switches 2081, 1121, and 3031. Details of the signals (instruction and notification signals) for communication control transmitted through the signal line CS and the output processing thereof will be described below.

The signal line DATA is communication line via the communication terminals 1030b, 3040b, 2030b, and 3060b. The signal line DATA is a bi-directional data communication line of a single line that can be used while switching the transmission direction of the data. The signal line DATA can be connected with the lens microcomputer 111 via an input/output switching switch 1122 in the interchangeable lens 100, and can be connected with the camera microcomputer 205 via an input/output switching switch 2082 in the camera body 200. Further, the signal line DATA can be connected with the adapter microcomputer 302 via an input/output switching switch 3032 in the adapter 300. Each microcomputer is provided with a data output unit of the CMOS type for transmitting the data and a data input unit of the CMOS type for receiving the data (both units are not illustrated). Each microcomputer can select whether to connect the signal line DATA to the data output unit or to the data input unit by switching the input/output switching switch described above.

When transmitting the data, the camera microcomputer 205, the adapter microcomputer 302, and the lens microcomputer 111 set the corresponding input/output switching switch so as to connect the signal line DATA to the data output unit. Further, when receiving the data, the camera microcomputer 205, the adapter microcomputer 302, and the lens microcomputer 111 set the corresponding input/output switching switch so as to connect the signal line DATA to the data input unit. The details of the input/output switching processing of the signal line DATA will be described below.

Referring to Fig. 2A, an example of the communication circuit is described, but another communication circuit may be used. For example, the signal line CS is connected in a pulled down manner to the GND in the camera body 200, and the signal line CS may be connected with the power source (not illustrated) via the ground switch 1121 of the interchangeable lens 100, the ground switch 2081 of the camera body 200, and the ground switch 3031 of the adapter 300. Further, in the interchangeable lens 100, the camera body 200, and the adapter 300, the signal line DATA may always be connected to the data input unit, and the connect/cut off of the signal line DATA and the data output unit may be switched.

If broadcast communication and P2P communication to be described below can be performed, the communication circuit may have a configuration other than the communication circuit illustrated in Fig. 2A.

In addition, even when the interchangeable lens 100 is mounted on the camera body 200 without the adapter 300 there between, it is possible to perform the first communication by providing the configuration necessary for the camera body 200 and the interchangeable lens 100 to execute the first communication. Further, even in a case where the interchangeable lens 100 is mounted on the camera body 200 via two or more adapters, it is similar in the point that the first communication can be executed. In other words, it is possible to perform the first communication by providing the configuration necessary for the camera body 200, the interchangeable lens 100, and the two or more adapters to execute the first communication.

<Communication Path For Second Communication>

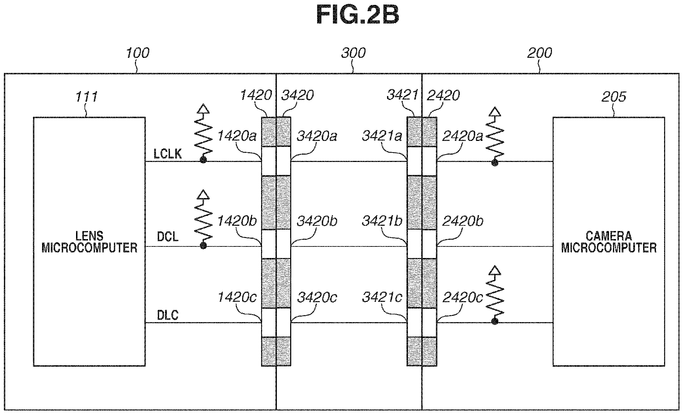

Next, the communication path configured between a second communication unit (not shown) of the camera body 200 (camera microcomputer 205) and a second communication unit (not shown) of the interchangeable lens 100 (lens microcomputer 111) will be described with reference to Fig. 2B. The communication performed by this communication path is also referred to as the second communication.

Second communication LCLK terminals 1420a, 3420a, 3421a, and 2420a, which are the terminals of a clock line LCLK output from the camera microcomputer 205 for performing clock synchronous communication, are respectively included in a second communication contact group 1420, 3420, 3421 and 2420. Further, second communication DCL terminals 1420b, 3420b, 3421b, and 2420b, which are the terminals of a data line DCL output from the camera microcomputer 205 of the clock synchronous communication, are also included therein in the same manner. Further, the second communication DLC 1420c, 3420c, 3421c, and 2420c, which are the terminals of a data line DLC output from the lens microcomputer 111 of the clock synchronous communication, are also included therein in the same manner.

As illustrated in Fig. 2B, the clock line LCLK and the data line DCL are pulled up in the interchangeable lens 100. Further, the clock line LCLK and the data line DLC are pulled up in the camera body 200.

The clock line LCLK, the data line DCL, and the data line DLC in the adapter 300 are respectively short-circuited between second communication contacts 3420 and 3421. The signals exchanged through the second communication are transmitted through the adapter 300 via the communication terminal of the adapter 300, but the second communication is not transmitted via the adapter microcomputer 302.

In the present exemplary embodiment, the second communication may be implemented by the same communication method as the first communication, bi-directional clock-synchronous communication, the master-slave method, or the token passing method. When implementing by clock-synchronous communication, the communication timing of the data line DCL and the data line DLC may be controlled based on the signal output to the clock line LCLK from the camera microcomputer 205.

<Communication Data Format of First Communication>

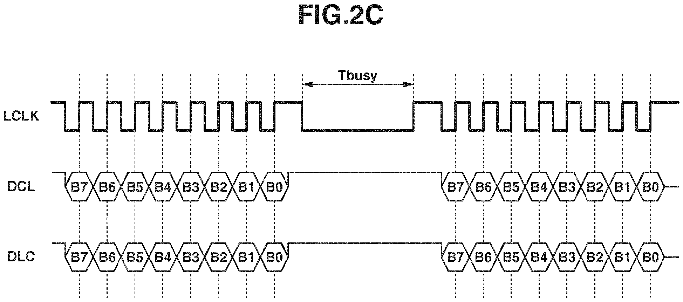

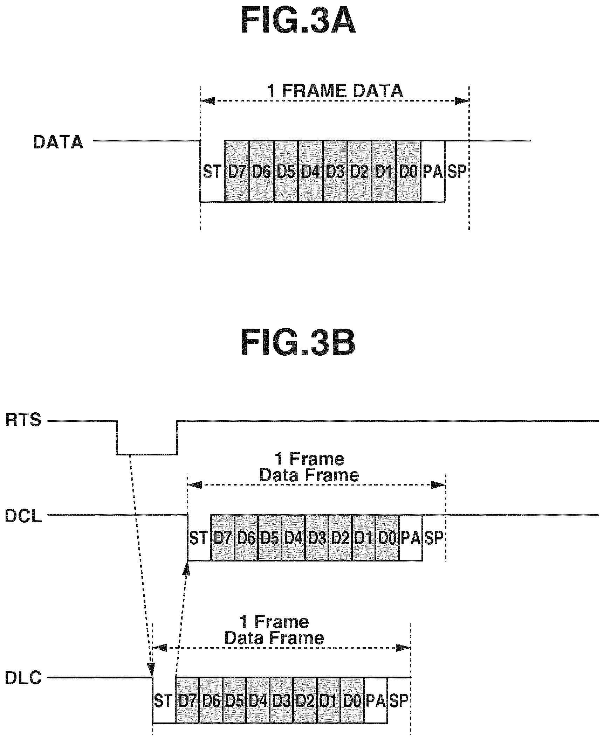

Next, the communication data communication format exchanged between the camera body 200 (camera microcomputer 205), the interchangeable lens 100 (lens microcomputer 111) and the adapter 300 (adapter microcomputer 302) will be described with reference to Fig. 2C and Fig. 3A.

First, the communication data format of the first communication will be described with reference to Fig. 3A. The communication data format is the same as that of the broadcast communication and P2P communication, which will be described below. Here, a communication data format, in the case of performing asynchronous communication in which the communication speed to be used in communication between microcomputers is determined in advance and transmission and reception at a communication bit rate conforming to the determination, will be described.

In a non-transmission state in which a first data transmission has not been performed, the signal level is maintained at Hi. Next, the signal level is set to Low during 1 bit- period to notify the data reception side of the start of the data transmission. This 1 bit period is referred to as a start bit ST. Next, one byte of data is transmitted in the 8-bit period from the subsequent 2nd bit to the 9th bit. The bit sequence of the data starts from the highest order data D7 as an MSB first format, continues with data D6, data D5, ..., data D1, and ends with the lowest order data DO. One frame period started from the start bit ST ends by adding 1 bit of the parity PA information to the 10th bit, and finally, the signal level is set to Hi during the stop bit SP indicating the end of the transmission data.

Figs. 3A and 3B illustrate an example of the communication data format, but another communication data format may be used. For example, the bit sequence of the data may be LSB first or 9-bit length, and the parity PA information does not have to be added. Further, the communication data format may be switched between the broadcast communication and the P2P communication.

<Communication data Format of Second Communication>

Next, the data format of the second communication will be described with reference to Fig. 2C and Fig. 3B. Here, an example in which the second communication is implemented by the communication of the clock-synchronous method is described.

Fig. 2C illustrates signal waveforms of the clock line LCLK, the data line DCL, and the data line DLC when first communication is being performed.

The second communication unit of the camera body 200 outputs a clock signal to the clock line LCLK, and outputs data of 8 bits of B7 to BO to the data DCL in synchronization with the rising signal of the clock line LCLK. Likewise, the second communication unit outputs the data of 8 bits of B7 to BO to the data line DLC in synchronization with the rising of the clock signal output to the clock line LCLK. Furthermore, the second communication unit of the camera body 200 receives the data of 8 bits from B7 to BO of the data line DLC according to the rising of the clock signal output to the clock line LCLK. Likewise, the second communication unit of the interchangeable lens 100 receives the data of 8 bits of B7 to BO of the data line DCL in synchronization with the rising of the clock signal output to the clock line LCLK.

In this way, the second communication unit of the camera body 200 and the second communication unit of the interchangeable lens 100 can exchange communication data with each other. When the second communication unit of the interchangeable lens 100 receives the data of 8 bits of B7 to BO of the data line DCL, the clock line LCLK is set to a LOW output for a Tbusy time, then, the LOW output is cancelled. In this case, the Tbusy time is time during which the interchangeable lens 100 processes the received data, and the second communication unit of the camera body 200 is configured not to transmit the data until the clock line LCLK changes from LOW to HIGH after the data transmission. This signal control enables a flow control of the first communication. By repeating the above-described processing, the data can be transmitted between the second communication unit of the camera body 200 and the second communication unit of the interchangeable lens 100 through the first communication.

The second communication may be implemented in an asynchronous method in place of the above-described clock-synchronous method. The signal waveforms of the communication to which a 3-wire asynchronous communication is applied is illustrated in Fig. 3B.

In the case of 3-wire asynchronous communication, the above-described clock line LCLK is used as a control line RTS. The control line RTS is a signal line for transmitting the signal for controlling timing of communication by the data line DCL and timing of communication by the data line DLC from the camera microcomputer 205 to the lens microcomputer 111. For example, the control line RTS is used for notifications such as the transmission request (transmission instruction) of the lens data and a switching request (switching instruction) of the communication processing to be described below from the camera microcomputer 205 to the lens microcomputer 111. Notification through the control line RTS is performed by switching the signal level (voltage level) in the control line RTS between High and Low.

As illustrated in Fig. 3B, the transmission request is transmitted from the camera microcomputer 205 as a communication master to the lens microcomputer 111 as a communication slave by changing the signal level of the signal supplied to the control line RTS from High to Low.

If the lens microcomputer 111 receives the transmission request, in order to notify the camera microcomputer 205 of the start of the data transmission by the data line DLC, the signal level of the data line DLC is set Low during the 1 bit period. This 1 bit period is referred to as the start bit ST indicating the start of the data of one frame. The transmission of the data of one frame starts from the start bit ST. The start bit ST is provided at the top bit of each one frame data output to the line DLC.

Next, the lens microcomputer 111 transmits one byte of lens data during 8-bit period of the subsequent 2nd to 9th bits via the data line DLC. The bit sequence of the data starts from the highest order data D7 as the MSB first format, and continues in the order of data D6, data D5, and ends with the lowest order data DO. Moreover, the lens microcomputer 111 adds the 1 bit of parity PA information to the 10th bit, and sets the signal level during the period of the stop bit SP that indicates the end of one frame to High. Thus, the data frame period started from the start bit ST ends.

<Broadcast Communication (First Communication)>

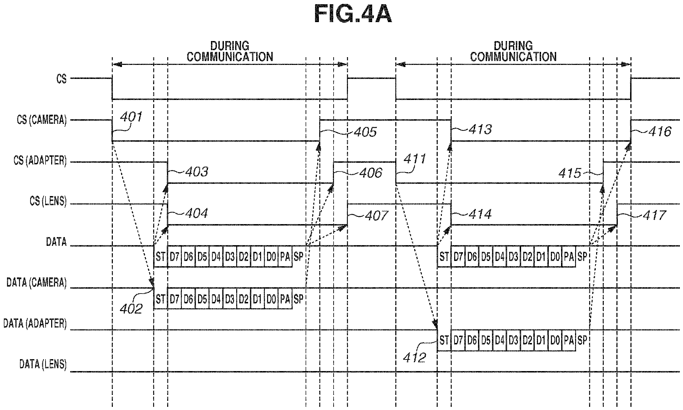

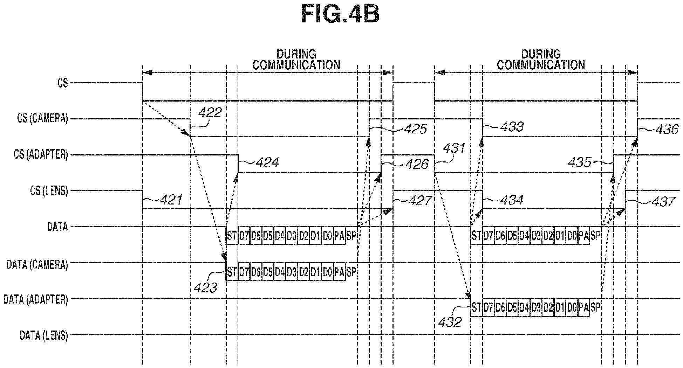

Next, the broadcast communication executed in the first communication will be described with reference to Fig. 4A and Fig. 4B. The broadcast communication is a one-to-many communication in which one of the camera microcomputer 205, the lens microcomputer 111, and the adapter microcomputer 302 simultaneously transmits data to the other two (i.e., simultaneous transmission). This broadcast communication is performed using the signal line CS and the signal line DATA. Further, a communication mode in which the broadcast communication is performed is also referred to as a broadcast communication mode. The broadcast communication mode is an example of the first communication mode.

Fig. 4A illustrates signal waveforms in the broadcast communication performed between the camera microcomputer 205, the lens microcomputer 111, and the adapter microcomputer 302. In Fig. 4A, a case where the adapter microcomputer 302 performs broadcast communication to the camera microcomputer 205 and the lens microcomputer 111 in response to broadcast communication from the camera microcomputer 205 to the lens microcomputer 111 and the adapter microcomputer 302 will be described as an example.

First, in order to notify the lens microcomputer 111 and the adapter microcomputer 302, which are communication slaves, of starting the broadcast communication, the camera microcomputer 205, which is the communication master, starts providing the Low output to the signal line CS at a timing 401. Next, the camera microcomputer 205 outputs the data to be transmitted to the signal line DATA at a timing 402.

Meanwhile, the lens microcomputer 111 and the adapter microcomputer 302 start the Low output to the signal line CS at a timing at which the start bit ST input from the signal line DATA is detected at a timing 403 and 404. At this point, since the camera microcomputer 205 has already started the Low output to the signal line CS, the signal level of the signal line CS does not change.

Then, when the output until the stop bit SP ends, the camera microcomputer 205 cancels the Low output to the signal line CS at a timing 405. The lens microcomputer 111 and the adapter microcomputer 302 receive the data input from the signal line DATA until the stop bit SP, and then perform the analysis of the received data and internal processing associated with the received data. Moreover, after completing the preparation for receiving the subsequent data, the lens microcomputer 111 and the adapter microcomputer 302 cancel the Low output to the signal line CS at timings 406 and 407. As described above, the signal level of the signal line CS is set to Hi by all of the camera microcomputer 205, the lens microcomputer 111, and the adapter microcomputer 302 cancelling the Low output to the signal line CS. Thus, the camera microcomputer 205, the lens microcomputer 111, and the adapter microcomputer 302 can confirm that the signal level of the signal line CS becomes Hi after each of the camera microcomputer 205, the lens microcomputer 111, and the adapter microcomputer 302 has cancelled the Low output to the signal line CS. By confirming that the signal level of the signal line CS becomes Hi, the camera microcomputer 205, the lens microcomputer 111, and the adapter microcomputer 302 can determine that this communication processing has ended, and the preparation for performing the subsequent communication is completed.

Next, when it is confirmed that the signal level of the signal line CS has returned to Hi, the adapter microcomputer 302 starts providing the Low output to the signal line CS in order to notify the camera microcomputer 205 and the lens microcomputer 111 of starting the broadcast communication at a timing 411.

Next, the adapter microcomputer 302 outputs the data to be transmitted to the signal line DATA at a timing 412. Further, the camera microcomputer 205 and the lens microcomputer 111 starts providing the Low output to the signal line CS at a timing at which the start bit ST input from the signal line DATA is detected at timings 413 and 414. At this time point, since the adapter microcomputer 302 has already started the Low output to the signal line CS, the signal level propagated to the signal line CS does not change. Then, the adapter microcomputer 302 cancels the Low output to the signal line CS, when the output until the stop bit SP ends at a timing 415. Meanwhile, the camera microcomputer 205 and the lens microcomputer 111 receive the data input from the signal line DATA until the stop bit SP, and then perform the analysis of the received data and internal processing associated with the received data. Moreover, the camera microcomputer 205 and the lens microcomputer 111 cancel the Low output to the signal line CS, after completing the preparation for receiving the subsequent data at a timing 416 and 417.

The operation is the same as the case when the lens microcomputer 111 performs the broadcast communication to the camera microcomputer 205 and the adapter microcomputer 302 in response to the broadcast communication to the lens microcomputer 111 and the adapter microcomputer 302 by the camera microcomputer 205. More specifically, when the lens microcomputer 111 starts providing the Low output to the signal line CS, and outputs data to be transmitted to the signal line DATA, the lens microcomputer 111 cancels the Low output to the signal line CS. By the camera microcomputer 205 and the adapter microcomputer 302 cancelling the Low output to the signal line CS after receiving the data output by the lens microcomputer 111 until the stop bit SP input from the signal line DATA, the processing returns to a state in which the subsequent communication is possible.

Fig. 4B also illustrates signal waveforms in broadcast communication performed between the camera microcomputer 205, the lens microcomputer 111, and the adapter microcomputer 302. Fig. 4B illustrates an example in which the lens microcomputer 111 notifies the camera microcomputer 205 of the start of the broadcast communication. In this example, the adapter microcomputer 302 performs the broadcast communication to the camera microcomputer 205 and the lens microcomputer 111 in response to the broadcast communication from the camera microcomputer 205 to the lens microcomputer 111 and the adapter microcomputer 302.

First, the lens microcomputer 111 starts providing the Low output to the signal line CS in order to notify the camera microcomputer 205 and the adapter microcomputer 302 of starting the broadcast communication at a timing 421. More specifically, the lens microcomputer 111 notifies the camera microcomputer 205 of the communication request by changing the signal level of the signal line CS. The camera microcomputer 205 that has detected that the signal level of the signal line CS is changed from Hi (also referred to as a first signal level) to Low (also referred to as a second signal level) starts providing the Low output to the signal line CS at a timing 422. At this time point, since the lens microcomputer 111 has already started the Low output to the signal line CS, the signal level of the signal line CS does not change.

Next, the camera microcomputer 205 outputs the data to be transmitted to the signal line DATA corresponding to a communication request notified through the signal line CS at a timing 423. The adapter microcomputer 302 starts providing the Low output to the signal line CS at a timing at which the start bit ST input from the signal line DATA is detected at a timing 424. At this time point, since the camera microcomputer 205 has already started the Low output to the signal line CS, the signal level of the signal line CS does not change.

The camera microcomputer 205 cancels the Low output to the signal line CS at a timing 425, when the output until the stop bit SP ends. Meanwhile, the lens microcomputer 111 and the adapter microcomputer 302 receive the data input from the signal line DATA until the stop bit SP, and then perform the analysis of the received data and internal processing associated with the received data. Moreover, the lens microcomputer 111 and the adapter microcomputer 302 cancel the Low output to the signal line CS after completing the preparation for receiving the subsequent data at timings 426 and 427. As described above, the signal level of the signal line CS becomes Hi by all of the camera microcomputer 205, the lens microcomputer 111, and the adapter microcomputer 302 cancelling the Low output to the signal line CS. Accordingly, the camera microcomputer 205, the lens microcomputer 111, and the adapter microcomputer 302 can confirm that the signal level of the signal line CS becomes Hi after each of the camera microcomputer 205, the lens microcomputer 111, and the adapter microcomputer 302 has cancelled the Low output to the signal line CS. By confirming that the signal level of the signal line CS becomes Hi, the camera microcomputer 205, the lens microcomputer 111, and the adapter microcomputer 302 can determine that this communication processing has ended, and the preparation for performing the subsequent communication is completed.

Next, after confirming that the signal level of the signal line CS has returned to Hi, the adapter microcomputer 302 starts providing the Low output to the signal line CS in order to notify the camera microcomputer 205 and the lens microcomputer 111 of starting the broadcast communication at a timing 431. In other words, the lens microcomputer 111 notifies the camera microcomputer 205 of the communication request by changing the signal level of the signal line CS.

Next, the adapter microcomputer 302 outputs the data to be transmitted to the signal line DATA at a timing 432. Meanwhile, the camera microcomputer 205 and the lens microcomputer 111 start the Low output to the signal line CS at a timing at which the start bit ST input from the signal line DATA is detected, at timings 433 and 434. At this time point, since the adapter microcomputer 302 has already started the Low output to the signal line CS, the signal level of the signal line CS does not change.

Then, the adapter microcomputer 302 cancels the Low output to the signal line CS at a timing 435 when the output of the stop bit SP ends. Meanwhile, the camera microcomputer 205 and the lens microcomputer 111 receive the data input from the signal line DATA until the stop bit SP, and then perform the analysis of the received data and the internal processing associated with the received data. Then, the camera microcomputer 205 and the lens microcomputer 111 cancels the Low output to the signal line CS after completing the preparation for receiving the subsequent data at timings 436 and 437.

In the example of Fig. 4B, the broadcast communication is started by the lens microcomputer 111 and the adapter microcomputer 302, both of which are communication slaves. In this case, the camera microcomputer 205, which is the communication master, cannot distinguish which of the lens microcomputer 111 and the adapter microcomputer 302 set the signal line CS to Low at the time point (at the timing 421) when the Low output to the signal line CS started- to be provided. Thus, it is necessary that the camera microcomputer 205 performs communication to confirm whether the broadcast communication has been started (communication is requested) with respect to both of the lens microcomputer 111 and the adapter microcomputer 302.

Further, there is a case in which Low is output to the signal line CS for the lens microcomputer 111 or the adapter microcomputer 302 to start the broadcast communication at a timing at which Low was output to the signal line CS in order for the camera microcomputer 205 to start the broadcast communication. In this case, the camera microcomputer 205 cannot detect which of the lens microcomputer 111 or the adapter microcomputer 302 output Low to the signal line CS. In this case, communications to confirm whether the broadcast communication has been started (communication is requested) with respect to the lens microcomputer 111 or the adapter microcomputer 302 is not performed. Thus, when the confirmation communication of the communication request has not been performed even after a predetermined period of time has elapsed, the signal line CS again is caused to output Low and a communication request is made to the camera microcomputer 205.

As described above, the signal transmitted through the signal line CS in the broadcast communication functions as a signal indicating the start (execution) of the broadcast communication and during execution of the broadcast communication.

Fig. 4A and Fig. 4B illustrate examples of the broadcast communication, but other broadcast communications may be performed. For example, the data transmitted in one broadcast communication may be one byte data as illustrated in Fig. 4A and Fig. 4B, but may be two or three byte data. Further, the broadcast communication may be one-way communication from the camera microcomputer 205, which is the communication master, to the lens microcomputer 111 and the adapter microcomputer 302, both of which are communication slaves.

<P2P Communication (First Communication)>

Next, the P2P communication performed between the camera body 200, the interchangeable lens 100, and the adapter 300 in the first communication will be described. P2P communication is a one-to-one communication (individual communication) in which the camera body 200, which is the communication master, specifies one of the interchangeable lens 100 and the adapter 300 (specified accessory apparatus) to communicate from the interchangeable lens 100 and the adapter 300, which are the communication slaves, and transmits and receives data only to and from the specified communication slave.

The P2P communication is performed using the signal line DATA and the signal line CS. Further, the communication mode in which the P2P communication is performed is referred to as a P2P communication mode. The P2P communication mode is an example of the second communication mode.

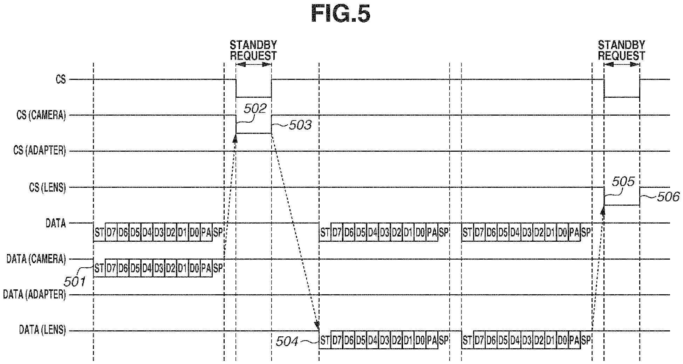

As an example, Fig. 5 illustrates the signal waveforms of the P2P communication exchanged between the camera microcomputer 205 and the lens microcomputer 111 that is specified as the communication partner. The lens microcomputer 111 performs the data transmission of two bytes to the camera microcomputer 205 in response to the data transmission of one byte from the camera microcomputer 205. The switching processing of the communication modes (broadcast communication mode and P2P communication mode) and the specification processing of the communication partner in the P2P communication, will be described below.

First, the camera microcomputer 205, which is the communication master, outputs the data to be transmitted to the signal line DATA at a timing 501. After ending the output until the stop bit SP, the camera microcomputer 205 starts providing the Low output to the signal line CS at a timing 502. Then, after completing the preparation for receiving the subsequent data, the camera microcomputer 205 cancels the Low output to the signal line CS at a timing 503. Meanwhile, after detecting the Low signal input from the signal line CS, the lens microcomputer 111 analyzes the received data input from the signal line DATA and performs the internal processing associated with the received data. Then, after confirming that the signal level of the signal line CS is returned to Hi, the lens microcomputer 111 continuously outputs two byte data to be transmitted to the signal line DATA at a timing 504. After the output until the stop bit SP of the second byte has ended, the lens microcomputer 111 starts providing the Low output to the signal line CS at a timing 505. Then, after completing the preparation for receiving the subsequent data, the lens microcomputer 111 cancels the Low output to the signal line CS at a timing 506.

The adapter microcomputer 302, which is not specified as the communication partner of the P2P communication, does not output a signal to the signal line CS and signal line DATA.

As described above, the signal transmitted through the signal line CS in the P2P communication functions as a notification signal indicating the end of the data transmission and a standby request of the subsequent the data transmission.

Fig. 5 illustrates an example of the P2P communication, but other types of P2P communications may be performed. For example, data may be transmitted one byte at a time through the signal line DATA, or the data of three bytes or more may be transmitted.

<Switching Processing of Communication Modes and Specification processing of Communication Partner>

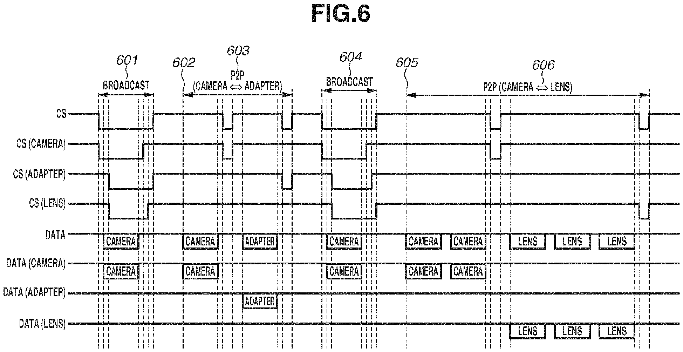

Next, the switching processing of the communication modes and the specification processing of the communication partner of the P2P communication will be described with reference to Fig. 6. Fig. 6 illustrates the signal waveforms in the communication mode switching and communication partner specification exchanged between the camera microcomputer 205, the lens microcomputer 111, and the adapter microcomputer 302. The specification of the communication partner of the P2P communication is performed by using the broadcast communication. In this case, a case is described as an example in which the adapter microcomputer 302 is specified as a communication partner of the P2P communication from the camera microcomputer 205, and the P2P communication of one byte data from the camera microcomputer 205 and P2P communication of one byte data from the adapter microcomputer 302 are executed. Further, the lens microcomputer 111 is specified as the communication partner of the P2P communication from the camera microcomputer 205, and the P2P communication of two byte data from the camera microcomputer 205 and the P2P communication of three byte data from the lens microcomputer 111 are executed.

First, the camera microcomputer 205, which is the communication master, executes the broadcast communication according to the procedure described in Fig. 4A at a timing 601. The slave specification data specifying a partner communicating with the camera microcomputer 205 in the subsequent P2P communication is notified by this broadcast communication. For example, the identification information of the slave to be specified can be used as the slave specification data. The lens microcomputer 111 and the adapter microcomputer 302, which are the communication slaves, determines whether they are identified as the communication partner of the P2P communication based on the slave specification data received through the broadcast communication. With the result of this determination, the communication mode between the camera microcomputer 205 and the specified communication slave is switched from the broadcast communication mode to the P2P communication mode at a timing 602. At this time, since the adapter microcomputer 302 is specified as the communication partner, the transmission and reception of data are performed between the camera microcomputer 205 and the adapter microcomputer 302 in the subsequent P2P communication according to the procedure described in Fig. 5 at a timing 603. At this time, one byte data is transmitted from the camera microcomputer 205 to the adapter microcomputer 302, and then, one byte data is transmitted from the adapter microcomputer 302 to the camera microcomputer 205.

When the P2P communication between the camera microcomputer 205 and the adapter microcomputer 302 ends, the camera microcomputer 205 can specify the communication partner to communicate by P2P communication again by broadcast communication. Here, the lens microcomputer 111 is set as the slave specification data to execute the broadcast communication according to the procedure described in Fig. 4A in order to specify the lens microcomputer 111 as the communication partner of the subsequent P2P communication at a timing 604. In response to this broadcast communication, the adapter microcomputer 302 ends the P2P communication, and then switches the communication modes of the camera microcomputer 205 and the lens microcomputer 111 to the P2P communication mode at a timing 605. If the broadcast communication is not executed, the P2P communication between the camera microcomputer 205 and the adapter microcomputer 302 continues.

The data transmission and reception are executed between the camera microcomputer 205 and the lens microcomputer 111 in the subsequent P2P communication according to the procedure described in Fig. 5. In this case, the camera microcomputer 205 transmits two byte data to the lens microcomputer 111, and then, the lens microcomputer 111 transmits three byte data to the camera microcomputer 205 at a timing 606.

As described above, it is possible to specify the communication partner of the P2P communication through the broadcast communication, and it is possible to simultaneously switch between the broadcast communication and the P2P communication.

<Communication Control Processing>

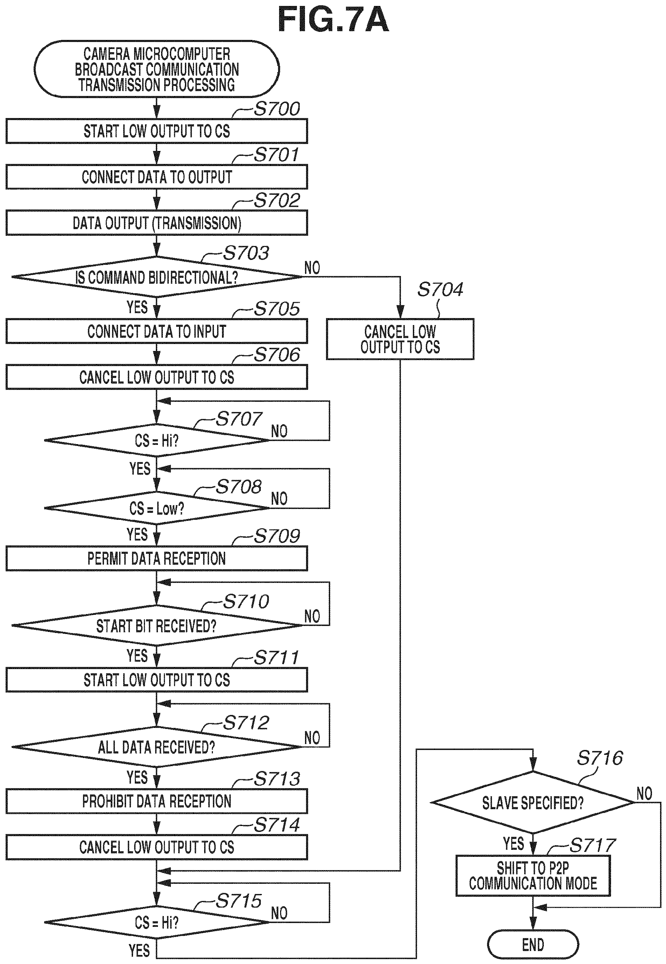

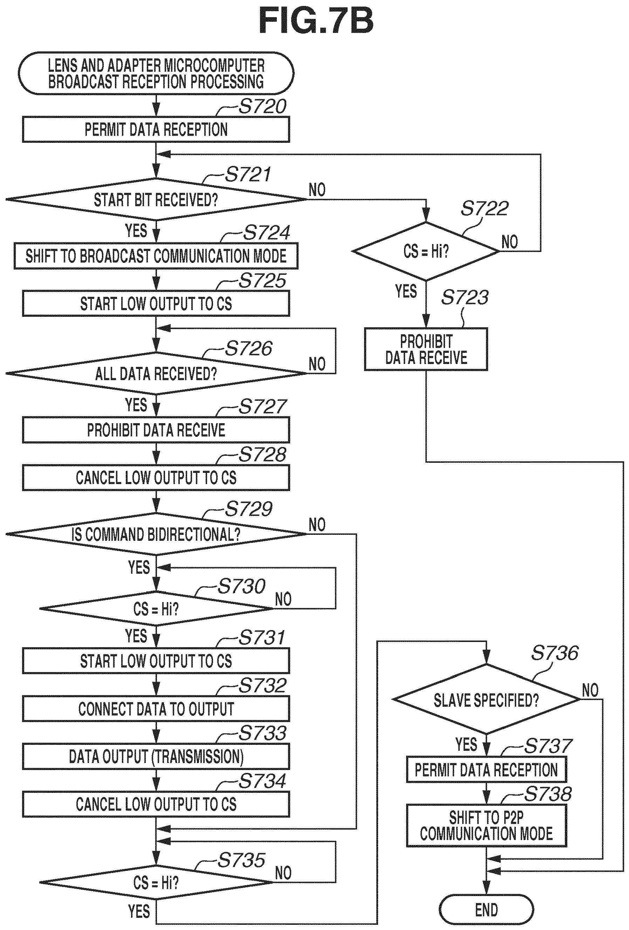

Next, the communication control processing performed between the camera microcomputer 205, the lens microcomputer 111, and the adapter microcomputer 302 will be described. First, processing in the broadcast communication mode will be described with reference to the flowcharts in Fig. 7A and Fig. 7B. Fig. 7A illustrates the broadcast transmission processing performed by the camera microcomputer 205, and Fig. 7B illustrates the broadcast reception processing performed by the lens microcomputer 111 and the adapter microcomputer 302. In Figs. 7A and 7B, the processing performed in a case where the broadcast communication is performed from the camera microcomputer 205 to the lens microcomputer 111 and the adapter microcomputer 302 is illustrated as an example. The camera microcomputer 205, the lens microcomputer 111, and the adapter microcomputer 302, which are computers, execute this processing and other processing, which will be described below, according to a communication control program as a computer program.

If an event that starts the broadcast communication is generated, the camera microcomputer 205 turns the ground switch 2081 ON (connect) to make the signal line CS to Low in step S700 of Fig. 7A. In this way, the start of the broadcast communication is notified to the lens microcomputer 111 and the adapter microcomputer 302. The event is generated, for example, when the camera microcomputer 205 requests the data transmission to the lens microcomputer 111 or the adapter microcomputer 302. Further, anther event is generated when the lens microcomputer 111 or the adapter microcomputer 302 outputs Low to the signal line CS to request the start of the broadcast communication. The lens microcomputer 111 and the adapter microcomputer 302 start the broadcast reception processing described with reference to Fig. 7B by receiving a start notification of this broadcast communication.

Next, in step S701, the camera microcomputer 205 operates the input/output switching switch 2082 to connect the signal line DATA to the data output unit. Next, in step S702, the camera microcomputer 205 uses the signal line DATA to perform the data transmission, and when the transmission of all the data has been completed, the processing proceeds to step S703. At this time, the number of bytes of data to be transmitted or received is not limited, as long as the recognition between the camera microcomputer 205, the lens microcomputer 111, and the adapter microcomputer 302 matches each other.

In step S703, the camera microcomputer 205 determines whether the data transmitted in step S702 is a bidirectional command also including the transmission from the lens microcomputer 111 or the adapter microcomputer 302. If it is not the bidirectional command (NO in step S703), the processing proceeds to step S704. On the other hand, if it is a bidirectional command (YES in step S703), the processing proceeds to step S705.

In step S704, the camera microcomputer 205 cancels the Low output to the signal line CS by turning OFF (disconnecting) the ground switch 2081 in order to indicate that the communication processing has ended. Then, the processing proceeds to step S715.

In step S705, the camera microcomputer 205 connects the signal line DATA to the data input unit by operating the input/output switching switch 2082. Then, in step S706, the camera microcomputer 205 cancels the Low output to the signal line CS by turning OFF (disconnecting) the ground switch 2081 in order to indicate that the communication processing has ended.

Next, in step S707, the camera microcomputer 205 stands by until the data reception by the lens microcomputer 111 and the adapter microcomputer 302 is completed, i.e., until the signal line CS becomes Hi (NO in step S707). If the signal line CS becomes Hi (YES in step S707), the processing proceeds to step S708.

In step S708, the camera microcomputer 205 stands by until the data is transmitted from the lens microcomputer 111 or the adapter microcomputer 302, i.e., until the signal line CS becomes Low (NO in step S708). If the signal line CS becomes Low (YES in step S708) the processing proceeds to step S709.

In step S709, the camera microcomputer 205 permits data reception from the signal line DATA. Next, in step S710, the camera microcomputer 205 stands by until the start bit of the signal line DATA is detected (NO in step S710). If the start bit is detected (YES in step S710), the processing proceeds to step S711.

In step S711, the camera microcomputer 205 starts providing the Low output to the signal line CS by turning the ground switch 2081 ON (connect) to indicate that the communication processing is in progress. Next, in step S712, the camera microcomputer 205 stands by until all of the data is received (NO in step S711). Then, if the reception of all of the data is completed (YES in step S711), the processing proceeds to step S713. In this case, the number of bytes of data to be transmitted and received is not limited, as long as the recognition between the camera microcomputer 205, the lens microcomputer 111, and the adapter microcomputer 302 match each other.

In step S713, the camera microcomputer 205 prohibits data reception from the signal line DATA. Next, in step S714, the camera microcomputer 205 cancels the Low output to the signal line CS by turning OFF (disconnecting) the ground switch 2081 in order to indicate that the communication processing has ended. Then, in step S715, the camera microcomputer 205 stands by until the data reception of the lens microcomputer 111 and the adapter microcomputer 302 is completed, i.e., until the signal line CS becomes Hi (NO in step S715). If the signal line CS becomes Hi (YES in step S715), the processing proceeds to step S716.

In step S716, the camera microcomputer 205 determines whether the lens microcomputer 111 or the adapter microcomputer 302 is specified as the communication partner of the P2P communication by the data transmission in step S702. When the camera microcomputer 205 is specified as the communication partner (YES in step S716), the processing proceeds to step S717. Otherwise (NO in step S716), the transmission processing of the broadcast communication ends with the broadcast communication mode being maintained.

In step S717, the camera microcomputer 205 moves to the P2P communication mode to end the broadcast transmission processing.

In Fig. 7B, if the signal line CS becomes a Low level during the communication standby in the broadcast communication mode or the P2P communication mode, the lens microcomputer 111 and the adapter microcomputer 302 recognize this operation as the start notification of the broadcast communication. Then, the broadcast reception processing is started.

First, in step S720, the lens microcomputer 111 and the adapter microcomputer 302 permits the data reception from the signal line DATA. Next, in step S721, the lens microcomputer 111 and the adapter microcomputer 302 determine whether the start bit of the signal line DATA is received, and if it is not received (NO in step S721), the processing proceeds to step S722. If it is received (YES in step S721), the processing proceeds to step S724. At this time, the lens microcomputer 111 and the adapter microcomputer 302 move to the broadcast communication mode when the communication modes thereof are the P2P communication mode.

In step S722, the lens microcomputer 111 and the adapter microcomputer 302 determine whether the signal line CS is Hi, and if the signal line CS is Hi (YES in step S722), the processing proceeds to step S723 and the reception processing of the broadcast communication is ended. If the signal line CS is not Hi (NO in step S722), the processing returns to step S721 to continue to wait for the start bit reception.

In step S723, the lens microcomputer 111 and the adapter microcomputer 302 prohibit the data reception from the signal line DATA, and end the broadcast reception processing.

In step S724, the lens microcomputer 111 and the adapter microcomputer 302 move to the broadcast communication mode when the communication modes thereof are the P2P communication mode. Then, in step S725, the lens microcomputer 111 and the adapter microcomputer 302 start providing the Low output to the signal line CS by respectively turning ON (connecting) the ground switches 1121 and 3031 to indicate that the communication processing is in progress.

Next, in step S726, the lens microcomputer 111 and the adapter microcomputer 302 stand by until all of the data is received (NO in step S726). If the reception of all of the data is complete (YES in step S726), the processing proceeds to step S727. At this time, the number of bytes of data to be received is not limited, as long as the recognition between the camera microcomputer 205, the lens microcomputer 111, and the adapter microcomputer 302 matches each other.

Next, in S727, the lens microcomputer 111 and the adapter microcomputer 302 prohibit the data reception from the signal line DATA. In step S728, the lens microcomputer 111 and the adapter microcomputer 302 cancel the Low output to the signal line CS by respectively turning OFF (disconnecting) the ground switches 1121 and 3031 in order to indicate that the communication processing has ended.

Next, in step S729, the lens microcomputer 111 and the adapter microcomputer 302 determine whether the data received in step S725 is a bidirectional command meaning that the data is transmitted from themselves. When it is determined to be a bidirectional command meaning that the data is transmitted from the lens microcomputer 111 and the adapter microcomputer 302 (YES in step S729), the processing proceeds to step S730. Otherwise (NO in step S729), the processing proceeds to step S735.

In step S730, the lens microcomputer 111 and the adapter microcomputer 302 stand by until the partner microcomputer completes the data reception, i.e., until the signal line CS becomes Hi (NO in step S730). If the signal line CS becomes Hi (YES in step S730), the processing proceeds to step S731.

In step S731, the lens microcomputer 111 and the adapter microcomputer 302 respectively turn ON (connect) the ground switches 1121 and 3031 to make the signal line CS Low in order to notify the start of the broadcast communication. Then, in S732, the lens microcomputer 111 and the adapter microcomputer 302 connect the signal line DATA to the data output unit by respectively operating the input/output switching switches 1122 and 3032.

Next, in step S733, the lens microcomputer 111 and the adapter microcomputer 302 use the signal line DATA to perform the data transmission. If transmission of all of the data ends, the processing proceeds to step S734. In this case, the number of bytes of data to be transmitted and received is not limited, as long as the recognition between the camera microcomputer 205, the lens microcomputer 111, and the adapter microcomputer 302 matches each other.

In step S734, the lens microcomputer 111 and the adapter microcomputer 302 cancel the Low output to the signal line CS by respectively turning OFF (disconnecting) the ground switches 1121 and 3031 to indicate that the data transmission processing by itself has ended.

Next, in step S735, the lens microcomputer 111 and the adapter microcomputer 302 stand by until the data reception of the partner microcomputer is complete, i.e., until the signal line CS becomes Hi. If the signal line CS becomes Hi, the processing proceeds to step S736.

In step S736, it is determined whether the lens microcomputer 111 or the adapter microcomputer 302 is specified as the communication partner of the P2P communication based on the data received from the camera microcomputer 205 in step S726. If the lens microcomputer 111 or the adapter microcomputer 302 is specified (YES in step S736), the processing proceeds to step S737. Otherwise (NO in step S736), the broadcast reception processing ends with the broadcast communication mode being maintained.

In step S737, the lens microcomputer 111 and the adapter microcomputer 302 permits the data reception from the signal line DATA. Next, in step S738, the lens microcomputer 111 and the adapter microcomputer 302 move to the P2P communication mode and the broadcast reception processing is ended.

The above-described broadcast transmission and reception processing can implement data communication using the broadcast communication from the camera microcomputer 205 to the lens microcomputer 111 and the adapter microcomputer 302.

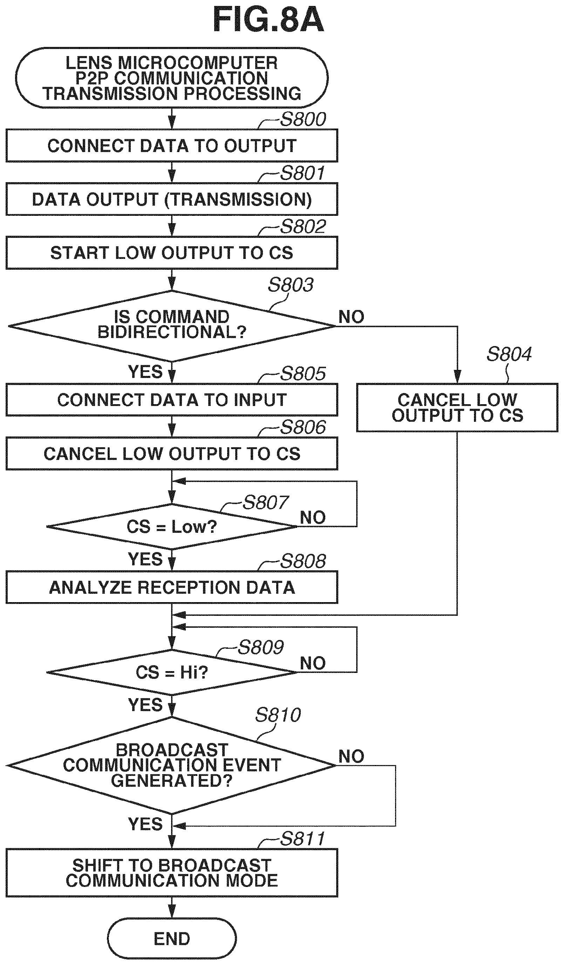

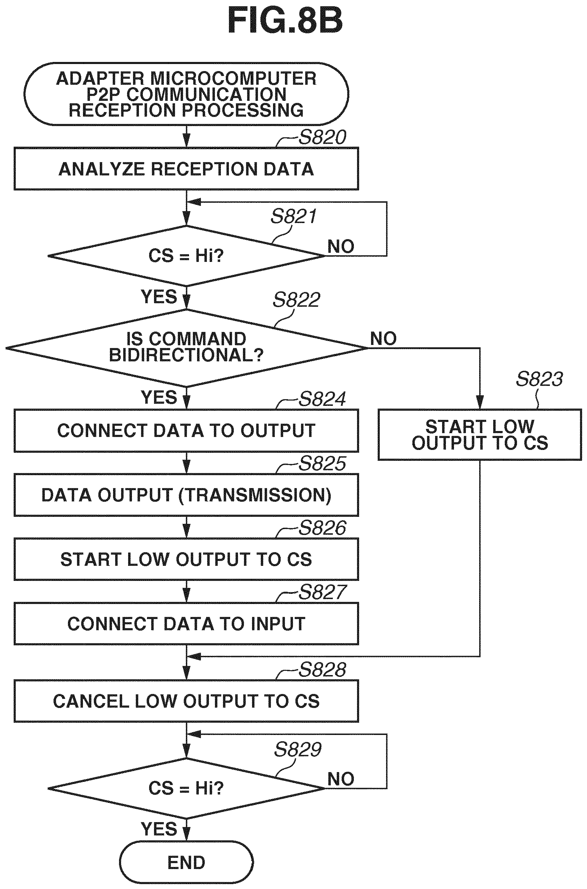

Next, the processing in the P2P communication mode will be described with reference to the flowcharts in Fig. 8A and Fig. 8B. Fig. 8A illustrates the P2P transmission processing performed by the camera microcomputer 205, and Fig. 8B illustrates the P2P reception processing performed by the adapter microcomputer 302 specified as the communication partner of the P2P communication by the camera microcomputer 205 as an example. When the lens microcomputer 111 is specified as the communication partner of the P2P communication, the P2P reception processing is performed in the same manner as in Fig. 8B.

If an event that starts the P2P communication is generated, the camera microcomputer 205 operates the input/output switching switch 2082 in step S800 to connect the signal line DATA to the data output unit, and performs data transmission in step S801. If the transmission of all the data has been completed, the processing proceeds to step S802. At this time, the number of bytes of data to be transmitted is not limited, as long as the recognition between the camera microcomputer 205 and the adapter microcomputer 302 matches each other.

In step S802, the camera microcomputer 205 starts providing the Low output to the signal line CS by turning ON (connecting) the ground switch 2081, and notifies the completion of the data transmission to the adapter microcomputer 302 through the P2P communication. The adapter microcomputer 302 starts the P2P reception processing described with reference to Fig. 8B by receiving this notification.

Next, in step S803, the camera microcomputer 205 determines whether the data transmitted in step S802 is a bidirectional command also including the data transmission from the adapter microcomputer 302. If it is not a bidirectional command (NO in step S803), the processing proceeds to step S804. On the other hand, if it is a bidirectional command (YES in step S803), the processing proceeds to step S805.

In step S804, the camera microcomputer 205 cancels the Low output to the signal line CS by turning OFF (disconnecting) the ground switch 2081 in order to detect that the data reception from the adapter microcomputer 302 is completed. Then, the processing proceeds to step S809.

In step S805, the camera microcomputer 205 connects the signal line DATA to the data output unit by operating the input/output switching switch 2082. Then, the processing proceeds to step S806.

In step S806, the camera microcomputer 205 cancels the Low output to the signal line CS by turning OFF (disconnecting) the ground switch 2081 in order to detect that the data transmission from the adapter microcomputer 302 is completed. Then, the processing proceeds to step S807.

In step S807, the camera microcomputer 205 stands by until the data transmission from the adapter microcomputer 302 is completed, i.e., until the signal line CS becomes Low (NO in step S807). If the signal line CS becomes Low (YES in step S807), the camera microcomputer 205 determines that the data transmission from the adapter microcomputer 302 is completed and the processing proceeds to step S808. In this case, the number of bytes of data to be received is not limited, as long as the recognition between the camera microcomputer 205 and the adapter microcomputer 302 matches each other.

In step S808, the camera microcomputer 205 analyzes the data received from the signal line DATA. Next, in step S809, the camera microcomputer 205 stands by until the signal line CS becomes Hi (NO in step S808). Then, if the signal line CS becomes Hi (YES in step S808), the camera microcomputer 205 determines that this P2P communication is completed, and the processing proceeds to step S810.

In step S810, the camera microcomputer 205 determines whether to start the broadcast communication in the subsequent communication, and if the broadcast communication is started (YES in step S810), the processing proceeds to step S811. If the P2P communication is performed continuously (NO in step S810), the P2P transmission processing ends with the P2P communication mode being maintained.

In step S811, the camera microcomputer 205 moves to the broadcast communication mode and the P2P transmission processing is ended.

In step S820 of Fig. 8B, the adapter microcomputer 302 analyzes the data received from the signal line DATA. Next, in step S821, the adapter microcomputer 302 stands by until the signal line CS becomes Hi, i.e., until the processing in step S804 or step S806 is completed (NO in step S821). When the signal line CS becomes Hi (YES in step S821), the processing proceeds to step S822.

In step S822, the adapter microcomputer 302 determines whether the received data analyzed in step S820 is a bidirectional command also including the data transmission from the adapter microcomputer 302. If it is not the bidirectional command (NO in step S822), the processing proceeds to step S823. If it is a bidirectional command (YES in step S822), the processing proceeds to step S824.

In step S823, the adapter microcomputer 302 starts providing the Low output to the signal line CS by turning ON (connecting) the ground switch 3031 in order to notify that the data reception in the camera microcomputer 205 is completed. Then, the processing proceeds to step S828.

Meanwhile, in step S824, the adapter microcomputer 302 connects the signal line DATA to the data output unit by operating the input/output switching switch 3032. Next, in step S825, the adapter microcomputer 302 uses the signal line DATA to perform the data transmission and when the transmission of all the data has been completed, the processing proceeds to step S826. In this case, the number of bytes of data to be transmitted is not limited, as long as the recognition between the camera microcomputer 205 and the adapter microcomputer 302 matches each other.

Next, in step S826, the adapter microcomputer 302 starts providing the Low output to the signal line CS by turning ON (connecting) the ground switch 3031. In this way, the completion of the data transmission by P2P communication is notified to the camera microcomputer 205.

Next, in step S827, the adapter microcomputer 302 connects the signal line DATA to the data output unit by operating the input/output switching switch 3032. Then, the processing proceeds to step S828.

In step S828, the adapter microcomputer 302 cancels the Low output to the signal line CS by turning OFF (disconnecting) the ground switch 3031 in order to notify the camera microcomputer 205 that the P2P communication is completed. Next, in step S829, the adapter microcomputer 302 stands by until the signal line CS becomes Hi in order to detect that the camera microcomputer 205 has completed the P2P communication (NO in step S828). If the signal line CS becomes Hi (YES in step S828), the adapter microcomputer 302 ends the P2P reception processing.

The data transmission using the P2P communication from the camera microcomputer 205, which is the communication master, to the adapter microcomputer 302, which is the communication slave, can be performed through the above-described processing.

<Control Corresponding to Operation of Operation member of Adapter>

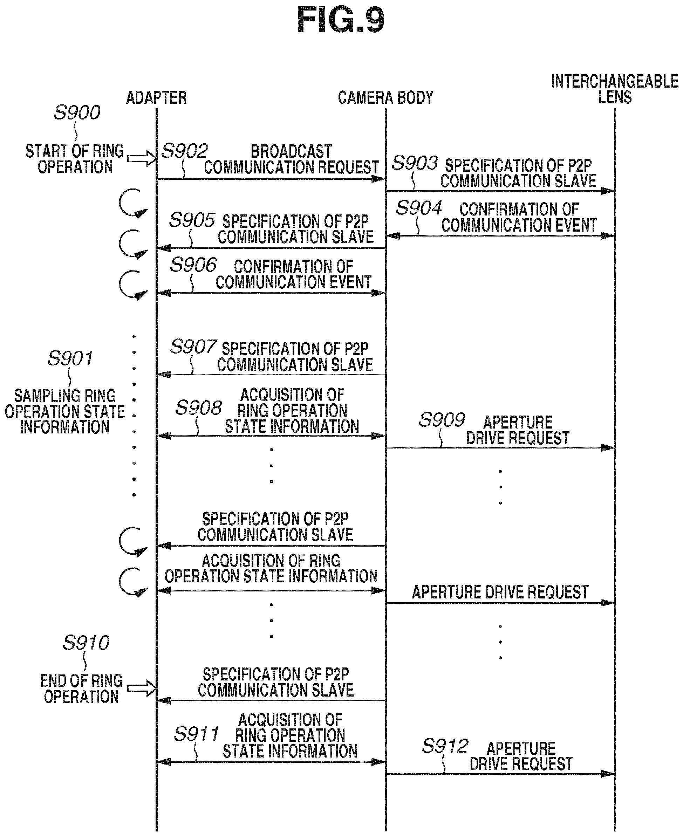

Next, the imaging communication processing (communication control method) performed between the camera microcomputer 205, the lens microcomputer 111, and the adapter microcomputer 302 in order to implement imaging control using the adapter operation ring 310 according to the present exemplary embodiment will be described with reference to Fig. 9. A case where the interchangeable lens 100 is connected to the camera body 200 via one adapter 300 as illustrated in Fig. 1 and Fig. 2A will be described as an example. In this example, the broadcast communication and the P2P communication are performed between the camera microcomputer 205, the lens microcomputer 111, and the adapter microcomputer 302 via the signal line CS and the signal line DATA. Then, the camera microcomputer 205 receives the operation state information (described below) of the adapter operation ring 310 from the adapter microcomputer 302. The camera microcomputer 205 controls the drive of the aperture unit 114 (hereinafter, referred to as an aperture drive) in the interchangeable lens 100 via the lens microcomputer 111 based on the operation state information.

The driving of the magnification-varying lens 102 and the focus lens 104 in the interchangeable lens 100 may be controlled following the operation of the adapter operation ring 310, the Tv value (exposure time) and the ISO sensitivity within the camera body 200 may be changed, and a setting menu may be selected.

In step S900, if the adapter microcomputer 302 detects the rotation operation (hereinafter, referred to as a ring operation) of the adapter operation ring 310 by the user, the processing starts. In step S901, if the adapter microcomputer 302 detects the ring operation start through the change of the output of the ring rotation detector 311 illustrated in Fig. 1, the sampling of the operation state information (hereinafter, referred to as ring operation state information) of the adapter operation ring 310 starts. The ring operation state information may be any of the operation amount (rotation amount) including the operation direction (rotation direction) of the adapter operation ring 310, the cumulative value of the operation amount, the operation speed, the operation acceleration, and the like. In the present exemplary embodiment, the cumulative value of the operation amount and the operation speed are sampled as the ring operation state information.

Next, in step S902, the adapter microcomputer 302 requests the camera microcomputer 205 to start the broadcast communication by the Low output at the timing 421 to the signal line CS illustrated in Fig. 4B prior to the notification in order to notify the camera microcomputer 205 of the ring operation start. In other words, the adapter microcomputer 302 transmits the communication request to the camera microcomputer 205.

The camera microcomputer 205 that has received the communication request from the adapter microcomputer 302 starts the broadcast communication, but at this time point, it is difficult to distinguish as to which of the lens microcomputer 111 and the adapter microcomputer 302 has transmitted the communication request. Furthermore, since the event of the communication request is not known, it is necessary that the camera microcomputer 205 inquires the event of the communication request (hereinafter, referred to as a communication request event) of the lens microcomputer 111 and the adapter microcomputer 302. In the present exemplary embodiment, in step S903, the lens microcomputer 111 is initially specified as the communication partner of the P2P communication using the broadcast communication performed at the timing 604 illustrated in Fig. 6. As for the inquiry order of the communication request event, the camera microcomputer 205 may inquire the adapter microcomputer 302 before the lens microcomputer 111. Further, at this time, if it is obvious in advance that the lens microcomputer 111 does not output the communication request of the broadcast communication, it is not necessary to inquire the lens microcomputer 111 regarding the communication request event.

Next, the camera microcomputer 205 uses the P2P communication described in Fig. 5 to inquire the lens microcomputer 111 regarding the communication request event via the signal line DATA. Then, in step S904, the camera microcomputer 205 receives the communication request event from the lens microcomputer 111 via the signal line DATA. In this example, since the lens microcomputer 111 has not output the communication request, the lens microcomputer 111 transmits the information indicating that there is no communication request event to the camera microcomputer 205. By this P2P communication, the camera microcomputer 205 confirms that the lens microcomputer 111 has not output a communication request. In step S905, the camera microcomputer 205 uses the broadcast communication at the timing 601 illustrated in Fig. 6 to specify the adapter microcomputer 302 as the communication partner of the P2P communication. Then, the camera microcomputer 205 uses the P2P communication described with reference to Fig. 5 to inquire (transmits the third data) the adapter microcomputer 302 regarding the communication request event via the signal line DATA. Then, in step S906, the camera microcomputer 205 receives the communication request event (fourth data) from the adapter microcomputer 302 via the signal line DATA. In this example, since the adapter microcomputer 302 outputs the communication request, the adapter microcomputer 302 transmits the information (hereinafter, referred to as ring operation start information) indicating that the communication request event is the ring operation start. By the camera microcomputer 205 receiving the ring operation start information from the adapter microcomputer 302, it is possible for the camera microcomputer 205 to determine that the adapter microcomputer 302 has sent the communication request, and that the event of the communication request is the ring operation start.

The camera microcomputer 205 that has received the ring operation start information from the adapter microcomputer 302 acquires the ring operation state information from the adapter microcomputer 302. To this end, first, in step S907, the broadcast communication at the timing 601 illustrated in Fig. 6 is used to specify the adapter microcomputer 302 as the communication partner of the P2P communication. However, this broadcast communication does not have to be performed when the communication mode of the adapter microcomputer 302 is the P2P communication mode. Next, in step S908, the camera microcomputer 205 uses the P2P communication to request (i.e., transmits the second data) the adapter microcomputer 302 to transmit the ring operation state information (first data), and receive the ring operation state information from the adapter microcomputer 302. At the time point when the ring operation state information has been transmitted, the adapter microcomputer 302 resets the internal ring operation state information in order to transmit the subsequent ring operation state information. For example, the cumulative value of the operation amount of the adapter operation ring 310 is reset to 0.

After that, the camera microcomputer 205 repeats the subsequent communication until the ring operation end information (described below) is received. More specifically, in step S908, the specification of the adapter microcomputer 302 in the broadcast communication performed at the timing 601 and the reception of the ring operation state information from the adapter microcomputer 302 in the P2P communication are repeated at a predetermined period. In this way, the camera microcomputer 205 can obtain the latest ring operation state information at the predetermined periods.

In step S909, the camera microcomputer 205 that has received the ring operation state information transmits an aperture drive request to the lens microcomputer 111 based on the ring operation state information. The communication for the aperture drive request may be performed through the broadcast communication or the P2P communication.

Further, the aperture drive request may be transmitted via the second communication unit 242 of the camera microcomputer 205, and received through the second communication unit 142 of the lens microcomputer 111. In other words, the communication relating to the aperture drive may be performed through a communication path via the second communication unit 242 and the second communication unit 142, i.e., a communication path different from the communication path for transmitting and receiving the ring operation state information. In this way, the real time property of the communication relating to the aperture drive and the communication relating to the ring operation state can be improved.

Further, the camera microcomputer 205 transmits the aperture drive request to the lens microcomputer 111 each time the ring operation state information is received, but the transmission period of this aperture drive request to the lens microcomputer 111 may be different from the reception period of the ring operation state information. For example, the reception period of the ring operation state information may be set shorter than the transmission period of the aperture drive request to the lens microcomputer 111. If the reception period of the ring operation state information is set longer, depending on the length of the reception period, the cumulative amount of the operation amount may overflow. Further, it is necessary that the transmission period of the aperture drive request to the lens microcomputer 111 is to be dependent on an automatic exposure (AE) control period. In this way, by controlling the transmission period of the aperture drive request to the lens microcomputer 111 and the reception period of the ring operation state information to the suitable periods, each of the adapter microcomputer 302 and the camera microcomputer 302 can perform processing more suitably.

In order to implement a good aperture drive with respect to the user operation of the adapter operation ring 310, in addition to the aperture drive proportional to the operation amount (cumulative value) of the adapter operation ring 310 and the operation speed, a continuous aperture drive, i.e., smooth and non-intermittent drive, is required for video quality. In the present exemplary embodiment, the camera microcomputer 205 transmits a target Av value (target aperture value) and an aperture drive speed to the lens microcomputer 111 as the aperture drive request. Based on the received target Av value and aperture drive speed, the lens microcomputer 111 updates the target Av value and the aperture drive speed held as internal information while driving the aperture. The lens microcomputer 111 performs continuous aperture drive following the updated target Av value and the aperture drive speed. By repeating this procedure at a predetermined period, the aperture drive can be performed without stopping the aperture drive. If the aperture drive is stopped, the changes in the brightness become intermittent, and which specifically affects the quality of the video. In contrast, when the aperture is driven continuously, because the brightness changes smoothly, higher quality moving images can be acquired. Further, by continuously driving the aperture, it is possible to reduce the time required for the stopping of the aperture drive, and the time required to restart the aperture drive from the state in which the aperture drive is stopped.

Assume that the transmission period of the aperture drive request from the camera microcomputer 205 at this time is T, and the cumulative value of the operation amount of the adapter operation ring 310 during the time period from the transmission of the previous aperture drive request to the transmission of the subsequent aperture drive request is Cnt. Further, assume that the aperture drive amount per 1 Cnt is indicated by a coefficient $\alpha$, and a margin time for updating the target Av value and the aperture drive speed while the lens microcomputer 111 drives the aperture is $\Delta t$. By providing the margin time, the aperture drive can be performed without stopping the aperture drive even when the transmission of the aperture drive request is delayed due to certain reasons such as load of the microcomputer or the oppression of the communication bandwidth. At this time, the camera microcomputer 205 calculates the target Av value and the aperture drive speed using the following formulas (1) and (2).

$$\text{Target Av value} = \text{previous target Av value} + (\text{Cnt} \times \alpha) \ (1)$$

$$\text{Aperture drive speed} = (\text{Cnt} \times \alpha)/(T + \Delta t) \ (2)$$

The above-described calculation formulas (1) and (2) are merely examples, and other calculation formulas may be used to calculate the target Av value and the aperture drive speed. Further, the camera microcomputer 205 may transmit information other than the target Av value and the aperture drive speed to the lens microcomputer 111 as the aperture drive request.

Next, in step S910, if the end of the operation of the adapter operation ring 310 is detected due to the fact that the output of the ring rotation detector 311 does not change for the predetermined time or longer, the adapter microcomputer 302 stores the ring operation end information indicating that the ring operation has ended in the ring operation state information. The end of the ring operation may be detected by a different method than the method described above.

Next, in step S908, the camera microcomputer 205 receives the ring operation state information from the adapter microcomputer 302. However, in this case, the ring operation end information is included in the received ring operation state information. In step S911, the camera microcomputer 205 ends acquiring the subsequent acquiring periodic ring operation state information based on this ring operation end information. After transmitting the aperture drive request to the lens microcomputer 111 based on the cumulative value of the operation amount and the operation speed of the adapter operation ring 310 included in the last received ring operation state information, the camera microcomputer 205 ends the transmission of the periodic aperture drive request in step S912.

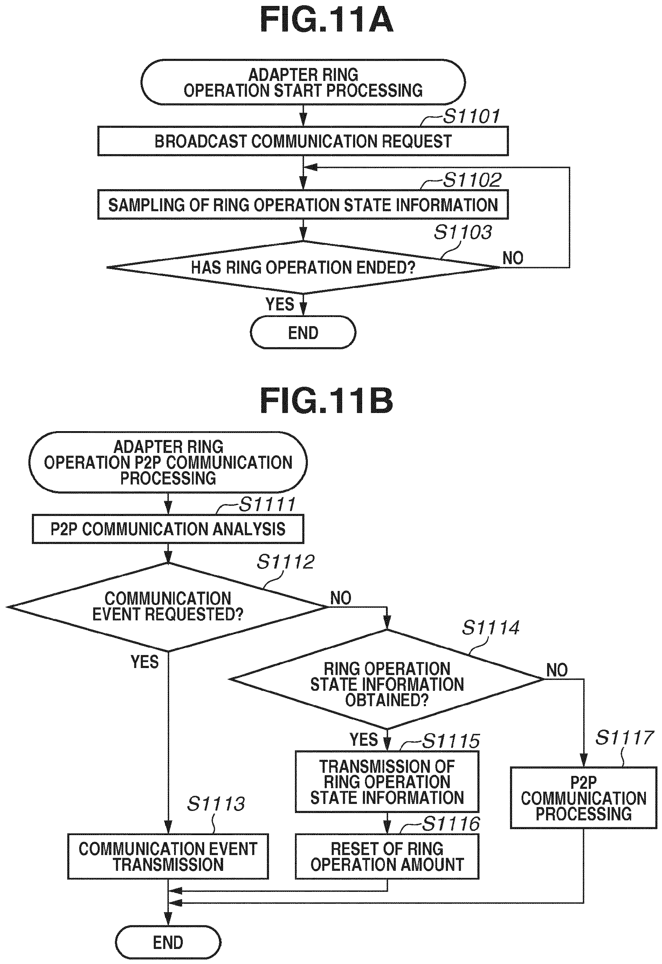

Next, the ring operation start processing performed by the adapter microcomputer 302 in the imaging communication processing will be described with reference to the flowchart in Fig. 11A. The adapter microcomputer 302 starts the processing if the ring operation start is detected. In step S1101, the adapter microcomputer 302 sets the ring operation start information in the internal transmission buffer as a communication request event in order to notify the camera microcomputer 205 that the ring operation has started. Then, the communication request of the broadcast communication is transmitted to the camera microcomputer 205. The communication request event (ring operation start information) set in the internal transmission buffer is transmitted to the camera microcomputer 205 through the P2P communication (described below).

Next, in step S1102, the adapter microcomputer 302 samples the ring operation state information. Then, in step S1103, the adapter microcomputer 302 determines whether the ring operation has ended. If the operation has not ended (NO in step S1103), the processing returns to step S1102, and the adapter microcomputer 302 again samples the ring operation state information. If the operation has ended (YES in step S1103), the adapter microcomputer 302 stores the ring operation end information in the internal transmission buffer in the ring operation state information to end the processing. Then, the processing ends.

The P2P communication processing corresponding to the ring operation performed by the adapter microcomputer 302 in the above-described imaging communication processing will be described with reference to the flowchart in Fig. 11B. The adapter microcomputer 302 starts the processing, if it is specified as the communication partner of the P2P communication by the camera microcomputer 205.

In step S1111, the adapter microcomputer 302 analyzes the data received from the camera microcomputer 205 through the P2P communication. Next, in step S1112, the adapter microcomputer 302 determines whether the received data from the camera microcomputer 205 is the transmission request of the communication request event. If the received data from the camera microcomputer 205 is the transmission request of the communication request event (YES in step S1111), the processing proceeds to step S 1113. Otherwise (NO in step S1111), the processing proceeds to step S1114.

In step S1113, the adapter microcomputer 302 transmits the communication request event (ring operation start information) set in the internal transmission buffer in step S1101 to the camera microcomputer 205 to end the processing. The communication request event in the internal transmission buffer is reset thereafter.

In step S1114, the adapter microcomputer 302 determines whether the received data is the transmission request (operation state transmission request) of the ring operation state information. If the received data is the transmission request of the ring operation state information (YES in step S1114), the processing proceeds to step S1115. Otherwise (NO in step S1114), the processing proceeds to step S 1117.

In step S1115, the adapter microcomputer 302 transmits to the camera microcomputer 205 the ring operation state information sampled in step S1102 and set in the internal transmission buffer. In step S1116, the adapter microcomputer 302 resets the cumulative value of the operation amount of the ring operation state information to end the processing. By resetting the cumulative value of the operation amount, the adapter microcomputer 302 can transmit the operation amount to the camera microcomputer 205 without deficiency and excess.

In step S1117, the adapter microcomputer 302 performs the P2P communication processing other than the transmission of the communication request event and the ring operation state information to the camera microcomputer 205 and ends the processing. Examples of the P2P communication processing other than the transmission of the communication request event and the ring operation state information are as follows. For example, it includes processing to transmit adapter unique information including the presence or absence of the operation member in the adapter 300, the shortest period (shortest time interval) at which transmission of the ring operation state information is possible and the optical magnification of the adapter 300. Further, it may be a reception request from the camera microcomputer 205, or, may be, for example, a request to start or stop the sampling of the ring operation state information. In the present exemplary embodiment, the shortest period at which transmission of the ring operation state information is possible is requested to the adapter microcomputer 302 by the camera microcomputer 205 and received from the adapter microcomputer 302 when the camera body 200 is started in a state mounted with the adapter 300.

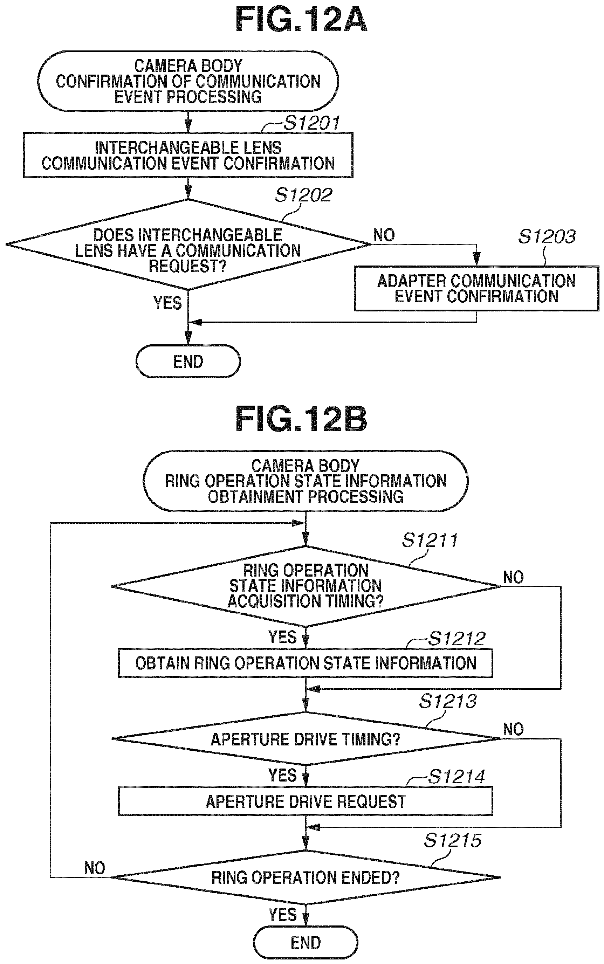

Next, the communication request event confirmation processing performed by the camera microcomputer 205 in the imaging communication processing described above will be described with reference to the flowchart in Fig. 12A. This processing is processing for confirming the event of the communication request output from either the lens microcomputer 111 or the adapter microcomputer 302.

The camera microcomputer 205 that has received the communication request transmits the transmission request of the communication request event to the lens microcomputer 111 through the P2P communication in step S1201, and acquires the communication request event from the lens microcomputer 111.

Next, in step S1202, the camera microcomputer 205 analyzes the communication request event acquired in step S1201, and determines whether the lens microcomputer 111 has requested the broadcast communication. If the lens microcomputer 111 has requested the broadcast communication (YES in step S1202), the camera microcomputer 205 ends the processing flow. Otherwise (NO in step S1202), the processing proceeds to step S1203.

In step S1203, the camera microcomputer 205 transmits the transmission request of the communication request event to the adapter microcomputer 302 through the P2P communication, and acquires the communication request event from the adapter microcomputer 302. Then, the processing ends.

The ring operation state information acquiring processing performed by the camera microcomputer 205 in the imaging communication processing will be described with reference to the flowchart in Fig. 12B. In step S1211, the camera microcomputer 205 determines whether it is now the time for acquiring the ring operation state information from the adapter microcomputer 302, and if it is the time (YES in step S1211), the processing proceeds to step S1212. Otherwise (NO in step S1211), the processing proceeds to step S1213.

In step S1212, the camera microcomputer 205 transmits the transmission request (operation state transmission request) of the ring operation state information through the P2P communication to the adapter microcomputer 302, and acquires the ring operation state information from the adapter microcomputer 302.

Next, in step S1213, the camera microcomputer 205 determines whether it is the time to perform the aperture drive. If it is the time (YES in step S1213), the processing proceeds to step S1214. Otherwise (NO in step S1213), the processing proceeds to step S1215.

In step S1214, the camera microcomputer 205 transmits the aperture drive request to the lens microcomputer 111. Then, the processing proceeds to step S1215.

In step S1215, the camera microcomputer 205 analyzes the ring operation state information acquired from the adapter microcomputer 302. If the ring operation end information is included (YES in step S1215) the processing ends. Otherwise (NO in step S1215), the processing proceeds to step S1211.

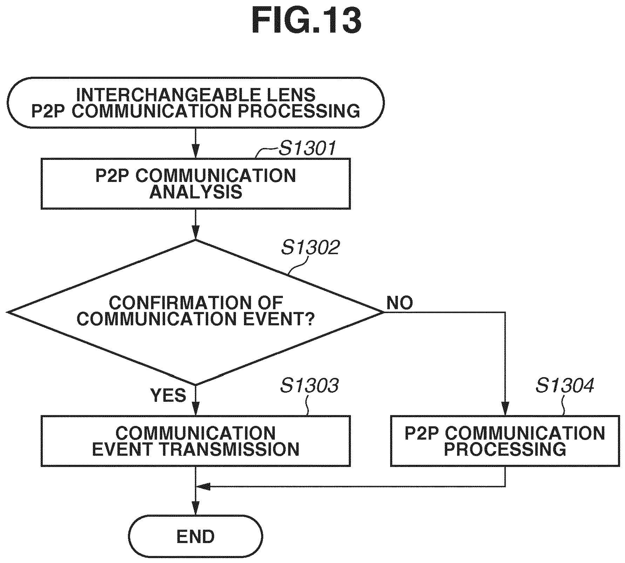

Next, the P2P communication processing performed by the lens microcomputer 111 in the imaging communication processing will be described with reference to the flowchart in Fig. 13. The lens microcomputer 111 specified as the communication partner of the P2P communication by the camera microcomputer 205 analyzes the data received from the camera microcomputer 205 in step 1301.

Next, in step 1302, the lens microcomputer 111 determines whether the received data is a transmission request of the communication request event. If the received data is a transmission request of the communication request event (YES in step S1302), the processing proceeds to step 1303. Otherwise (NO in step S1302), the processing proceeds to step 1304.

In step 1303, the lens microcomputer 111 transmits the communication request event set in the internal transmission buffer to the camera microcomputer 205 to end the processing flow. The communication request event set in the internal transmission buffer is reset thereafter.

In step 1304, the lens microcomputer 111 performs the P2P communication processing other than the transmission of the communication request event in the camera microcomputer 205 to end the processing. The P2P communication processing other than the transmission of the communication request event is the transmission of unique information of the interchangeable lens 100, for example, the presence or absence of the operation member in the interchangeable lens 100, the operation state information of the operation member, the shortest period in which the transmission of the operation state information is possible, and the focal length and other optical information. Further, it may be a reception request from the camera microcomputer 205, or, may be, for example, the aperture drive request or the focus lens drive request.

Employing the processing of the present exemplary embodiment, the camera microcomputer 205 does not have to periodically perform the communication for requesting the detection of the ring operation start to the adapter microcomputer 302. Thus, it is possible to reduce the communication and the processing of the camera microcomputer 205 when the ring operation is not performed by the user.

Further, the broadcast communication is requested from the adapter microcomputer 302 to the camera microcomputer 205 in response to the ring operation by the user. With this operation, it is possible to start a broadcast communication with a shorter time lag compared to a case where the camera microcomputer 205 periodically inquires whether there is an event to perform the broadcast communication to the adapter microcomputer 302. The event to perform the broadcast communication is, for example, the detection of the ring operation (start and end) or is the sampling of the ring operation state information. As a result, it is possible to perform a satisfactory aperture drive corresponding (proportional) to the user operation of the adapter operation ring 310 provided in the adapter 300 connected between the camera body 200 and the interchangeable lens 100, and having a high real time property.

Next, a second exemplary embodiment will be described. The configuration of the camera system according to the present exemplary embodiment is similar to that according to the first exemplary embodiment. In the present exemplary embodiment, the information indicating whether the interchangeable lens 100 or the adapter 300 has an operation member and the information indicating the period in which the transmission of the operation state information is possible is shared between the camera body 200 and the interchangeable lens 100 and the adapter 300. To this end, in the present exemplary embodiment, from between the interchangeable lens 100 and the adapter 300, the one having the adapter operation ring 310 as the operation member confirms the communication request event first, to cause the period in which the communication of the above-described information is possible to be variable. In the present exemplary embodiment, the interchangeable lens 100 does not have the operation member.

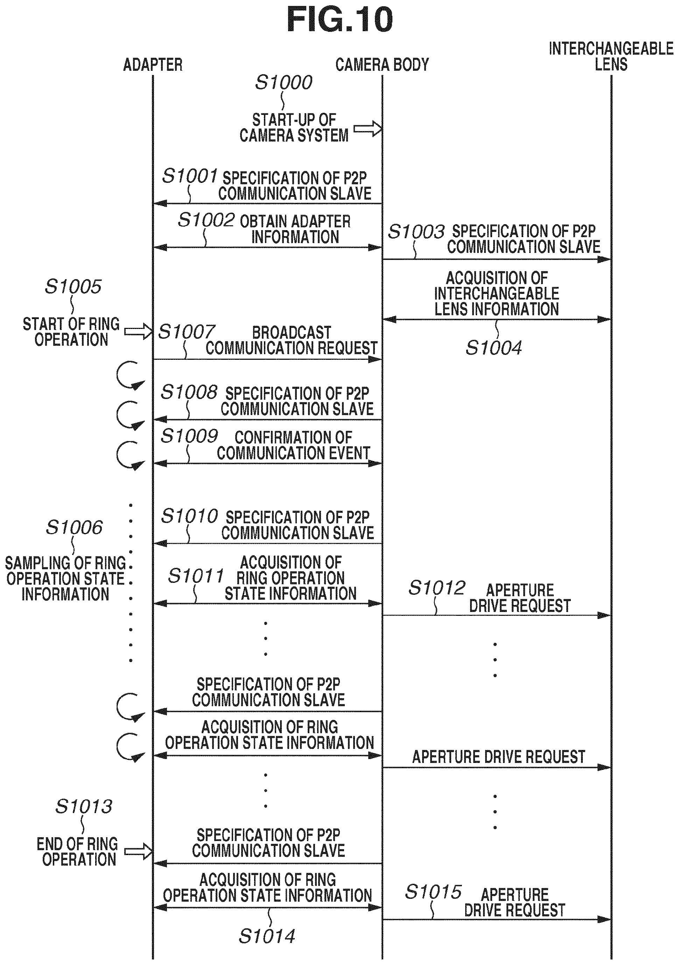

Fig. 10 illustrates imaging communication processing performed between the camera microcomputer 205, the lens microcomputer 111, and the adapter microcomputer 302 in order to implement the imaging control using the adapter operation ring 310 according to the present exemplary embodiment. In this example, the case when the interchangeable lens 100 is connected via one adapter 300 to the camera body 200 as illustrated in Fig. 1 and Fig. 2A is described as an example. In this example, the broadcast communication and the P2P communication are performed between the camera microcomputer 205, the lens microcomputer 111, and the adapter microcomputer 302 via the signal line CS and the signal line DATA. Further, the camera microcomputer 205 receives the ring operation state information (described below) from the camera microcomputer 205, and controls the drive (aperture drive) of the aperture unit 114 in the interchangeable lens 100 via the lens microcomputer 111.

First, in step S1000, the processing is started by activating the camera system. In step S1001, the camera microcomputer 205 uses the broadcast communication at the timing 601 illustrated in Fig. 6 to specify the adapter microcomputer 302 as the communication partner of the P2P communication in order to inquire the adapter microcomputer 302 regarding the unique information of the adapter 300. The unique information of the adapter 300 (hereinafter, referred to as adapter unique information) includes whether the adapter 300 has an operation member such as the adapter operation ring 310, and the ring operation state transmission possible period. Further, the adapter unique information may also include optical information such as the optical magnification of an extender, and the information indicating whether the adapter 300 has a drivable magnification-varying lens.

Next, in step S1002, the camera microcomputer 205 uses the P2P communication to request the transmission of the adapter unique information to the adapter microcomputer 302, and receives the adapter unique information from the adapter microcomputer 302. With this operation, the camera microcomputer 205 can confirm that the adapter 300 has the adapter operation ring 310, and can grasp the period in which the transmission of the ring operation state information is possible (hereinafter, referred to as a ring information transmission possible period).

Next, in step S1003, the camera microcomputer 205 uses the broadcast communication at the timing 604 illustrated in Fig. 6 to specify the lens microcomputer 111 as the communication partner of the P2P communication to inquire the lens microcomputer 111 about the unique information of the interchangeable lens 100.

Next, in step S1004, the camera microcomputer 205 uses the P2P communication to request the transmission of the unique information of the interchangeable lens 100 (hereinafter, referred to as lens unique information) to the lens microcomputer 111, and receives the lens unique information from the lens microcomputer 111. With this operation, the camera microcomputer 205 can confirm that the interchangeable lens 100 does not have the operation member.

Next, in step S1005, if the adapter microcomputer 302 detects the ring operation by a user, the sampling of the ring operation state information is started in step S1006. The ring operation state information is the same as that in the first exemplary embodiment.

Next, in step S1007, the adapter microcomputer 302 requests the camera microcomputer 205 to start the broadcast communication by providing the Low output (at the timing 421) to the signal line CS illustrated in Fig. 4B before the notification in order to notify the camera microcomputer 205 of the ring operation start. In other words, the adapter microcomputer 302 transmits the communication request to the camera microcomputer 205.

The camera microcomputer 205 that has received the communication request from the adapter microcomputer 302 confirms that the adapter 300 has the adapter operation ring 310, and the interchangeable lens 100 does not have the operation member in the previous processing. Accordingly, the camera microcomputer 205 preferentially inquires the communication request event to the adapter microcomputer 302. In this way, the operation start of the adapter operation ring 310 can be detected more rapidly. In step S1008, the camera microcomputer 205 uses the broadcast communication at the timing 601 illustrated in Fig. 6 to specify the adapter microcomputer 302 as the communication partner of the P2P communication.

Next, the camera microcomputer 205 uses the P2P communication described with reference to Fig. 5 to inquire the adapter microcomputer 302 regarding the communication request event via the signal line DATA. Then, in step S1009, the communication request event (ring operation start information) is received via the signal line DATA from the adapter microcomputer 302. At this time point, since the communication request event becomes clear, and it becomes clear that the adapter microcomputer 302 has sent the communication request, it is not necessary to inquire the lens microcomputer 111 regarding the communication request event thereafter.

Next, to obtain the ring operation state information from the adapter microcomputer 302, the camera microcomputer 205 uses the broadcast communication at the timing 601 illustrated in Fig. 6 to specify the adapter microcomputer 302 as the communication partner of the P2P communication in step S1010. However, this broadcast communication does not have to be performed in a case where the communication mode of the adapter microcomputer 302 is the P2P communication mode. Next, in step S1011, the camera microcomputer 205 uses the P2P communication to request the transmission of the ring operation state information to the adapter microcomputer 302, and receives the ring operation state information from the adapter microcomputer 302. In the same manner as the first exemplary embodiment, the adapter microcomputer 302 resets the internal ring operation state information in order to transmit the subsequent ring operation state information at the time point at which the ring operation state information has been transmitted.

The camera microcomputer 205 sets the request period based on the ring information transmission possible period received in the starting in step S1002, from the adapter microcomputer 302. Then, thereafter, the specification, in step S1010, of the adapter microcomputer 302 and the reception, in step S1011, of the ring operation state information from the adapter microcomputer 302 are repeated until the ring operation end information is received in the request period. In this way, the camera microcomputer 205 can obtain the latest ring operation state information in each request period thereby.

The information of the ring information transmission possible period includes the shortest period and the longest period in which the ring operation state information can be transmitted by the adapter microcomputer 302. The camera microcomputer 205 sets the request period in the range from the shortest period to the longest period. For example, by setting the shorter period when the operation amount or the operation speed of the adapter operation ring 310 is large, a more sensitive imaging control (aperture drive) becomes possible. On the other hand, when the operation amount or the operation speed is small, unnecessary communication can be prevented by setting the request period to a longer period. The setting method of the request period is not limited thereto. Further, the adapter microcomputer 302 according to the present exemplary embodiment transmits the ring information transmission possible period to the camera microcomputer 205. In this way, even when the adapter 300 is connected to the camera body 200 (an adapter unknown to the camera microcomputer 205) for the first time, the ring operation state information can be acquired at a suitable request period.

Next, in step S1012, the camera microcomputer 205 transmits the aperture drive request to the lens microcomputer 111 based on the acquired ring operation state information. As described in the first exemplary embodiment, the communication for the aperture drive request may be broadcast communication or P2P communication. Further, the camera microcomputer 205 transmits the aperture drive request to the lens microcomputer 111 each time the ring operation state information is received, but this transmission period of the aperture drive request to the lens microcomputer 111 may be different from the reception period of the ring operation state information.

The processing performed thereafter by the camera microcomputer 205, the adapter microcomputer 302, and the lens microcomputer 111 is similar to that according to the first exemplary embodiment including the reception, in step S1013, of the ring operation end information by the camera microcomputer 205 and the processing, in step S1014 and step S1015 in response thereto.

In the above-described imaging communication processing, the camera microcomputer 205 acquires, in advance, the ring information transmission possible period as the unique information of the adapter 300, and thus, can request the adapter 300 to transmit the transmission of the ring operation state information at a suitable request period. Accordingly, it is possible to perform imaging control corresponding (proportional) to the user operation of the adapter operation ring 310 provided in the adapter 300 connected between the camera body 200 and the interchangeable lens 100 and having a high real time property.

According to each of the above-described exemplary embodiments, since one-to-many communication between the camera body 200 and the interchangeable lens 100 and the adapter 300 is possible, it is possible to perform a satisfactory imaging control having a high real time property using the adapter operation ring 310 provided in the adapter 300.

Next, a third exemplary embodiment will be described. The configuration of the camera system according to the present exemplary embodiment is similar to that according to the first exemplary embodiment. The present exemplary embodiment is characterized in that the camera body 200 can prohibit and permit the broadcast communication request to the interchangeable lens 100 and the adapter 300. More specifically, during the time period from the start of the operation of the adapter operation ring 310 to the end of the operation, the adapter 300 is prohibited from broadcast communication due to the adapter operation ring 310 operation event. By restricting excessive broadcast communication requests in this way, it becomes possible to open the communication bandwidth.

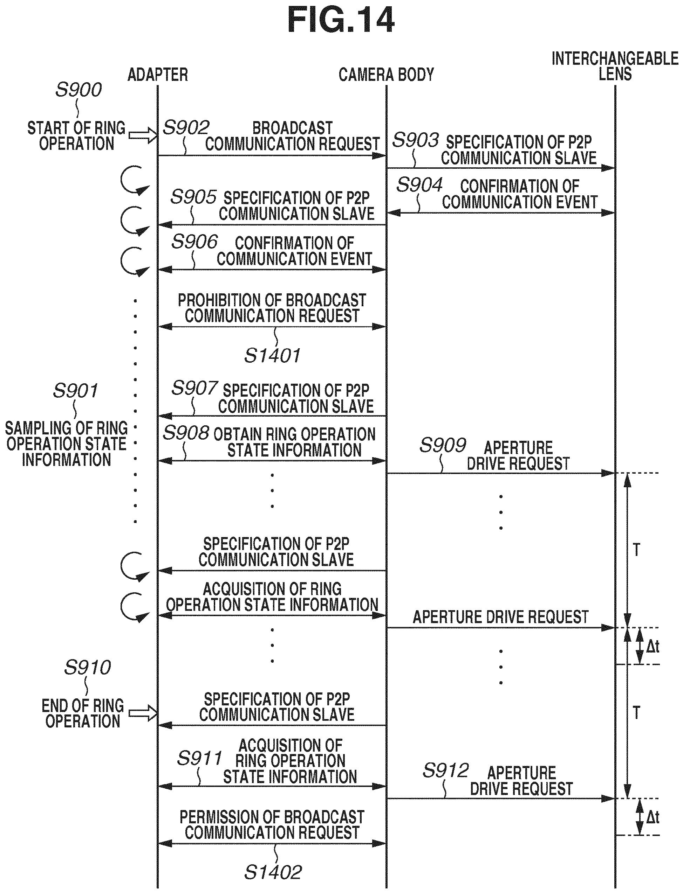

The imaging communication processing performed between the camera microcomputer 205, the lens microcomputer 111 and the adapter microcomputer 302 in order to implement the imaging control using the adapter operation ring 310 in the present exemplary embodiment will be described with reference to Fig. 14. The description regarding the same processing as in Fig. 10 will be omitted.

The camera microcomputer 205, which has determined that the transmission source of the communication request in step S906 is the adapter microcomputer 302, and that the event of the communication request is the ring operation start, performs the subsequent communication. More specifically, in step S1401, the camera microcomputer transmits the prohibition notification of the broadcast communication request that is the event caused by the ring operation start to the adapter microcomputer 302 that is the communication partner of the P2P communication.

Furthermore, in step S1402, the camera microcomputer 205 that has determined the end of the ring operation in step S911 transmits the permission notification of the broadcast communication request caused by the event of the ring operation start, to the adapter microcomputer 302 that is the communication partner of the P2P communication.

According to the present exemplary embodiment, since one-to-many communication between the camera body 200 and the interchangeable lens 100 and the adapter 300 is possible, it is possible to perform a satisfactory imaging control having a high real time property using the adapter operation ring 310 provided in the adapter 300. Furthermore, by restricting excessive broadcast communication requests in this way, it becomes possible to open the communication bandwidth.

Next, a fourth exemplary embodiment will be described. The configuration of the camera system according to the present exemplary embodiment is similar to that according to the first exemplary embodiment. In the present exemplary embodiment, communication is performed between the camera body 200 and a smartphone 2000 as an example of an external device. The communication between the smartphone 2000 and the camera body 200 is implemented via the camera body 200 by controlling the communication between the camera body 200 and the adapter 300 based on the communication between the camera body 200 and the smartphone 2000. The description will mainly be given focusing on the differences from the above-described exemplary embodiments.

<Internal Configuration of the Smartphone 2000>

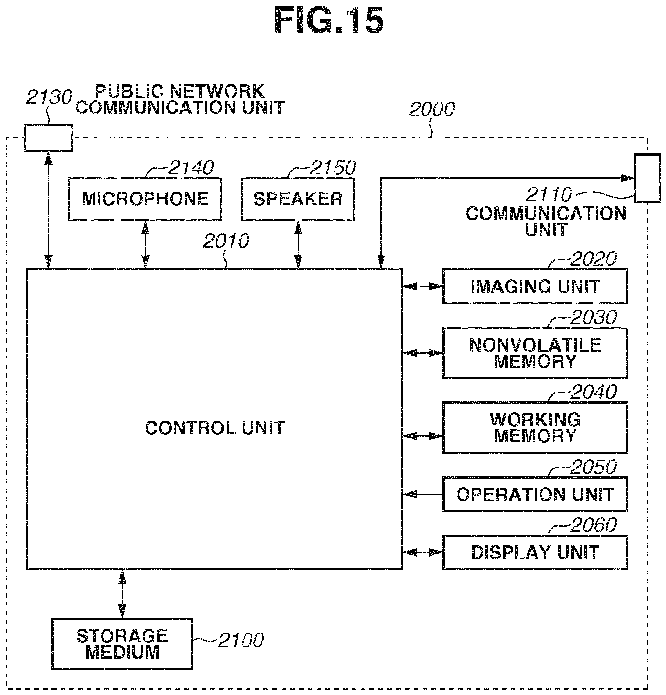

Fig. 15 is a block diagram illustrating a configuration example of the smartphone 2000 as an example of an information processing apparatus according to the present exemplary embodiment. In the present exemplary embodiment, a smartphone is employed as an example of the information processing apparatus, but the information processing apparatus is not limited thereto. For example, the information processing apparatus may also be a camera body, a tablet device, or a personal computer, with a wireless function.

A control unit 2010 controls each unit of the smartphone 2000 based on input signals and a program described below. In place of the control unit 2010 controlling the entire apparatus, a plurality of hardware units may control the entire apparatus by sharing the processing.

An imaging unit 2020 converts subject light focused using lenses included in the imaging unit 2020 to an electric signal, performs noise reduction processing and the like, and outputs the digital data as image data. The captured image data is accumulated in a buffer memory, and then subjected to a predetermined arithmetic operation by the control unit 2010, and is recorded in a recording medium 2100.

A non-volatile memory 2030 is an electrically erasable/recordable non-volatile memory. The non-volatile memory 2030 records an operating system (OS), which is basic software executed by the control unit 2010, and an application that implements application functions in cooperation with the OS. Further, in the present exemplary embodiment, the non-volatile memory 2030 stores an application for communicating with the camera body 200.

A working memory 2040 is used as an image display memory for a display unit 2060, a work area for the control unit 2010, or the like.

An operation unit 2050 is used to accept an instruction for the smartphone 2000 from the user. The operation unit 2050 includes, for example, a power supply button for instructing the smartphone 2000 to power On and OFF, and an operation member such as a touch panel formed on the display unit 206.

The display unit 2060 displays image data, characters for interactive operation, or the like. The smartphone 2000 does not necessarily need to include the display unit 2060. The smartphone 2000 can at least be connected with the display unit 2060, and has a display control function for controlling display of the display unit 2060.

A recording medium 2100 can record image data output from the imaging unit 2020. The recording medium 2100 may be configured to be attachable to and detachable from the smartphone 2000, or may be built in the smartphone 2000. In other words, it is only necessary for the smartphone 2000 to at least have a unit for accessing the recording medium 2100.

A communication unit 2110 is an interface for connecting to an external apparatus. The smartphone 2000 according to the present exemplary embodiment can exchange data with the camera body 200 via the communication unit 2110. In the present exemplary embodiment, the communication unit 2110 is an antenna, and the control unit 2010 can connect to the camera body 200 via the antenna. The connection with the camera body 200 may be established directly or may be established via an access point. As a protocol for communicating data, for example, Picture Transfer Protocol over Internet Protocol (PTP/IP) through a wireless LAN can be used. The communication with the camera body 200 is not limited thereto. For example, the communication unit 211 may include a wireless communication module such as an infrared communication module, a Bluetooth® communication module, or Wireless universal serial bus (USB). Alternatively, a wired connection such as a USB cable, high-definition multimedia interface (HDMI), Institute of Electrical and Electronics Engineers (IEEE) 1394 or the like may be utilized.

The communication unit 2110 may be a near-field wireless communication unit having, for example, an antenna for wireless communication, a modulator/demodulator circuit for processing the wireless signal, and a communication controller. In this case, the communication unit 2110 implements contactless wireless communication by outputting a modulated wireless signal from the antenna, and demodulating the wireless signal received by the antenna. In the present exemplary embodiment, the contactless wireless communication that conforms to the standards of ISO/IEC 18092 (NFC) is implemented. If a data read-out request from another device is received, the communication unit 2110 outputs response data based on data stored in the non-volatile memory 2030. The smartphone 2000 operates in a card reader mode, a card writer mode, and a P2P mode, which are defined in the NFC standards, through the communication unit 2110, and mainly acts as an Initiator. On the other hand, the camera body 200 mainly acts as a Target via the communication unit 209.

Further, the communication unit 2110 may be a near-field wireless communication unit constituted by, for example, an antenna for wireless communication, a modulator/demodulator circuit for processing the wireless signal, and a communication controller. In this case, the communication unit 2110 implements near-field wireless communication that conforms to the standards of IEEE 802.15 by outputting a modulated wireless signal from the antenna, and demodulating the wireless signal received by the antenna. In the present exemplary embodiment, the near-field wireless communication unit communicates with another device that conforms to the standards of IEEE 802.15.1 (Bluetooth). Further, in the present exemplary embodiment, Bluetooth communication utilizes Bluetooth® Low Energy Version 4.0 (BLE), which has low power consumption.

A public network communication unit 2130 is an interface used in performing public network wireless communication. The smartphone 2000 can make a call to another device via the public network communication unit 2130. In this case, the control unit 2010 implements a call by inputting/outputting audio signals via a microphone 2140 and a loudspeaker 2150. In the present exemplary embodiment, the public network communication unit 2130 is an antenna, and the control unit 101 can connect to a public network via the antenna. The communication unit 2110 and the public network communication unit 2130 may share one antenna.

The communication unit 2110 may be configured so as to wirelessly communicate by connecting the smartphone 2000 and the camera body 200 with a cable or the like.

These are the descriptions about the smartphone 2000.

<Communication processing Flow>

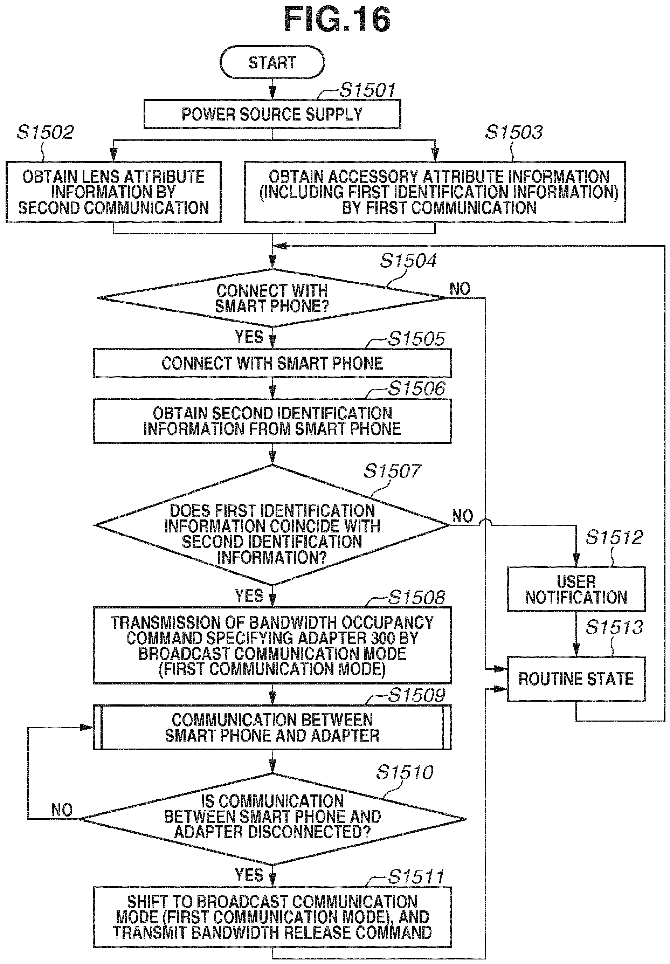

The communication processing performed by the camera microcomputer 205 with the interchangeable lens 100, the adapter 300, and the smartphone 2000 will be described with reference to Fig. 16. A part of or entire processing by the smartphone 2000 may be executed via an application of the control unit 2010.

In step S1501, if the power is supplied to the camera body 200 in response to the user operation, the processing of the present flow changes to step S1502 and step S1503.

In step S1502, the camera microcomputer 205 transmits the transmission request of the lens attribute information to the lens microcomputer 111 through the second communication. Then, the camera microcomputer 205 receives the lens attribute information transmitted from the lens microcomputer 111 in response to the transmission request. The communication performed in step S1502 is also called initial communication. The identification information and the like for identifying the interchangeable lens 100 is included the lens attribute information.

In step S1503, the camera microcomputer 205 transmits the transmission request of the accessory attribute information to the lens microcomputer 111 through the first communication. Then, the camera microcomputer 205 receives accessory attribute information from accessories mounted on the camera body 200 and capable of communicating through the first communication, as the response to the transmission request. The communication performed in step S1503 is also called initial communication. The identification information and the like for identifying the corresponding accessories is included in the accessory attribute information. In the present exemplary embodiment, at least the adapter 300 can perform communication through the first communication, and the camera microcomputer 205 receives the accessory attribute information of the adapter 300 in step S1503. The first identification information as the adapter identification information is included in the accessory attribute information of the adapter 300. The camera microcomputer 205 according to the present exemplary embodiment specifies the interchangeable lens 100 or the adapter 300 by the above-described broadcast communication mode, which is an example of the first communication mode, and acquires the accessory identification information through the P2P communication mode, which is an example of the second communication mode. The communication in step S1503 is executed by performing this processing for each accessory (in the present exemplary embodiment, the interchangeable lens 100 or the adapter 300).

In step S1504, the camera microcomputer 205 determines whether to perform a connection with the smartphone 2000 via the communication unit 209.

The camera microcomputer 205 may determine whether a connection with the smartphone 2000 is performed, based on the information relating to the connection state (also referred to as the communication state) with the smartphone 2000. For example, it may be obtained from the smartphone information relating to whether the application for operating the adapter 300 is started on the smartphone as the information relating to the connection state with the smartphone. In this case, the camera microcomputer 205 connects with the smartphone in response to acquisition of information corresponding to the starting of the application. Further, the connection with the smartphone 2000 is not performed when the information corresponding to information indicating that the application is started, cannot be acquired, and when the information corresponding to information indicating that the application is not started, is acquired.

Further, the camera microcomputer 205 may also determine whether to connect to the smartphone 2000 based on the instruction information from a user. For example, when the user operates the adapter 300 on the smartphone 2000 application as the instruction information from the user, the information corresponding to the operation may be acquired from the smartphone 2000. Further, when the user has performed an operation instructing the operation of the adapter 300 on the smartphone 2000 application to start as the instruction information from a user, the information corresponding to the start of this operation may be obtained from the smartphone 2000. In these cases, the camera microcomputer 205 connects to the smartphone 2000 in response to the acquisition of the instruction information from the user. Further, when the instruction information cannot be acquired from the user, the connection with the smartphone 2000 is not performed.

When it is determined that the camera microcomputer 205 is to be connected with the smartphone 2000 (YES in step S1504), the processing proceeds to step S1505. When it is determined not to be connected (NO in step S1504), the processing proceeds to step S1513.

In step S1505, the camera microcomputer 205 establishes a connection with the smartphone 2000 via the communication unit 209. Moreover, the processing proceeds to step S1506.

In step S1506, the camera microcomputer 205 receives the second identification information from the smartphone 2000.

In step S1507, the camera microcomputer 205 compares the first identification information acquired in step S1503 with the second identification information acquired in step S1506 and determines whether they match each other. If the first identification information and the second identification information match each other (YES in step S1507), the processing changes to step S1508. If the first identification information and the second identification information do not match each other (NO in step S1507), the processing proceeds to step S1511.

In step S1508, the camera microcomputer 205 transmits the bandwidth occupancy command that specifies the adapter 300 in the broadcast communication mode (first communication mode). The bandwidth occupancy command is an example of the first command. A configuration, in which the camera microcomputer 205 transmits the bandwidth occupancy command specifying a specific accessory to each accessory, and accessories other than the specified accessory do not transmit a communication request to the camera microcomputer 205 until this specification is cancelled, may be implemented. In this way, it is possible to perform one-to-one communication between the camera body 200 and the specified specific accessory.

In step S1509, the camera microcomputer 205 controls the communication so that the communication between the smartphone 2000 and the adapter 300 is executed via the camera body 200. In step S1509, the communication mode of the first communication is shifted to either of the above-mentioned second communication mode or the third communication mode (described below), and the communication between the camera microcomputer 205 and the adapter microcomputer 302 is executed.

In step S1510, the camera microcomputer 205 determines whether to disconnect the communication between the smartphone 2000 and the adapter 300 via the camera body 200. When the communication is to be disconnected (YES in step S1510), the processing proceeds to step S1511. When the communication is not to be disconnected (NO in step S1510), the processing returns to step S1509.

In step S1511, the camera microcomputer 205 shifts the communication mode of the first communication to the broadcast communication mode. Then, the band release command is transmitted to each accessory in the broadcast communication mode. The band release command is an example of the second command. In this way, since each accessory other than the adapter 300 is also notified that the specification of the adapter 300 by the bandwidth occupancy command is released, it is possible for each accessory other than the adapter 300 to make the communication request to the camera microcomputer 205.

In step S1512, the camera microcomputer 205 notifies the user that the communication between the smartphone and the adapter is not able to be established due to a mismatch between the first identification information and the second identification information in step S1507.

In step S1513, the camera microcomputer 205 executes routine processing such as routine communication processing other than communication between the smartphone and the adapter or image capturing by the camera body 200. Then, the processing proceeds to step S1504, and the communication performed between the smartphone and the adapter executed in step S1509, and the routine state of step S1513 are switched, if necessary, based on the connection state with the smartphone.

<Communication Mode of Communication Between Smartphone and Adapter>

As described above, the communication between the smartphone and the adapter in step S1509 shifts the communication mode of the first communication to either of the above-mentioned second communication mode or the third communication mode, and executes the communication between the camera microcomputer 205 and the adapter microcomputer 302.

Now, the third communication mode will be described in more detail. The third communication mode is the communication mode of the first communication having a different protocol for communication from the first communication mode and the second communication mode.

For example, in the third communication mode, the communication via the signal line DATA may be performed by the smartphone 2000 to execute one-way communication to the adapter 300 via the camera body 200. In this case, the protocol relating to the control of the signal level of the signal line CS in the third communication mode may be different from the protocol relating to the control of the signal level of the signal line CS in the first communication mode or the second communication mode. As an example, the third communication mode can be configured to perform data communication via the signal line DATA in a state in which the signal level of the signal line CS is maintained at High. In this way, each accessory can distinguish the third communication mode from the first communication mode and the second communication mode. Further, as another example, by changing the signal level of the signal line CS from High again to High via Low, the separation of the data communicated via the signal line DATA may be indicated.

Further, also in the third communication mode, similar to the first communication mode and the second communication mode, the communication via the signal line DATA may be configured in such a manner that the smartphone 2000 performs bi-directional communication to the adapter 300 via the camera body 200. In this case, the third communication mode needs to be configured in such a manner that either of the protocol of the communication via the signal line DATA or the protocol of the communication via the signal line CS is a communication mode different from the first communication mode and the second communication mode.

The communication modes of the communication between the smartphone and the adapter are not limited to the above-described configurations as long as it is balanced and suitable for the communication configuration as a camera system, and other protocol can be adopted.

Next, a fifth exemplary embodiment will be described. The configuration of the camera system of the present exemplary embodiment is similar to that of the fourth exemplary embodiment.

The present exemplary embodiment is characterized in that firmware of the adapter 300 can be updated by the smartphone 2000 via the camera body 200. Specifically, by communicating the firmware update data of the adapter 300 in the above-described third communication (hereinafter, referred to as bandwidth occupancy communication), it is possible to normally and rapidly perform the firmware update processing in the first communication in which one-to-many communication is possible.

In the present exemplary embodiment, the adapter microcomputer 302 has a rewritable nonvolatile memory (not illustrated), and stores identification information and state information relating to the control software (firmware) executed by the adapter microcomputer 302, and the adapter 300. The identification information is information unique to the adapter 300 such as the model name, the optical properties, correction information, and the like. Further, the state information is, for example, the operation state (normal/safe mode), the operating information (position and speed) of the adapter operation ring 310, and the firmware version and the update state. However, the identification information and the state information are not limited thereto. Further, the rewritable nonvolatile memory stores programs to be executed when the adapter 300 is operated in the safe mode to be described below.

Further, the adapter microcomputer 302 has a programmable processer (not illustrated) such as a CPU, and implements various operations such as the operation of the adapter 300 (described below) by reading and executing programs from the memory. For example, the adapter microcomputer 302 executes an operation in accordance with the command received from the camera microcomputer 205 via the above-described first communication unit 303, for example, the transmission of the operation information of the adapter operation ring 310, and the firmware update stored in the memory.

The adapter microcomputer 302 updates the firmware by overwriting the old firmware stored in the memory with, for example, the new firmware received from the camera microcomputer 205 via the first communication unit 303. Further, the adapter microcomputer 302 manages the update processing by recording, in the memory, the data (update state data) indicating the state of the firmware update processing. For example, the adapter microcomputer 302 sets the update state data to a value indicating "Not-Completed" before overwriting the firmware, and sets the update state data to a value indicating "Completed" when the overwriting of the firmware is completed. The value indicating "Completed" may have two values of a value indicating "Normally Completed" and a value indicating "Abnormally Completed". Further, the value indicating "Abnormally Completed" may differ depending on the cause of the abnormality.

For example, when the adapter 300 is removed while the firmware is being updated, the power supply to the adapter 300 is cut off. Accordingly, the update processing is suspended with the update state data having a value indicating "Not-Completed". For example, the adapter microcomputer 302 checks the update state data when the power source is supplied again, and when it indicates a Not-Completed state, the adapter microcomputer 302 shift the mode into a mode in which the operation is restricted (safe mode).

In the safe mode, only limited functions including the processing necessary to perform the firmware update can be performed. Specifically, the processing for transmitting the information (or the request for a firmware update) indicating the safe mode to the camera body 200 and the processing for updating the firmware of the memory with the firmware received from the camera body 200 are possible. Other processing, for example, the transmission of the operation information of the adapter operation ring 310 and the like cannot be performed.

Typically, the capacity of the memory is not large enough to store all of the firmware in duplicate. Accordingly, the capacity available for program storage for the safe mode is limited. Thus, in the safe mode, only limited functions are provided including the minimum required functions such as the transmission of the operation state of the adapter 300 and the update of the firmware. The adapter microcomputer 302 ignores the request when the first communication unit 303 in the safe mode transmits or receives a request for processing that cannot be executed in the safe mode, for example, the operation information of the adapter operation ring 310.

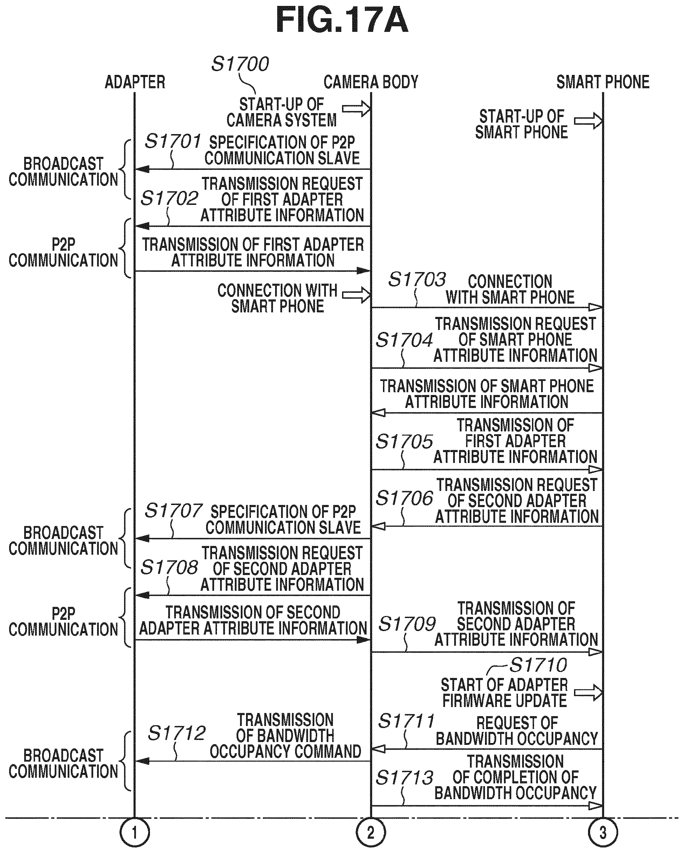

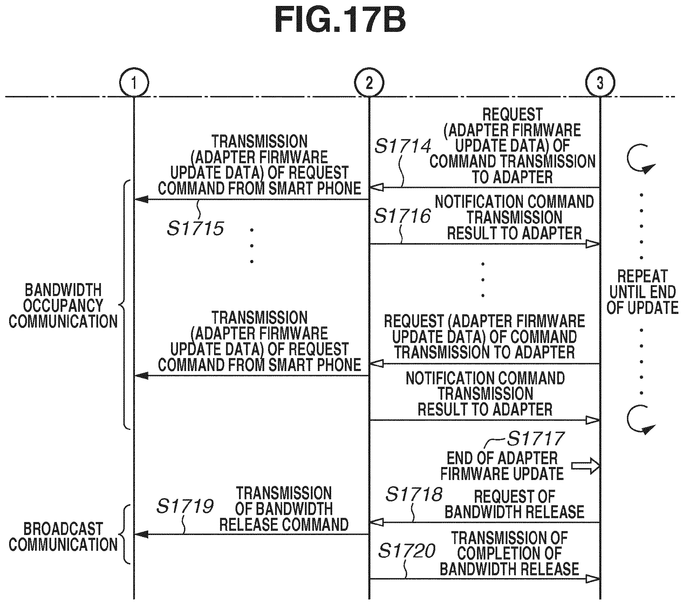

The sequence of the firmware update of the adapter by the smartphone via the camera body in the present exemplary embodiment will be described with reference to Figs. 17A and 17B. A part of or entire processing performed by the smartphone 2000 may be performed by the application of the control unit 2010.

First, processing for authenticating the adapter 300 by the camera microcomputer 205 is started when the camera system is activated.

In step S1701, the camera microcomputer 205 uses the broadcast communication at the timing 601 illustrated in Fig. 6 to specify the adapter microcomputer 302 as the communication partner of the P2P communication in order to inquire the adapter microcomputer 302 regarding a first adapter attribute information of the adapter 300. The first adapter attribute information is information unique to the adapter, including the first adapter identification information by which the camera microcomputer 205 identifies the adapter 300. The first adapter identification information includes, for example, whether the adapter 300 includes an operation member such as an adapter operation ring 310, and the ring operation state transmission possible period. Further, the first adapter identification information may include optical information such as optical magnification as an extender, and the information indicating whether the adaptor 300 includes a drivable zoom lens. Furthermore, the first adapter identification information includes firmware update device information indicating the device capable of updating the firmware of the adapter microcomputer 302, so that the camera microcomputer 205 can identify which of the camera body 200 and the smartphone 2000 can update the firmware of the adapter microcomputer 302. Further, the first adapter attribute information includes the operation state (normal/safe mode) indicating whether the firmware of the adapter microcomputer 302 has been correctly updated.

Further, the first adapter identification information includes command compliance information indicating the commands that can be communicated to the adapter microcomputer 302, so that the camera microcomputer 205 can identify the commands that can be transmitted to the adapter microcomputer 302 and the data that can be received.

Furthermore, the command compliance information includes bandwidth occupancy possibility information indicating whether the adapter microcomputer 302 conforms to the bandwidth occupancy command or the bandwidth release command (described below), so that the camera microcomputer 205 can identify whether the bandwidth occupancy communication is possible with the adapter microcomputer 302.

Furthermore, the command compliance information includes firmware update communication mode information indicating whether the firmware update command of the adapter microcomputer 302 can be executed in the bandwidth occupancy communication, so that the camera microcomputer 205 can identify whether the firmware update of the adapter microcomputer 302 can be executed through the bandwidth occupancy communication.

Furthermore, the command compliance information includes second adapter attribute information obtainable information indicating whether the adapter 300 conforms to the to the command for acquiring the second adapter attribute information to be described below, so that it can be identified whether the second adapter attribute information is obtainable from the adapter 300.

Next, in step S 1702, the camera microcomputer 205 uses P2P communication to request the adapter microcomputer 302 about the transmission of the first adapter attribute information, and to receive the first adapter attribute information from the adapter microcomputer 302. In this way, the camera microcomputer 205 can authenticate the firmware update device information of the adapter microcomputer 302, the operation state, and the like.

Next, the authentication processing performed when the camera microcomputer 205 is connected with the smartphone 2000 in step S1703 will be described.

First, in step S1704, the camera microcomputer 205 requests the smartphone 2000 to transmit the attribute information of the smartphone 2000, and acquires the attribute information of the smartphone 2000 from the smartphone 2000. Next, in step S1705, the camera microcomputer 205 transmits the first adapter attribute information to the smartphone 2000. In this way, the smartphone 2000 can authenticate the firmware update device information of the adapter microcomputer 302, the operation state, and the like.

Next, when the second adapter attribute information can be acquired from the adapter 300, the smartphone 2000 communicates an acquisition request of the second adapter attribute information to the camera microcomputer 205 in order to inquire the second adapter attribute information of the adapter 300 in step S1706. The second adapter attribute information is unique information of the adapter 300 and is not necessary, for example, for the camera microcomputer 205, but is necessary for the smartphone 2000, and includes, for example, the firmware version information for display by the application. In the examples of the information included in the above-described first adapter attribute information, if the information is not necessary for the camera microcomputer 205, but is necessary for the smartphone 2000, the information may be included in the second adapter attribute information. In response, in step S1707, the camera microcomputer 205 uses the broadcast communication to specify the adapter microcomputer 302 as the communication partner of the P2P communication in the similar manner to steps S1701 and S1702, and uses the P2P communication to obtain the second adapter attribute information in step S1708. Then, in step S1709, the camera microcomputer 205 can authenticate the unique information of the adapter microcomputer 302 required by the smartphone 2000 by transmitting the acquired second adapter information to the smartphone 2000.

Next, the processing performed when the firmware update of the adapter microcomputer 302 is started by the smartphone 2000 in step S1710, will be described.

The present exemplary embodiment is characterized in that the firmware update data of the adapter 300 is communicated through the bandwidth occupancy communication (third communication). This is because, if the firmware update data is transmitted to the adapter microcomputer 302 through the broadcast communication or the P2P communication, it is necessary to communicate in the communication data format defined through the broadcast communication or the P2P communication. Therefore, the transmission of the data of a large capacity firmware update may take time, and is unsuitable therefor. Further, in the case of broadcast communication, if an accessory other than the adapter 300 requests the communication, there is a risk that the firmware update cannot be completed normally. Thus, the adapter 300 according to the present exemplary embodiment is characterized by notifying the camera microcomputer 205 and the smartphone 2000, using the first or the second adapter information, that the bandwidth occupancy communication is possible, and that the firmware update is possible through the bandwidth occupancy communication.

First, in step S1711, the smartphone 2000 requests the transmission of the bandwidth occupancy command specifying the adapter 300 to the camera microcomputer 205. In response thereto, in step S1712, the camera microcomputer 205 transmits the bandwidth occupancy command specifying the adapter 300 through the broadcast communication. With this command, the camera body 200 and the adapter 300 shift to the third communication mode (hereinafter, also referred to as a bandwidth occupancy communication mode), and the one-to-one communication starts. Further, at this time, accessories other than the adapter 300 stop issuing the communication request until the band release command is received through the broadcast communication, and shifts the broadcast communication mode (hereinafter, referred to as a bandwidth transfer mode) characterized by ignoring the communications other than the bandwidth release command. Then, by the camera microcomputer 205 notifying the smartphone 2000 that the bandwidth occupancy communication mode is shifted in step S1713, the smartphone 2000 starts the transmission processing of the firmware update data of the adapter microcomputer 302.

Next, in step S1714, the smartphone 2000 notifies the camera microcomputer 205 of the command (in the present exemplary embodiment, the adapter firmware update data) to be transmitted through the bandwidth occupancy communication. In response thereto, in step S1715, the camera microcomputer 205 communicates the above-described command through the bandwidth occupancy communication. In step S1716, the camera microcomputer 205 notifies the smartphone 2000 of the communication result. Steps S1714, S1715, and S1716 are repeated until all of the firmware update data is transmitted.

When all of the firmware update data has been transmitted, the smartphone 2000 requests the transmission of the band release command to the camera microcomputer 205 in order to release the bandwidth occupancy communication in step S1718. In response thereto, in step S1719, the camera microcomputer 205 transmits the band release command through the broadcast communication to each accessory. In this way, the bandwidth occupancy communication mode of the camera microcomputer 205 and the adapter microcomputer 302, and the bandwidth transfer mode of accessories other than the adapter 300 are released, and returned to the routine broadcast communication mode. Then, by the camera microcomputer 205 notifying the smartphone 2000 that the bandwidth occupancy communication mode has ended in step S1720, the smartphone 2000 recognizes that the firmware update of the adapter microcomputer 302 has been completed.

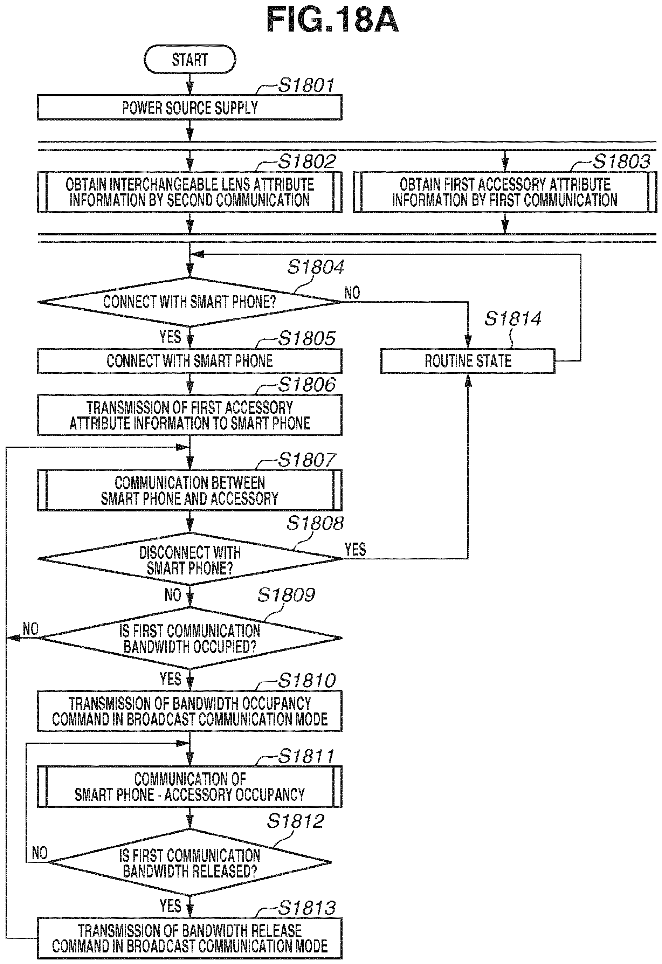

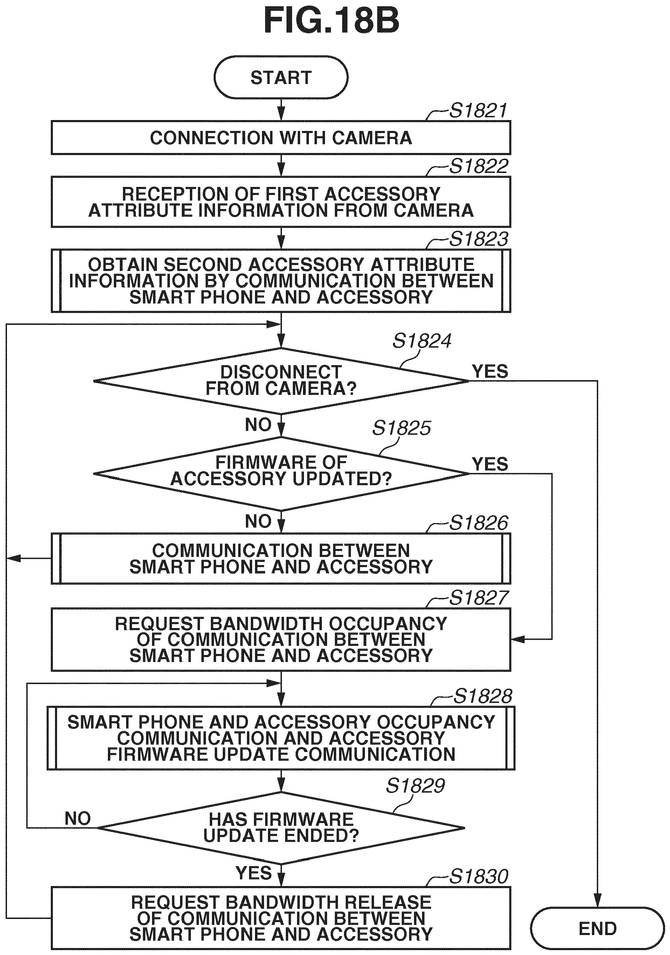

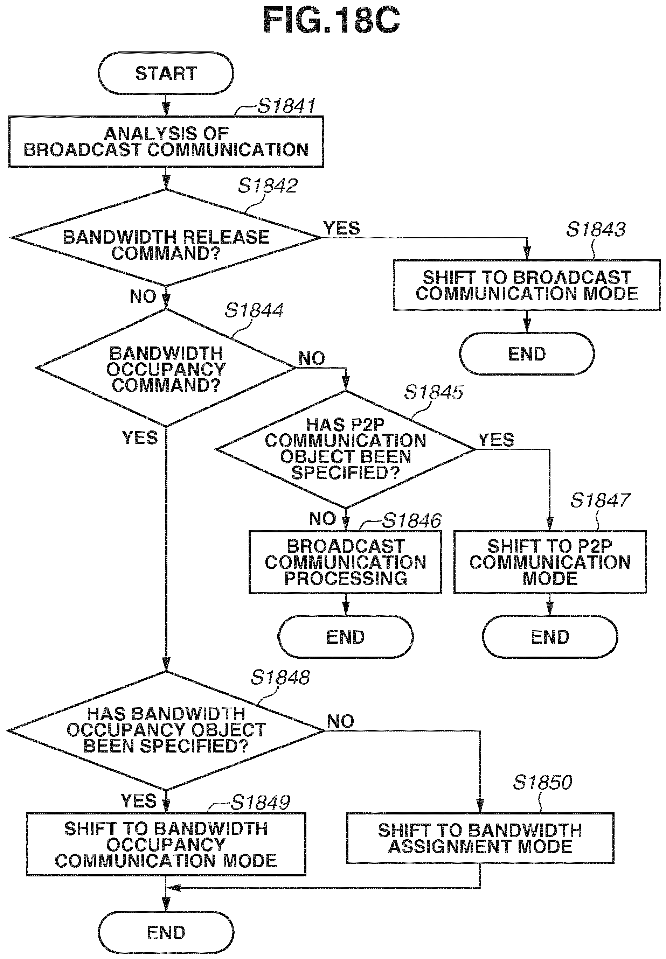

Next, the firmware update processing of the adapter 300 by the smartphone 2000 via the camera body 200 described above will be described with reference to the flowchart in Fig. 18. A part of or the entire processing performed by the smartphone 2000 may be executed via the application of the control unit 2010.

Fig. 18A illustrates processing performed by the camera microcomputer 205 according to the present exemplary embodiment. In step S1801, power is supplied to the camera body 200 in response to the user operation. Then, the processing proceeds to step S1802 and step S1803.

In step S1802, the camera microcomputer 205 transmits the transmission request of the lens attribute information to the lens microcomputer 111 through the second communication. Then, the camera microcomputer 205 receives the lens attribute information transmitted from the lens microcomputer 111 in response to the transmission request. The communication performed in step S1802 is also called initial communication. The identification information and the like for identifying the interchangeable lens 100 is included in the lens attribute information.

In step S1803, the camera microcomputer 205 transmits the transmission request of the first accessory attribute information to the adapter microcomputer 302 through the first communication. Then, the camera microcomputer 205 receives the first accessory attribute information from each accessory mounted on the camera body 200 and capable of communication through the first communication, as the response to the transmission request. The communication performed in step S1803 is also called initial communication. The identification information and the like for identifying the appropriate accessories is included in the first accessory attribute information. In the present exemplary embodiment, the adapter 300 can perform communication at least through the first communication, and the camera microcomputer 205 receives the accessory attribute information of the adapter 300 in step S1803. The first accessory attribute information of the adaptor 300 includes the first identification information, which is adapter identification information. The camera microcomputer 205 according to the present exemplary embodiment specifies the interchangeable lens 100 or the adapter 300 by the broadcast communication mode, which is an example of the first communication mode, and acquires the accessory identification information by the P2P communication mode, which is an example of the second communication mode. The communication of step S1803 is executed by performing this processing for each accessory (in the present exemplary embodiment, the interchangeable lens 100 or the adapter 300).

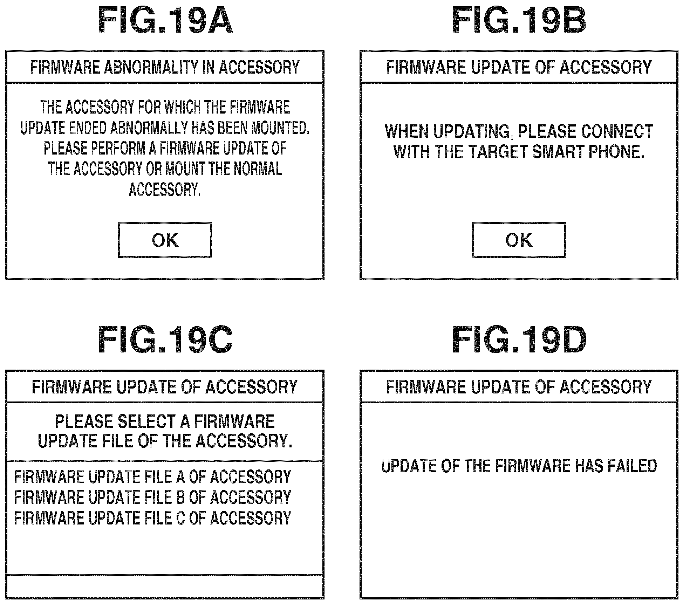

Further, at this time, when the operation state (normal/safe mode) included in the first adapter attribute information is in the safe mode, the camera microcomputer 205 performs, for example, the display as illustrated in Fig. 19A on the display unit 206, and makes a request, to the user, to update the firmware of the adapter 300 or mount another accessory. Furthermore, at this time, when the firmware update device information included in the first adapter identification information indicates the smartphone 2000, the camera microcomputer 205 performs, for example, display as illustrated in Fig. 19B on the display unit 206, and requests the user to connect with the smartphone in order to update the firmware.

In step S1804, the camera microcomputer 205 determines whether to connect with the smartphone 2000 via the communication unit 209. The determination method is similar to that described in step S1504, and thus, a description thereof is omitted. When it is determined to connect with the smartphone 2000 (YES in step S1804), the processing proceeds to step S1805. When it is determined not to connect with the smartphone 2000 (NO in step S1804), the processing proceeds to step S1814.

Further, at this time, when the firmware update of the adapter 300 is to be executed on the setting menu of the camera, if the firmware update device information included in the first adapter identification information indicates the smartphone 2000, the camera microcomputer 205 performs, for example, display as illustrated in Fig. 19B on the display unit 206, and requests the user to connect with the smartphone 2000 in order to update the firmware.

In step S1805, the camera microcomputer 205 establishes the connection with the smartphone 2000 via the communication unit 209. Then, the processing proceeds to step S1806.

In step S1806, the camera microcomputer 205 transmits the first accessory attribute information to the smartphone, and the processing proceeds to step S1807.

In step S1807, if a smartphone-accessory communication request is received from the smartphone 2000, the camera microcomputer 205 controls the first communication so that the communication (hereinafter, also referred to as smartphone-accessory communication) between the smartphone 2000 and the adapter 300 via the camera body 200 is executed based on the request content and the command compliance information included in the first adapter attribute information. Then, the processing proceeds to step S1808. In the present exemplary embodiment, the smartphone-accessory communication is performed through the broadcast communication or P2P communication. In the present exemplary embodiment, the second adapter attribute information is acquired in this step, but it is not limited thereto. Further, if necessary, the camera microcomputer 205 transmits, to the smartphone 2000, the received data and the communication results such as the generation of a communication abnormality.

In step S1808, the camera microcomputer 205 determines whether to disconnect the connection between the camera body 200 and the smartphone 2000. When the camera microcomputer 205 determines to disconnect the connection (YES in step S1808), disconnection processing with the smartphone is performed, and the processing proceeds to step S1814. When the camera microcomputer 205 determines not to disconnect the connection (NO in step S1808), the processing proceeds to step S1809.

In step S1809, the camera microcomputer 205 determines whether to specify the adapter 300 from the smartphone 2000 to make the first communication as the bandwidth occupancy. If it is determined that the bandwidth occupancy is made (YES in step S1809), the processing proceeds to step S1810, and if no bandwidth occupancy is made (NO in step S1809), the processing returns to step S1807. For example, the adapter 300 is identified as being able to communicate the bandwidth occupancy communication based on the first or the second adapter attribute information, and when the bandwidth occupancy request is made from the smartphone 2000, the camera microcomputer 205 determines that the bandwidth occupancy is to be made. Further, in the present exemplary embodiment, when updating the firmware of the adapter 300 from the smartphone 2000, the bandwidth occupancy request is performed from the smartphone 2000 to the camera microcomputer 205, but this is not limited thereto. The bandwidth occupancy request may be made even in other use applications.

In step S1810, the camera microcomputer 205 transmits the bandwidth occupancy command specifying the adapter microcomputer 302 through the broadcast communication. Then, the processing proceeds to step S1811. The bandwidth occupancy command is an example of the first command. In this way, the adapter microcomputer 302 shifts to the bandwidth occupancy communication mode, and accessories other than the adapter 300 shift to the bandwidth transfer mode. Thereafter, the camera body 200 and the adapter microcomputer 302 can perform the one-to-one communication (hereinafter, smartphone-accessory occupancy communication) based on the protocol different from the broadcast communication and the P2P communication.

In step S1811, if a smartphone-accessory occupancy communication request is received from the smartphone 2000, the camera microcomputer 205 communicates the data based on the request content to the adapter microcomputer 302 through the bandwidth occupancy communication, and then the processing proceeds to step S1812. Further, if necessary, the camera microcomputer 205 transmits the received data and the communication results such as generation of a communication abnormality to the smartphone 2000. In the present exemplary embodiment, the request data is the adapter firmware update data, but the data for communicating in the third communication mode is not limited thereto.

In step S1812, the camera microcomputer 205 determines whether a band release request of the smartphone-accessory communication specifying the adapter 300 from the smartphone 2000 is received. If a band release request is received (YES in step S1812), the processing proceeds to step S1813. If no band release request is received (NO in step S1812), the processing returns to step S1811 to continue the smartphone-accessory occupancy communication. In the present exemplary embodiment, when the firmware update of the adapter 300 from the smartphone 2000 is completed, a band release request is performed from the smartphone 2000 to the camera microcomputer 205, but it is not limited thereto, and the band release request may be made under other conditions.

In step S1813, each of the accessories return to the broadcast communication mode by the camera microcomputer 205 transmitting the band release command through the broadcast communication. When the band release processing is completed, the processing returns to step S1807. The band release command is an example of the second command.

In step S1814, the camera microcomputer 205 executes routine processing such as the processing of the first communication other than the smartphone-adapter communication, and image capturing by the camera body 200. Then, the processing proceeds to step S1804.

Fig. 18B illustrates processing by the smartphone 2000 according to the present exemplary embodiment. In step S1821, the smartphone 2000 is connected with the cameras body 200 due to the user operation or the like. Then, the processing proceeds to step S1822.

In step S1822, the smartphone 2000 receives the first accessory attribute information transmitted from the camera microcomputer 205 in step S1806, and the processing proceeds to step S1823.

In step S1823, in order to obtain the second adapter attribute information of the adapter 300, the smartphone 2000 issues, to the camera microcomputer 205, an acquisition request to obtain the second adapter attribute information, and receives the second adapter attribute information from the camera microcomputer 205. Then, the processing proceeds to step S1824. In the present exemplary embodiment, the second adapter attribute information is obtained through the smartphone-accessory communication, but it is not limited thereto. For example, the second adapter attribute information may be obtained through the smartphone-accessory occupancy communication.

In step S1824, the smartphone 2000 determines whether to disconnect the connection between the camera body 200 and the smartphone 2000. When the smartphone 2000 determines to disconnect the connection (YES in step S1824), the connection disconnection processing with the camera body 20 is performed, and the processing ends. When the smartphone 2000 determines not to disconnect the connection (NO in step S1824), the processing proceeds to step S1825.

In step S1825, the smartphone 2000 determines whether to update the firmware of the adapter microcomputer 302. When the firmware update is performed (YES in step S1825), the processing proceeds to step S1827. When the firmware update is not performed (NO in step S1825), the processing proceeds to step S1826. As an example in which the firmware update is performed, when a firmware update of the adapter microcomputer 302 is possible from the smartphone 2000 based on the firmware update device information included in the first or the second adapter identification information and the bandwidth occupancy communication is possible, the smartphone 2000 displays on the display unit 2060 a display to prompt the selection of a firmware update file that can be transmitted to the adapter 300 as illustrated in Fig. 19C, by a user operation of the smartphone 2000 requesting the firmware update of the adapter 300,. When the user performs the selection of the firmware update file, the update of the firmware starts. As another example, when the operation state (normal/safe mode) included in the first adapter attribute information indicates the safe mode, the smartphone 2000 performs the display as illustrated in Fig. 19A on the display unit 2060, and requests the user to update the firmware of the adapter 300 or to mount another accessory. At this time, the operation state may be included in the second adapter attribute information. Further, the example to update the firmware is not limited thereto, and for example, the user may be prompted to update the firmware based on the firmware version information of the adapter included in the first or the second adapter attribute information. Alternatively, it may be determined to execute the firmware update based on the camera state received from the camera microcomputer 205. For example, when the remaining charge in the camera battery is low, there is a possibility that the firmware update will fail on the way, so that the firmware update may be prohibited.

In step S1826, in order to obtain the adapter information (unique information or state information) of the adapter 300 as needed based on the first or the second adapter attribute information, the smartphone 2000 issues, to the camera microcomputer 205, an acquisition request for the second adapter attribute information, receives the adapter information from the camera microcomputer 205. Then the processing proceeds to step S1824. In the present exemplary embodiment, the adapter information is obtained through the smartphone-accessory communication, but it is not limited thereto. For example, the adapter information may be obtained by the smartphone-accessory occupancy communication.

In step S1827, when the smartphone 2000 requests the camera microcomputer 205 to transmit the bandwidth occupancy command specifying the adapter 300, and receives a notification that the camera microcomputer 205 shifts to the smartphone-accessory occupancy communication, the processing proceeds to step S1828. Further, at this time, the camera microcomputer 205 may be requested to limit the function of the camera body 200. For example, the power OFF button is invalidated so as not to interrupt the first communication during the firmware update, or image capturing may be prohibited in a case where the adapter 300 has an optical member, but it is not limited thereto. For example, when the adapter 300 does not have an optical member, if the lens 100 can be controlled through the second communication, image capturing may be permitted.

In step S1828, when the smartphone 2000 requests the camera microcomputer 205 to transmit the adapter firmware update data to the adapter 300, and receives the notification of the communication result from the camera microcomputer 205, the processing proceeds to step S1829.

In step S1829, the smartphone 2000 determines whether to continue the transmission of the adapter firmware update data. If the transmission is to continue (YES in step S1829), the processing returns to step S1828. If the transmission is not to continue (NO in step S1829), the processing proceeds to step S1830. At this time, normally, when all of the adapter firmware update data has been transmitted, the transmission ends, but it is not limited thereto. For example, the transmission may end when the firmware update failure is detected. Examples of the firmware update failure include cases in which a communication abnormality of the first communication is notified from the camera microcomputer 205, and in which the abnormality is detected in the connection between the smartphone 2000 and the camera body 200. Further, at this time, the smartphone 2000 may notify the user that the firmware update has failed on the display unit 2060 as illustrated in Fig. 19D. By the adapter 300 that has failed the firmware update as described above operating in the safe mode when mounted on the camera body 200, and the operation state included in the first or the second adapter attribute information being set in the safe mode, the firmware update can be prompted to the camera microcomputer 205 or the smartphone 2000.

In step S1830, when the smartphone 2000 requests the camera microcomputer 205 to transmit the band release command, and receives a notification from the camera microcomputer 205 that it has shifted to the smartphone-accessory communication, the processing proceeds to step S1824.

Fig. 18C illustrates processing by the adapter microcomputer 302 conforming to the band occupancy command and the band release command in the present exemplary embodiment. If a broadcast communication is received through the first communication, the processing of this flowchart starts.

In step S1841, the adapter microcomputer 302 analyzes the received data through the broadcast communication, and then the processing proceeds to step S1842.

In step S1842, the adapter microcomputer 302 determines whether the received data is a band release command, and if it is a band release command (YES in step S1842), the processing proceeds to step S1843, and otherwise (NO in step S1842), the processing proceeds to step S1844.

In step S1843, the adapter microcomputer 302 shifts the communication mode of the first communication to the broadcast communication mode if the communication mode is the bandwidth occupancy communication mode or the bandwidth transfer mode, and ends the processing.

In step S1844, the adapter microcomputer 302 determines whether the received data is a bandwidth occupancy command, and if it is a bandwidth occupancy command (YES in step S1844), the processing proceeds to step S1848. Otherwise (NO in step S1844), the processing proceeds to step S1845.

In step S1845, the adapter microcomputer 302 determines whether the received data is the P2P communication request specifying the adapter microcomputer 302, and if this is the case (YES in step S1845), the processing proceeds to step S1847. Otherwise (NO in step S1845), the processing proceeds to step S1846.

In step S1846, the adapter microcomputer 302 executes the processing based on the received data, and ends the processing. Further, if it is a P2P communication request to another accessory, the adapter microcomputer 302 is controlled so as not to notify the communication request until the P2P communication with the other accessory ends.

In step S1847, the adapter microcomputer 302 shifts the communication mode of the first communication to the P2P communication mode, and ends the processing.

In step S1848, the adapter microcomputer 302 determines whether the received data, which is the bandwidth occupancy command, specifies the adapter microcomputer 302, and when it is specified as the bandwidth occupancy target (YES in step S1848), the processing proceeds to step S1849. Otherwise (NO in step S1848), the adapter microcomputer 302 determines that another accessory is specified as the bandwidth occupancy target, and the processing proceeds to step S1850.

In step S1849, the adapter microcomputer 302 shifts the communication mode of the first communication to the bandwidth occupancy communication mode, and the processing ends.

In step S1850, the adapter microcomputer 302 shifts the communication mode of the first communication to the bandwidth transfer mode, and the processing ends.

According to the present exemplary embodiment, when updating the firmware of the adapter 300 by the smartphone 2000 via the camera body 200, by communicating with the firmware update data of the adapter 300 in the third communication mode, it is possible to normally and rapidly perform the firmware update processing in the first communication with which one-to-many communication is possible.

Next, a sixth exemplary embodiment will be described.

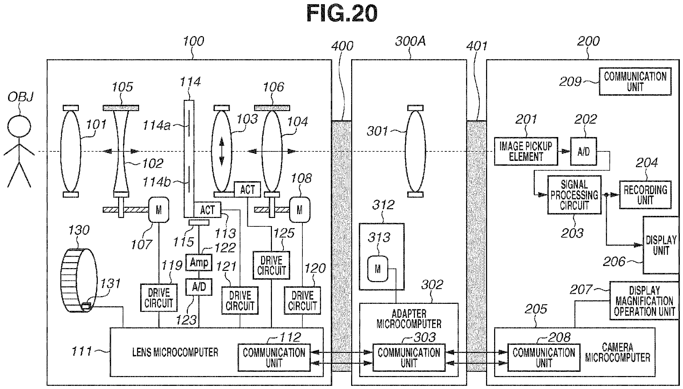

The configuration of the camera system according to the present exemplary embodiment is illustrated in Fig. 20. A camera system including the camera body 200, the interchangeable lens 100, and an adapter 300A according to the present exemplary embodiment is illustrated. In order to implement the drive control of a universal head drive motor 313 by using the smartphone 2000 in the present exemplary embodiment, the driving communication processing performed between the camera microcomputer 205, the lens microcomputer 111, and the adapter microcomputer 302 will be described. In the present exemplary embodiment, the case where the interchangeable lens 100 is connected via the one adapter 300A with the camera body 200 as illustrated in Fig. 1 and Fig. 2A will be described as an example.

In this example, the communication from the smartphone 2000 is received by the communication unit 209, and the broadcast communication, the P2P communication, and the bandwidth occupancy communication are performed between the camera microcomputer 205, the lens microcomputer 111, and the adapter microcomputer 302 via the signal line CS and the signal line DATA. The adapter microcomputer 302 receives universal head adapter drive request information, which will be described below, from the camera microcomputer 205, and the adapter microcomputer 302 controls the driving of the universal head drive motor 313 in the adapter 300A.

In the present exemplary embodiment, information indicating whether the interchangeable lens 100 and the adapter 300 conforms to the bandwidth occupancy communication is shared between the camera body 200, the interchangeable lens 100, and the adapter 300A. The bandwidth occupancy communication will be described below.

<Bandwidth Occupancy Communication (First Communication)>

In the first communication, the bandwidth occupancy communication performed between the camera body 200, the interchangeable lens 100, and the adapter 300 will be described. The bandwidth occupancy communication is one-to-one communication (individual communication) in which the camera body 200 as the communication master specifies one communication partner (specified accessory apparatus) between the interchangeable lens 100 and the adapter 300 (communication slaves), and the data is transmitted to and received from only the specified communication slave.

The bandwidth occupancy communication is performed using the signal line DATA and the signal line CS. Further, the communication mode in which the bandwidth occupancy communication is performed is referred to as the bandwidth occupancy communication mode. The bandwidth occupancy communication and the P2P communication are common in the point that a communication slave other than the specified accessory apparatus does not output a signal to the signal line CS and the signal line DATA. On the one hand, the meaning of the data line CS is different in the bandwidth occupancy communication mode and the P2P mode. Further, the bandwidth occupancy communication mode is communication in which it is presumed that the maximum number of bytes of data transmitted and received between the camera body 200, which is the communication masters, and the specified accessory apparatus is known. Especially, a suitable communication can be performed when the types of data to be communicated is fewer. For example, the maximum number of bytes of data to be transmitted and received can be recognized before starting the bandwidth occupancy communication mode by being included in the first or the second adapter attribute information. Furthermore, the meaning of the data (including commands) in the bandwidth occupancy communication mode and the P2P mode may be completely changed.

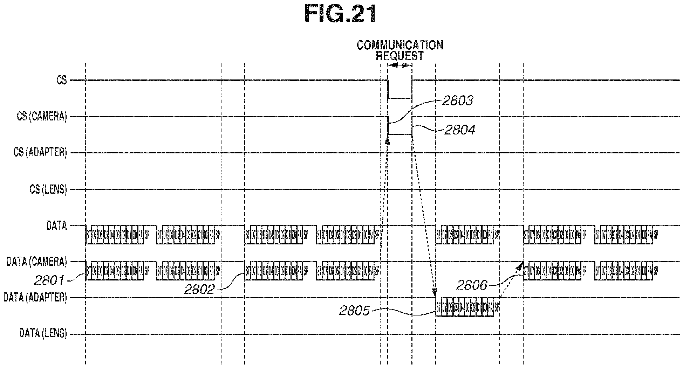

Fig. 21 illustrates, as an example, signal waveforms of the bandwidth occupancy communication exchanged between the camera microcomputer 205 and the adapter microcomputer 302 specified as the communication partner. In the present exemplary embodiment, assume that both of the camera microcomputer 205 and the adapter microcomputer 302 recognize, by previous communications and the like, that the maximum number of bytes of data transmitted by the camera microcomputer 205 to the adapter microcomputer 302 is two bytes, and the maximum number of bytes of the data received by the camera microcomputer 205 from the adapter microcomputer 302 is one byte. In the present exemplary embodiment, a case will be described as an example where a two byte control request data is transmitted from the camera microcomputer 205 to the adapter microcomputer 302, a communication processing that does not require a response from the adapter in response thereto, and the transmission of two byte data from the camera microcomputer 205 to the adapter microcomputer 302 are performed, and a one byte response from the adapter in response thereto is obtained.

First, the camera microcomputer 205, which is the communication master, outputs two bytes of data to be transmitted continuously to the signal line DATA at a timing 2801. Since the adapter microcomputer 302 recognizes in advance that the maximum number of bytes of data to be transmitted and received in the bandwidth occupancy communication is two bytes, the adapter microcomputer 302 can respond to the control request requested from the smartphone 2000 at a timing at which the two bytes of information has been received. Meanwhile, the camera microcomputer 205 does not need to obtain the received data from the adapter microcomputer 302 in the communication, and the Low output is not made to the signal line CS. Next, the camera microcomputer 205 outputs two bytes of data to be subsequently transmitted at an arbitrary timing to the signal line DATA continuously at a timing 2802. At this time, if there is a restriction on the time until the data output is started, the communication and the like is performed in advance, and the transmission timing needs to be controlled after the recognition between the camera microcomputer 205 and the adapter microcomputer 302 matches.

As described above, this communication processing is a case where it is necessary to receive one byte of data from the adapter microcomputer 302. Accordingly, the camera microcomputer 205 requests the adapter microcomputer 302 to transmit the data by providing the Low output to the signal line CS after ending the output until the stop bit SP at a timing 2803. Then, when the camera microcomputer 205 is ready to receive data, it cancels the Low output to the signal line CS at a timing 2804. After the adapter microcomputer 302 detects the Low signal input from the signal line CS and confirms that the signal level of the signal line CS is retuned to Hi, the data to be transmitted is output to the signal line DATA at a timing 2805. In the bandwidth occupancy communication, since the maximum number of bytes of data to be transmitted and received is recognized on both sides in advance, the camera microcomputer 205 analyzes the received data or transfers the data to the smartphone 2000 at a time point when one byte of data is input from the signal line DATA. In this way, the communication processing, in which the two byte control request data is transmitted from the camera microcomputer 205 to the adapter microcomputer 302 and which does not require a response from the adapter in response to the transmission, and then, the case where the transmission of two bytes of data from the camera microcomputer 205 to the adapter microcomputer 302 is performed and in which a one byte response is obtained from the adapter in response thereto, can be implemented. Then, a control request or a data acquisition request can be made from the camera microcomputer 205 to the adapter microcomputer 302 again through the same processing. In Fig. 21, at a timing 2806, an example is illustrated in which the two byte control request is communicated to the adapter microcomputer 302 following the processing up to the timing 2805.

The camera microcomputer 111, which is not specified as the communication partner of the bandwidth occupancy communication, does not output a signal to the signal line CS and the signal line DATA.

As described above, the signal transmitted through the signal line CS in the bandwidth occupancy communication functions as a notification signal indicating the data transmission request from the specified accessory apparatus.

<Control In Response to Operation of Smartphone>

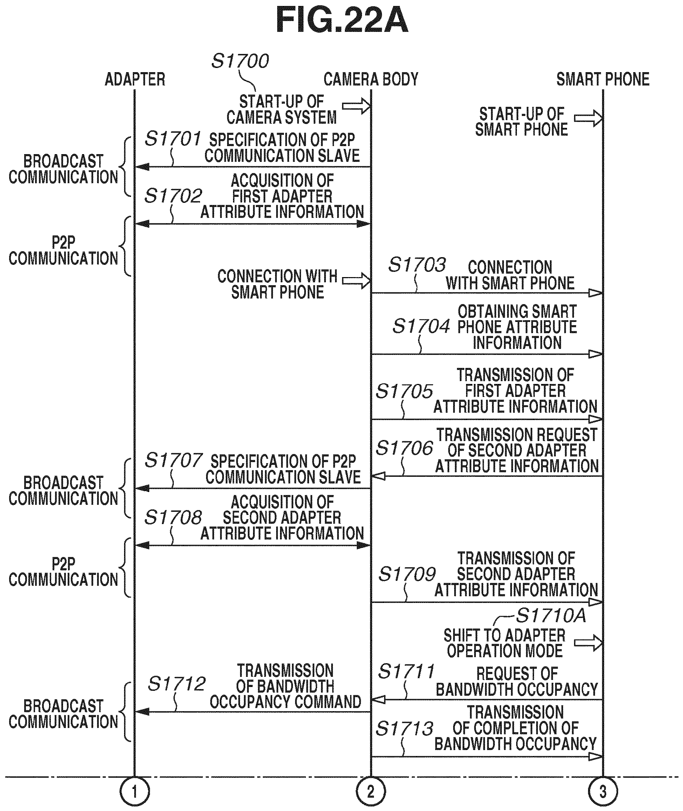

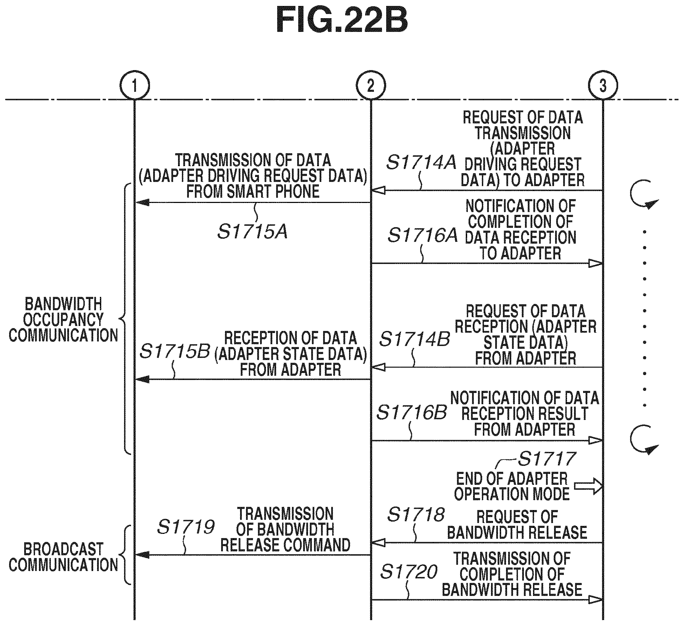

The drive control sequence of the universal head control motor 313 of the adapter 300A by the smartphone 2000 via the camera body 200 according to the present exemplary embodiment will be described with reference to Figs. 22A and 22B. A part of or entire processing performed by the smartphone 2000 may be executed via the application of the control unit 2010.

The description of the control made with reference to Figs 22A and 22B has a lot of similar portions to that described with reference to Figs. 17A and 17B. Thus, different portions therefrom and portions to be supplemented are described.

The second adapter information obtained in step S1708 and transmitted to the smartphone 2000 in step S1709 includes the name of the adapter 300A and the firmware version of the adapter 300A. The name of the adapter 300A can be used to determine, for example, whether the adapter is controllable from the smartphone 2000. The firmware version of the adapter 300A can be used to determine, for example, which kinds of communication methods and commands can be used when the smartphone 2000 controls the adapter 300A through the bandwidth occupancy communication. Furthermore, the maximum number of bytes of the transmitted and received data necessary for bandwidth occupation communication is also is desirably included in the second adapter information. Any of the above-described information is not necessarily included in the second adapter information, and may be included in the first adapter information.

Next, the processing when the drive control of the universal head drive motor 313 is started by the smartphone 2000 in step S1710A will be described.

In a similar manner to the firmware update of the adapter microcomputer, the smartphone 2000 requests the camera microcomputer 205 for transmitting the bandwidth occupancy command that specifies the adapter 300 in step S1711. In response, the camera microcomputer 205 transmits the bandwidth occupancy command that specifies the adapter 300A in the first communication mode in step S1712. In this way, the camera body 200 and the adapter 300A shift to the third communication mode, and the one-to-one communication is started. Further, at this time, accessories other than the adapter 300A shift to the bandwidth transfer mode is characterized by stopping the communication request until the bandwidth release command is received through the broadcast communication, and ignoring communication other than the bandwidth release command. Then, by the camera microcomputer 205 notifying the smartphone 2000 that the communication mode is shifted to the bandwidth occupancy communication mode in step S1713, the smartphone 2000 starts the transmission processing of the drive control data of the universal head drive motor 313.

Next, the smartphone 2000 notifies the data to be transmitted through the bandwidth occupancy communication, the signal line CS control information about whether to operate the signal line CS, and the number of bytes of data to be received.

A case, in which data to be transmitted from the smartphone 2000, and information that the number of bytes of the received data is 0 (none) to be transmitted by not controlling the signal line CS, are transmitted to the camera microcomputer 205 in step S1714A, will be described. In response, in step S1715A, the camera microcomputer 205 transmits the above-described data to the adapter microcomputer 302 through the bandwidth occupancy communication. In this case, the camera microcomputer 205 has no data to be received from the adapter microcomputer 302, and thus, notifies the adapter of the completion of the data transmission at the time point that the transmission has been completed in step S1716A.

Next, a case, in which there is no data to be transmitted from the smartphone 2000 (nothing is transmitted) and the signal line CS is controlled to transmit, to the camera microcomputer 205, information indicating that the received data has one byte in step S1714B, will be described. In response thereto, in step 1715B, the camera microcomputer 205 outputs Low through the signal line CS, and then returns to High, receives data of one byte, and, in step S1716B, notifies the smartphone 2000 of the communication result.

Furthermore, in step 1714A, a case in when data to be transmitted from the smartphone 2000, and information indicating that the received data to be transmitted by controlling the signal line CS has one byte are transmitted to the camera microcomputer 205, the data is processed in the order of the above-described steps S1715A, S1716A, S1715B, and S1716B. However, depending on the processing sequence by the camera microcomputer 205, the order of steps S1716A and S1715B may be switched.

The above-described steps S1714A, S1715A, S1716A, S1714B, S1715B, and S1716B are repeatedly executed until the adapter operation mode is ended by the smartphone 2000 in step S1717. The trigger to end the adapter operation mode includes a case in which a procedure for ending the mode is performed with respect to the smartphone 2000, and a case in which an abnormality occurs in the communication between the camera microcomputer 205 and the adapter microcomputer 302 and the camera microcomputer 205 notifies the smartphone 2000 of the fact (not illustrated).

When the adapter operation mode is ended by the smartphone 2000, the smartphone 2000 requests the camera microcomputer 205 for the band release command in order to release the bandwidth occupancy communication in step S1718. In response, in step S1719, the camera microcomputer 205 transmits the band release command through the broadcast communication to each communication slave. In this way, the bandwidth occupancy communication mode of the camera microcomputer 205 and the adapter microcomputer 302, and the bandwidth transfer mode of the accessories other than the adapter 300A are released, and the communication mode shifts to the routine broadcast communication mode. Then, by the camera microcomputer 205 notifying the smartphone 2000 that the bandwidth occupancy communication mode has ended in step S1720, the smartphone 2000 recognizes that the adapter operation mode ended normally.

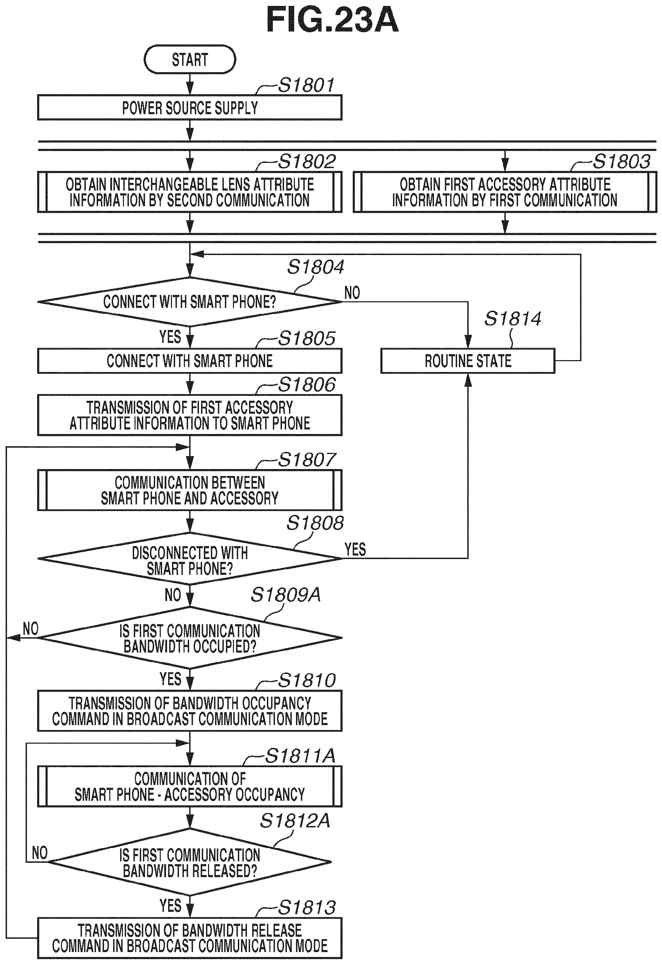

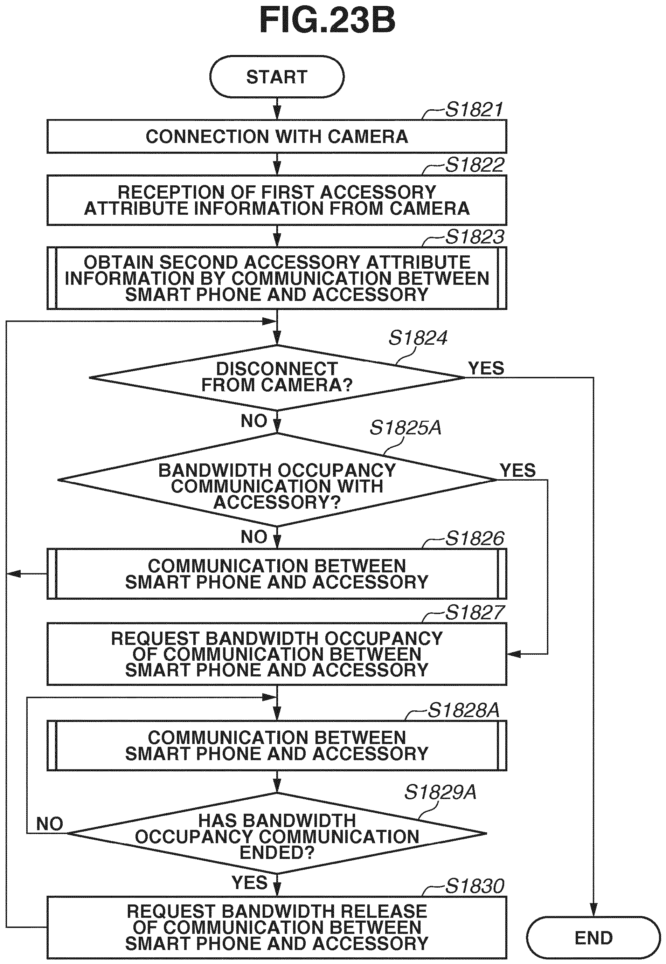

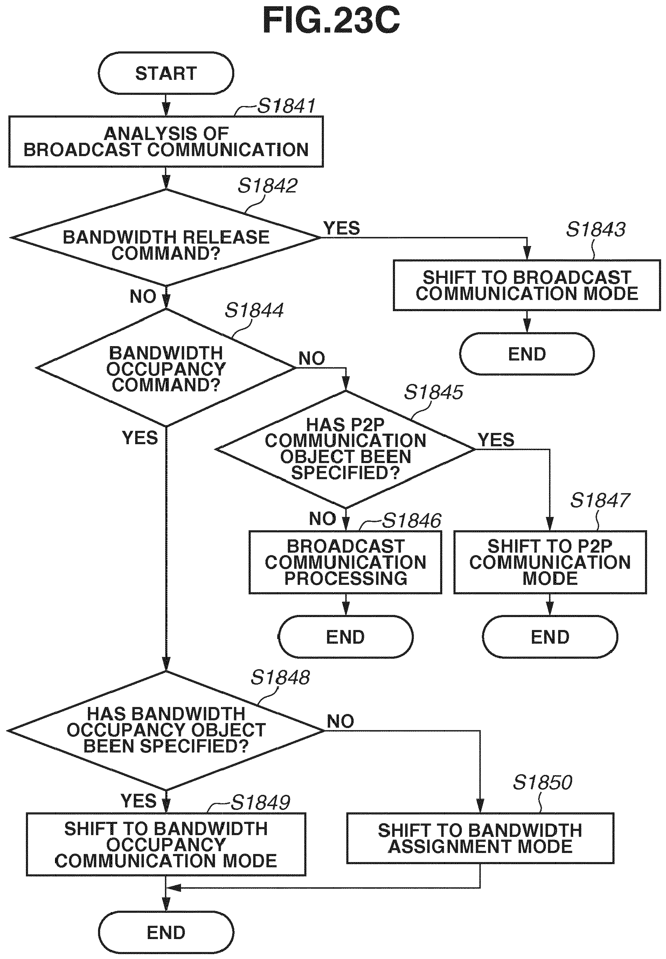

Next, the drive control communication processing of the universal head drive motor 313 of the adapter 300A by the smartphone 2000 via the camera body 200 described above will be described with reference to flowcharts in Figs. 23A, 23B, and 23C. Figs. 23A, 23B, and 23C also have numerous portions similar to those in Figs. 22A and 22B, and thus, only different portions are described.

Fig. 23A illustrates processing by the camera microcomputer 205 according to the present exemplary embodiment. Fig. 18A is different from Fig. 23A in that Fig. 18A includes the adapter 300, and Fig. 23A includes the adapter 300A, but the flow of the processing is not different from each other. The differences in Fig. 23A and Fig. 18A are described below.

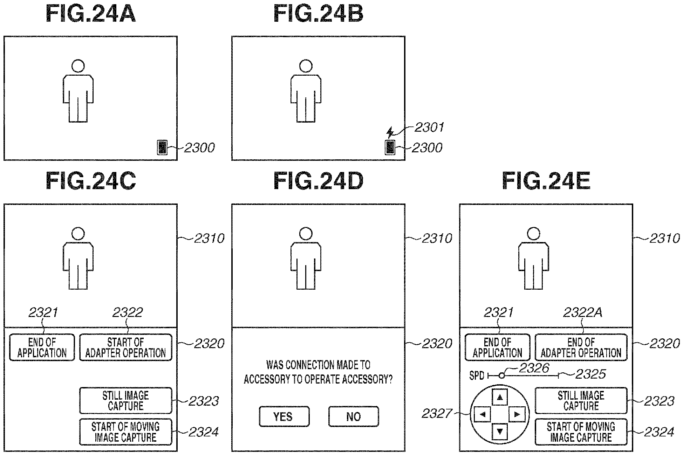

In step S1806, the camera microcomputer 205 transmits the first accessory attribute information to the smartphone, and the processing proceeds to step S1807. Triggered by the completion of this processing, a screen illustrated in Fig. 24A is displayed on the display unit 206. For example, by displaying an image such as a camera connection icon 2300, the user can visually confirm that the camera body 200 and the smartphone 2000 are connected.

In step S1809A, the camera microcomputer 205 determines whether a bandwidth occupancy request of the first communication specifying the adapter 300 is received from the smartphone 2000. If a bandwidth occupancy request is received (YES in step S1809A), the processing proceeds to step S1810. If no bandwidth occupancy request is received (NO in step S1809A), the processing proceeds to step S1807. In the present exemplary embodiment, when the universal head drive motor 313 of the adapter 300A is controlled to be driven from the smartphone 2000, the bandwidth occupancy request is executed to the camera microcomputer 205 from the smartphone 2000.

In step S1810, the camera microcomputer 205 transmits the bandwidth occupancy command specifying the adapter microcomputer 302 through the broadcast communication, and the processing proceeds to step S1811A. The bandwidth occupancy command is an example of the first command. With this command, the adapter microcomputer 302 shifts to the bandwidth occupancy communication mode, and accessories other than the adapter 300 shifts to the bandwidth transfer mode. Thereafter, the camera body 200 and the adapter microcomputer 302 can perform the one-to-one communication (smartphone-accessory occupancy communication) by a protocol different from the broadcast communication and the P2P communication. Using the completion of this processing as the trigger, a screen illustrated in Fig. 24B is displayed on the display unit 206. For example, by displaying a bandwidth occupancy communication mode icon 2301 in addition to the above-described camera connection icon 2300, the user can visually confirm that the universal head drive motor 313 is controlled by the operation of the smartphone 2000.

In step S1811A, if smartphone-accessory occupancy communication request is received from the smartphone 2000, the camera microcomputer 205 communicates the data to the adapter microcomputer 302 through the bandwidth occupancy communication based on the request contents, and the processing proceeds to step S1812A. Further, if necessary, the camera microcomputer 205 transmits the received data and the communication results such as the occurrence of a communication abnormality to the smartphone 2000. In the present exemplary embodiment, the data requested to be transmitted from the camera microcomputer 205 to the adapter microcomputer 302 is the drive control data of the universal head drive motor 313, and the data requested to be received is the adapter state information, but the data communicating in the third communication mode is not limited thereto.

In step S1812A, the camera microcomputer 205 determines whether a request of the band release of the smartphone-accessory communication specifying the adapter 300A is received from the smartphone 2000. If a band release request is received (YES in step S1812A), the processing proceeds to step S1813. If no band release request is received (NO in step S1812A), the processing proceeds to step S1811A to continue the smartphone-accessory occupancy communication. In the present exemplary embodiment, when the drive control of the universal head drive motor 313 of the adapter 300A from the smartphone 2000 is completed, the band release request is made from the smartphone 2000 to the camera microcomputer 205. However, it is not limited thereto, and the band release request may be made under other conditions.

Fig. 23B illustrates processing by the smartphone 2000 according to the present exemplary embodiment. Since the processing flow has many portions similar to those in Fig. 18A, the different portions in Fig. 23B and Fig. 18A will be described below.

In step S1822, the smartphone 2000 receives the first accessory attribute information transmitted from the camera microcomputer 205 in step S1806, and the processing proceeds to step S1823. Using completion of this processing as the trigger, a screen illustrated in Fig. 24C is displayed on the display unit 2060. At this time, in the display example, the display unit 2060 is configured by an image capturing image display unit 2310 and an operation unit 2320. The display unit 2310 may or may not perform the display in the similar manner to the display unit 206. The operation unit 2320 includes members to be operated when the user captures an image. In step S1824, the connection of the smartphone and the camera can be disconnected by pressing an operation member 2321. By pressing an operation member 2322, the screen shifts to a confirmation screen in Fig. 24D to confirm whether to shift to bandwidth occupancy communication in step S1825A. Image capturing of a still image can be performed by pressing an operation member 2323. Similarly, the image capturing of a moving image can be started by pressing an operation member 2324.

In step S1825A, the smartphone 2000 determines whether to perform the bandwidth occupancy communication with the adapter microcomputer 302. When the bandwidth occupancy communication is performed (YES in step S1825A), the processing proceeds to step S1827. When the bandwidth occupancy communication is not performed (NO in step S1825A), the processing proceeds to step S1826. When executing this processing, the screen displayed on the display unit 2060 is a screen illustrated in Fig. 24D. On this screen, if "Yes" is pressed, the screen shifts to a screen illustrated in Fig. 24E (corresponding to YES in step S1825A), and if "No" is pressed, the processing proceeds to Fig. 24C (corresponding to NO in step S1825A).

In step S1827, when the smartphone 2000 requested the camera microcomputer 205 to transmit the bandwidth occupancy command transmission specifying the adapter 300, and received a notification from the camera microcomputer 205 that it changed to the smartphone-accessory occupancy communication, the processing proceeds to step S1828A. Further, triggered by this processing, the state in which the drive of the universal head drive motor 313 can be controlled from the smartphone 2000 is displayed on the display unit 2060. By pressing the operation member 2322A, the mode controlling the universal head drive motor 313 can be released in step S1829A. At this time, a confirmation screen as in Fig. 24D may be issued (not illustrated). A member 2325 is a member for changing the drive speed of the universal head drive motor 313. By sliding an operation member 2326 horizontally, the drive speed of the universal head drive motor 313 can be changed. By pressing the operation member 2327, the direction of the camera can be changed with the speed of the operation member 2326 in the pressing direction (YAW/PITCH). In this case, it is assumed that the direction of the camera is changed while the operation member 2327 is pressed, but it may be controlled so as to move the direction of the camera a certain amount each time it is pressed.

In step S1828A, the smartphone 2000 controls the camera microcomputer 205 to transmit the drive control data of the universal head drive motor 313 to the adapter 300A, and to receive the adapter state information. When the notification of the communication result is received from the camera microcomputer 205, the processing proceeds to step S1829A.

In step S1829A, the smartphone 2000 determines whether to continue the bandwidth occupancy communication with the adapter microcomputer 302. When the bandwidth occupancy communication is to be continued (YES in step S1829A), the processing proceeds to step S1828A, and when the bandwidth occupancy communication is not to be continued (NO in step S1829A), the processing proceeds to step S1830. Pressing the above-described operation member 2322A is the normal trigger, but, for example, a case in which an abnormality occurs in the communication between the smartphone 2000 and the camera body 200, or a case in which an abnormality occurs in the communication between the camera microcomputer 205 and the adapter microcomputer 302 can be a trigger. The above described examples are merely examples, and are not limited thereto.

Fig. 23C illustrates processing by the adapter microcomputer 302 according to the present exemplary embodiment. However, since the processing in Fig. 23C is exactly the same as in Fig. 18C, the description thereof is omitted.

<Switching Processing of Communication Mode and Specification Processing of Communication partner>

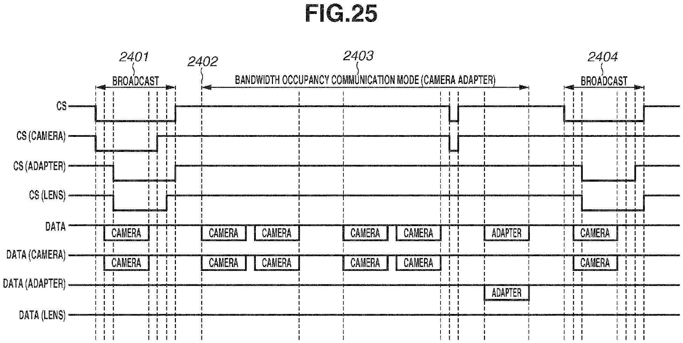

Next, the switching processing to the bandwidth occupancy communication through the broadcast communication will be described with reference to Fig. 25.

Fig. 25 illustrates signal waveforms in communication mode switching and the communication partner specification exchanged between the camera microcomputer 205, the lens microcomputer 111, and the adapter microcomputer 302. The specification of the communication partner of the bandwidth occupancy communication is performed through the broadcast communication. In the present exemplary embodiment, a case will be described as an example in which the adapter microcomputer 302 is specified from the camera microcomputer 205 as the bandwidth occupancy communication partner, and the bandwidth occupancy communication of two byte data (universal head drive request) and the bandwidth occupancy communication of one byte data (adapter state information) are executed from the camera microcomputer 205.

First, the camera microcomputer 205 serving as a communication master executes the broadcast communication according to the sequence illustrated in Fig. 4A at a timing 2401. Through this broadcast communication, slave specification data specifying a communication partner performing the communication with the camera microcomputer 205 in the subsequent bandwidth occupancy communication. For example, the identification information of the slave to be specified can be used as the slave specification data.

It is determined which of the lens microcomputer 111 and the adapter microcomputer 302, which are the communication slaves, is specified as a communication partner of the bandwidth occupancy communication based on the slave specification data received from the broadcast communication. According to the result of this determination, the communication mode between the camera microcomputer 205 and the specified communication slave is switched from the broadcast communication mode to the bandwidth occupancy communication mode at a timing 2402).

In this case, since the adapter microcomputer 302 is specified as the communication partner, the data is transmitted and received between the camera microcomputer 205 and the adapter microcomputer 302 according to the procedure described with reference to Fig. 21 in the subsequent bandwidth occupancy communication at a timing 2403). Here, two byte data is transmitted twice from the camera microcomputer 205 to the adapter microcomputer 302, and then, one byte data is transmitted from the adapter microcomputer 302 to the camera microcomputer 205.

If the bandwidth occupancy communication between the camera microcomputer 205 and the adapter microcomputer 302 ends, the camera microcomputer 205 transmits to the communication slave that the bandwidth occupancy communication ends through the broadcast communication again at a timing 2404. Further, in the similar manner to the first exemplary embodiment, if the camera microcomputer 205 specifies the communication partner (e.g., lens microcomputer 111) of the subsequent bandwidth occupancy communication to execute the broadcast communication by the procedure described with reference to Fig. 4A, the adapter microcomputer 302 ends the bandwidth occupancy communication in response to this broadcast communication. At the same time, the communication mode between the camera microcomputer 205 and the lens microcomputer 111 is switched to the bandwidth occupancy communication mode. In the similar manner to the first exemplary embodiment, when the broadcast communication is not executed, the bandwidth occupancy communication continues between the camera microcomputer 2005 and the adapter microcomputer 302.

As described above, it is possible to specify the communication partner of the bandwidth occupancy communication through the broadcast communication, and at the same time, to switch between the broadcast communication and the bandwidth occupancy communication.

<Communication Control Processing>

Next, the communication control processing performed between the camera microcomputer 205, the lens microcomputer 111, and the adapter microcomputer 302 will be described. Regarding the broadcast communication processing, the descriptions overlap with those described in Figs. 7A and 7B of the first exemplary embodiment, and thus, are omitted.

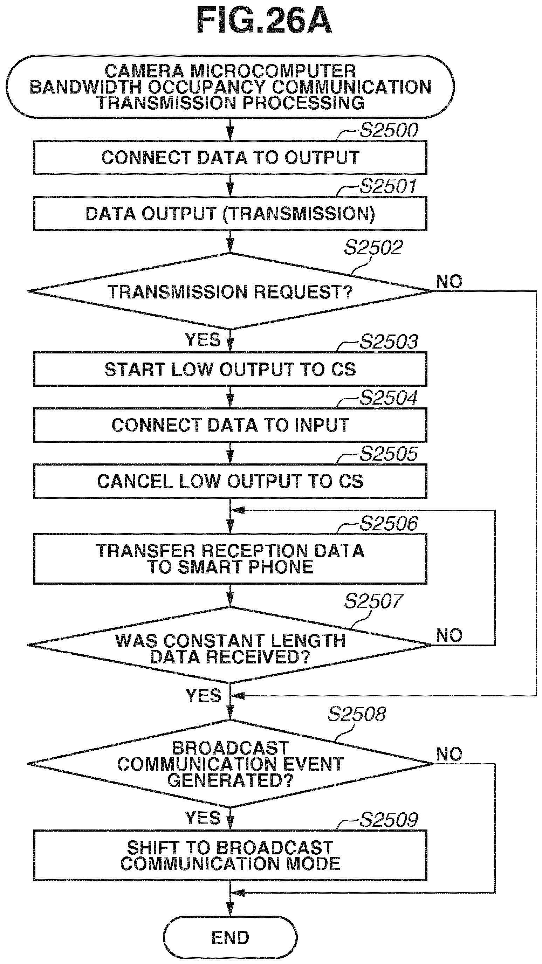

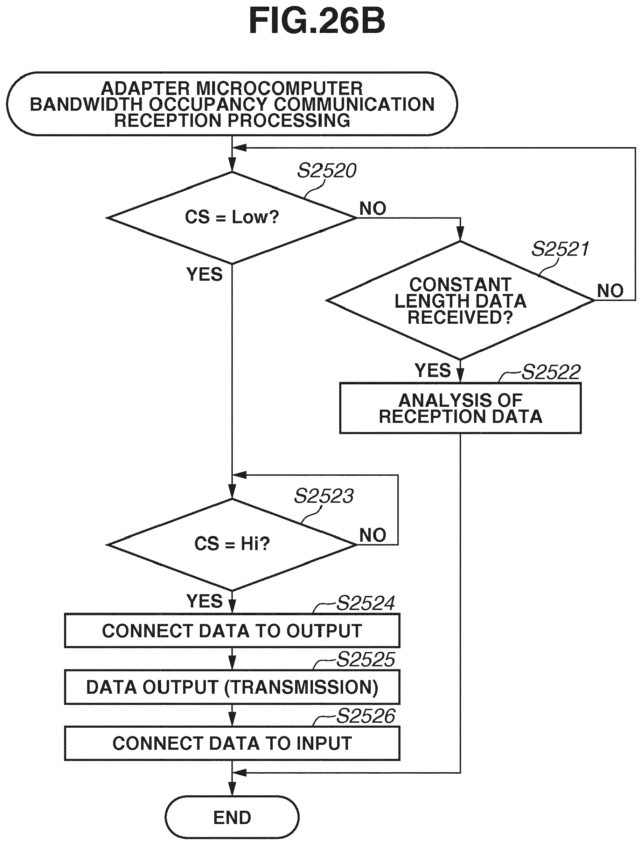

Next, processing in the bandwidth occupancy communication mode will be described with reference to flowcharts in Fig. 26A and Fig. 26B. Fig. 26A illustrates a second P2P transmission processing performed by the camera microcomputer 205, Fig. 26B illustrates a second P2P reception processing performed by the adapter microcomputer specified as the communication partner of the bandwidth occupancy communication by the camera microcomputer 205 as an example. When the lens microcomputer 111 is specified also as the communication partner of the bandwidth occupancy communication, the second P2P reception processing is performed in the similar manner to Fig. 26B.

If an event starting the bandwidth occupancy communication is generated, the camera microcomputer 205 operates the input/output switching switch 2082 in step S2500 to connect the signal line DATA to the data output, and performs the data transmission in step S2501. In this case, the event starting the bandwidth occupancy communication is, for example, a communication instruction from the smartphone 2000. In addition, the camera microcomputer 205 may spontaneously generate an event to start the bandwidth occupancy communication at a communication interval instructed by the smartphone 2000. When the transmission of all the data has been completed, the camera microcomputer 205 advances the processing to step S2502. The number of bytes of data to be transmitted is limited to a predetermined number of bytes based on the first or the second adapter attribute information. The above-described number of bytes of data to be transmitted does not necessarily need to be communicated directly between the camera microcomputer 205 and the adapter microcomputer 302, and, for example, the smartphone 2000 may determine the above-described predetermined number of bytes from the name and the firmware version of the adapter 300A to notify the camera of the determination result.

In step S2502, the camera microcomputer 205 determines whether data transmission request from the adapter microcomputer 302 is received from the smartphone 2000. If the camera microcomputer 205 receives a transmission request (YES in step S2502), the processing proceeds to step S2503, and if the camera microcomputer 205 does not receive a transmission request (NO in step S2502), the processing proceeds to step S2508. The above-described request does not have to occur after the transmission of all of the data is completed, and it is preferable to notify the camera microcomputer 205 from the smartphone 2000 at the same time as the event to start the bandwidth occupancy communication in which there is sufficient time until the determination in step S2502.

In step S2503, the camera microcomputer 205 starts providing the Low output to the signal line CS by turning ON (grounding) the ground switch 2081, and notifies the adapter microcomputer 302 that there is a transmission request from the adapter microcomputer 302 to the camera microcomputer 205. The adapter microcomputer 302 starts the processing of step S2523 to be described with reference to Fig. 26B by receiving this notification.

In step S2504, the camera microcomputer 205 connects the signal line DATA to the data output unit by operating the input/output switching switch 2082. Then, the processing proceeds to step S2505.

In step S2505, the camera microcomputer 205 cancels the Low output to the signal line CS by turning OFF (disconnecting) the ground switch 2081 in order to notify that the transmission data is ready to be received from the adapter microcomputer 302. then, the processing proceeds to step S2506.

In step S2506, the camera microcomputer 205 transfers the data received from the signal line DATA to the smartphone 2000. In this case, an exemplary embodiment in which the camera microcomputer 205 receives one byte of data is illustrated, but after switching the order of steps S2506 and S2507 and receiving predetermined-length data, the data may be transferred together to the smartphone 2000 (not illustrated).

In step S2507, the camera microcomputer 205 determines whether the predetermined-length data is received from the adapter microcomputer 302. At this time, the number of bytes of data to be received is limited to a predetermined number of bytes based on the first or the second adapter attribute information. The smartphone 2000 may determine the above-described predetermined number of bytes to notify the camera thereof in the similar manner to the above-described number of bytes of data to be transmitted. In step S2507, when the camera microcomputer 205 determines that the camera microcomputer 205 has received the predetermined-length data from the adapter microcomputer 302 (YES in step S2507), the processing proceeds to step S2508. Otherwise (NO in step S2507), the processing returns to step S2506.

In step S2508, the camera microcomputer 205 determines whether to start the broadcast communication by the subsequent communication, and when the broadcast communication is started (YES in step S2508), the processing proceeds to step S2508. When the bandwidth occupancy communication is continuously performed (NO in step S2508), the second P2P transmission processing ends with the bandwidth occupancy communication mode being maintained. The camera microcomputer 205 determines whether to start the broadcast communication by the subsequent communication based on the instructions from the smartphone 2000. Further, for example, the operation on the camera body 200 may determine whether to start the broadcast communication by the subsequent communication.

In step 2509, the camera microcomputer 205 shifts to the broadcast communication mode to end the second P2P transmission processing.

In step S2520 in Fig. 26B, the adapter microcomputer 302 determines whether the signal line CS is Low. When the signal line CS is Low (YES in step S2520), it is determined to be a data transmission request from the camera microcomputer 205, and the processing proceeds to step S2523. When the signal line CS is Hi (NO in step S2520), the processing proceeds to step S2521.

In step S2521, the adapter microcomputer 302 determines whether the predetermined length data is received. At this time, the number of bytes of data to be received is notified by the first or the second adapter attribute information, and is limited to a predetermined data length. If the predetermined length data is received (YES in step S2521), the processing proceeds to step S2522. If the predetermined length data is not received (NO in step S2521), the processing returns to step 520.

In step S2522, the adapter microcomputer 302 analyzes the received data, and ends the bandwidth occupancy communication reception processing.

In step S2523, the adapter microcomputer 302 stands by until the signal line CS becomes Hi, that is, until the processing in step S2505 is completed (NO in step S2523). If the signal line CS becomes Hi (YES in step S2523), the processing proceeds to step S2524.

In step S2524, the adapter microcomputer 302 connects the signal line DATA to the data output unit by operating the input/output switching switch 3032. Next, in step S2525, the adapter microcomputer 302 uses the signal line DATA to transmit the data, and if the transmission of all the data has been completed, the processing proceeds to step S2526. At this time, the number of bytes of data to be transmitted is limited to a predetermined length.

In step S2526, the adapter microcomputer 302 connects the signal line DATA to the data output unit by operating the input/output switching switch 3032, and the adapter microcomputer 302 ends the bandwidth occupancy communication reception processing.

Further, since the lens microcomputer 111 is not specified as the communication partner of the bandwidth occupancy communication, the broadcast communication reception processing (Fig. 7B) is executed without outputting signals to the signal line CS and signal line DATA.

With the above-described processing, the data transmission can be performed using the bandwidth occupancy communication from the camera microcomputer 205, which is the communication master, to the adapter microcomputer 302, which is the communication slave.

Now, a seventh exemplary embodiment will be described. In the sixth exemplary embodiment, since there is one type of data to be transmitted and received between the camera microcomputer 205 and the adapter microcomputer 302, the number of bytes of data to be transmitted and received is predetermined.

However, the types of the number of bytes of data to be transmitted from the camera microcomputer 205 may be more than one if the number of pieces of data to be transmitted from the camera microcomputer 205 is more than one (e.g., when the drive speed and the drive request amount of the universal head drive motor 313 are transmitted separately). In this case, for example, there is a case in which the number bytes of data transmitted from the camera microcomputer 205 to the adapter microcomputer 302 is one byte, a case of two bytes, and a case of three bytes. The adapter microcomputer 302 cannot distinguish the number of bytes of the data length of the currently transmitted data. Thus, the camera microcomputer 205 controls the signal line CS at a timing at which the transmission processing for which the data length to be communicated is less than the maximum data length (in this case, three bytes) in which the data length to be communicated is shared in advance, based on the length of data to be communicated from the smartphone 2000, between the smartphone 2000 and the adapter microcomputer 302 by the first or the second adapter attribute information, is completed. At this time, in the case of the maximum data length (in this case, three bytes) in which the first or the second adapter attribute information is shared in advance, it is not necessary to control the CS signal. This is because, when the camera microcomputer 205 transmits the maximum data length (in this case, three bytes) and the adapter microcomputer 302 received the transmission, the adapter microcomputer 302 grasps that the data transmission is not generated any more.

Hereinafter, the above-described communication method will be referred to as another example of the bandwidth occupancy communication.

<Switching Processing of Communication Mode and Specification Processing of Communication Partner>

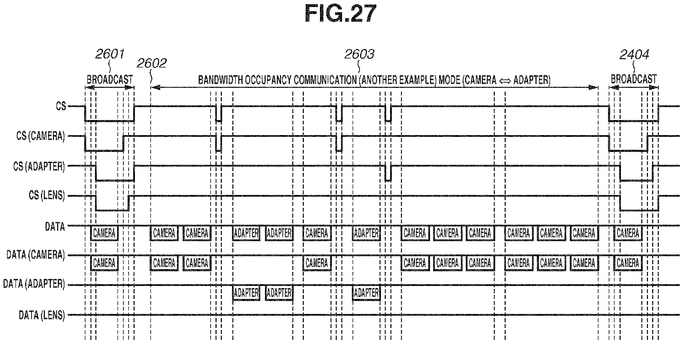

Next, switching processing to the other example of the bandwidth occupancy communication through the broadcast communication will be described with reference to Fig. 27. Fig. 27 illustrates signal waveforms during the communication mode switching and the communication partner specification exchanged between the camera microcomputer 205, the lens microcomputer 111, and the adapter microcomputer 302. The specification of the communication partner of the bandwidth occupancy communication in the other example is performed through the broadcast communication. Here, as an example, the adapter microcomputer 302 is specified from the camera microcomputer 205 as the other example of the bandwidth occupancy communication partner.

Fig. 27 illustrates a case in which the following communication processing is performed.

First, two byte data (e.g., a universal head drive speed specification request) is transmitted from the camera microcomputer 205 to the adapter microcomputer 302 in the other example of the bandwidth occupancy communication, and two byte data is transmitted from the adapter microcomputer 302 to the camera microcomputer 205 as a response.

Next, one byte data (e.g., the adapter state information request) is transmitted from the camera microcomputer 205 to the adapter microcomputer 302 in the other example of the bandwidth occupancy communication, and one byte data is transmitted from the adapter microcomputer 302 to the camera microcomputer 205 as a response.

Next, three byte data (e.g., universal head drive amount request) is transmitted from the camera microcomputer 205 to the adapter microcomputer 302 in the other example of the bandwidth occupancy communication, and the adapter microcomputer 302 repeats not responding to this twice.

The case where the above-described other example of the above band occupation communication is executed will be described.

The camera microcomputer 205, which is a first communication master, executes the broadcast communication by the procedures at a timing 2601 illustrated in Fig. 4A. In this broadcast communication, the slave specification data specifying a partner to perform communication with the camera microcomputer 205 in the subsequent other example of the bandwidth occupancy communication is notified. For example, the identification information of the slave to be specified can be used as the slave specification data.

The lens microcomputer 111 and the adapter microcomputer 302 determines individually whether each of the lens microcomputer 111 and the adapter microcomputer 302, which are communication slaves, is specified as a communication partner of the other example of the bandwidth occupancy communication based on the slave specification data received from the broadcast communication.

According to the result of this determination, the communication mode between the camera microcomputer 205 and the specified communication slave is switched from the broadcast communication mode to the other example mode of the bandwidth occupancy communication mode at a timing 2602.

At this time, since the adapter microcomputer 302 is specified as the communication partner, when the data to be transmitted from the camera microcomputer 205 to the adapter microcomputer 302 is the maximum number of bytes, the data is transmitted and received between the camera microcomputer 205 and the adapter microcomputer 302 at a timing 2603 following the procedure illustrated in Fig. 21, and when the data is less than the maximum number of bytes, following the procedure described in Fig. 5. Here, two byte data is transmitted from the camera microcomputer 205 to the adapter microcomputer 302 and two byte data is received as response data. Then, one byte data is transmitted from the camera microcomputer 205 to the adapter microcomputer 302, and one byte data is received as response data. Lastly, three byte data is transmitted from the camera microcomputer 205 to the adapter microcomputer 302, and since it is the maximum number of bytes to be transmitted by the camera microcomputer 205, the adapter microcomputer does not respond.

When the other example of the bandwidth occupancy communication between the camera microcomputer 205 and the adapter microcomputer 302 ends, the camera microcomputer 205 transmits again to the communication slave that the other example of the bandwidth occupancy communication is to be ended through the broadcast communication at a timing 2604. Further, in the similar manner to the first exemplary embodiment, if the camera microcomputer 205 specifies a communication partner (e.g., the lens microcomputer 111) of the subsequent P2P communication or the bandwidth occupancy communication to execute the broadcast communication according to the procedure illustrated in Fig. 4A, the adapter microcomputer 302 ends the other example of the bandwidth occupancy communication in response to this broadcast communication, and at the same time, the communication mode of the camera microcomputer 205 and the lens microcomputer 111 is switched to the P2P communication mode or the bandwidth occupancy communication mode. In the similar manner to the first exemplary embodiment, when the broadcast communication is not executed, the other example of the bandwidth occupancy communication between the camera microcomputer 2005 and the adapter microcomputer 302 continues.

As described above, it is possible through the broadcast communication to specify the communication partner in the other example of the bandwidth occupancy communication, and it is possible to simultaneously switch between the broadcast communication, the P2P communication, and the bandwidth occupancy communication.

<Communication Control Processing>

Next, communication control processing performed between the camera microcomputer 205, the lens microcomputer 111, and the adapter microcomputer 302 will be described. Regarding the broadcast communication processing, the descriptions overlap with those described with reference to Figs. 7A and 7B of the first exemplary embodiment, and thus, are omitted.

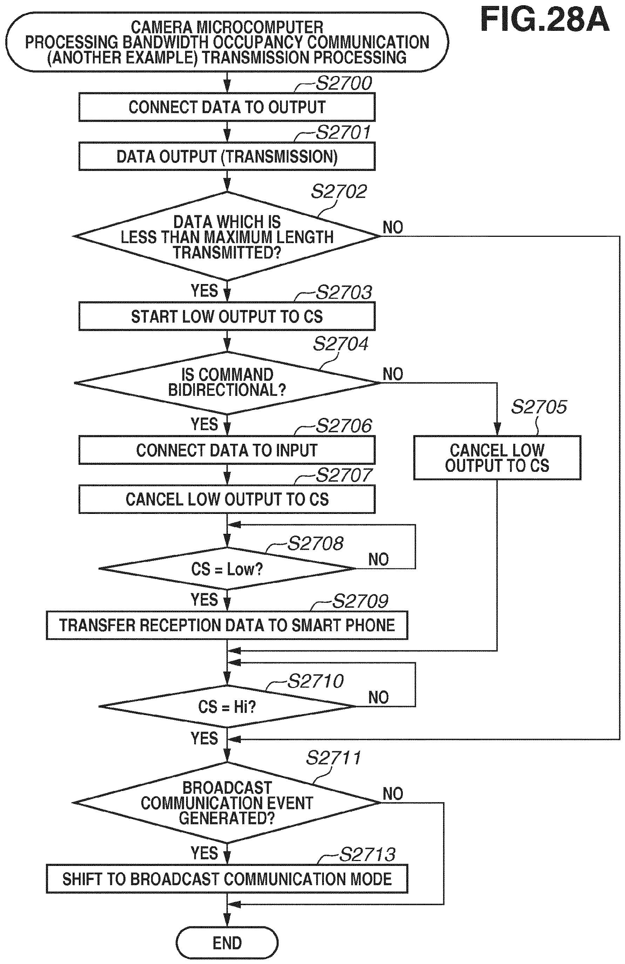

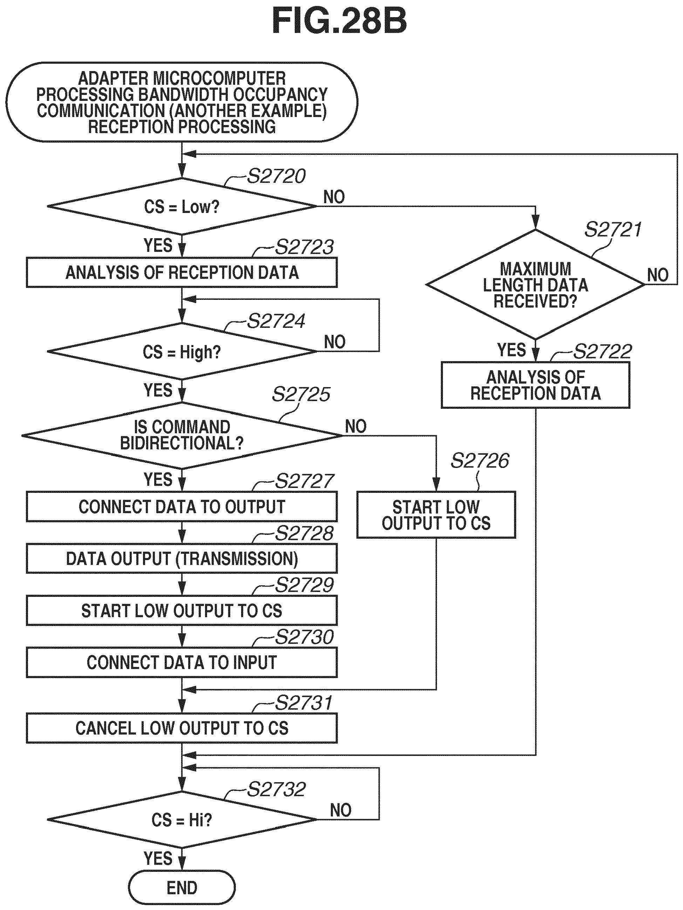

Next, processing in the other example of the bandwidth occupancy communication mode will be described with reference to flowcharts in Fig. 28A and Fig. 28B. Fig. 28A illustrates third P2P transmission processing performed by the camera microcomputer 205, and Fig. 28B illustrates, as an example, third P2P reception processing that the adapter microcomputer specified as the communication partner in the other example of the bandwidth occupancy communication by the camera microcomputer 205. In a case in which the lens microcomputer 111 is specified as the communication partner of the other example of the bandwidth occupancy communication, the third P2P reception processing is performed in the similar manner as in Fig. 28B.

When an event to start the other example of the bandwidth occupancy communication is generated, the camera microcomputer 205 operates the input/output switching switch 2082 in step S2700 to connect the signal line DATA to the data output, and transmits data in step S2701. In this case, the event to start the bandwidth occupancy communication is, for example, a communication instruction from the smartphone 2000. In addition, the camera microcomputer 205 may spontaneously generate an event to start the bandwidth occupancy communication at communication intervals instructed by the smartphone 2000. When the transmission of all the data has been completed, the camera microcomputer 205 advances the processing to step S2702. At this time, the number of bytes of data to be transmitted is limited to the maximum number of bytes or less based on the first or the second adapter attribute information. The above-described maximum number of bytes of data to be transmitted does not necessarily need to be communicated directly between the camera microcomputer 205 and the adapter microcomputer 302. For example, the above-described maximum number of bytes may be determined by the smartphone 2000 from the name and the firmware version of the adapter 300A to be notified to the camera.

In step S2702, the camera microcomputer 205 determines whether the number of bytes of data transmitted to the adapter microcomputer 302 is less than the above-described maximum number of bytes. If the camera microcomputer 205 has transmitted a number of bytes of data less than the above-described maximum number of bytes (YES in step S2702), the processing proceeds to step S2703, and if it is the above-described maximum number of bytes (NO in step S2702), the processing proceeds to step S2711.

In step S2703, the camera microcomputer 205 starts providing the Low output to the signal line CS by turning ON (grounding) the ground switch 2081, and requests the analysis of the transmitted data to the adapter microcomputer 302. The adapter microcomputer 302 starts the processing of step S2723 to be described with reference to Fig. 28B by receiving this notification.

In step S2704, the camera microcomputer 205 determines whether the data transmitted in step S2701 is a bidirectional command also including the data transmission from the adapter microcomputer 302. The processing proceeds to step S2705 when it is not the bidirectional command (NO in step S2704), and the processing proceeds to step S2706 when it is a bidirectional command (YES in step S2704).

In step S2705, the camera microcomputer 205 cancels the Low output to the signal line CS by turning OFF (disconnecting) the ground switch 2081 in order to detect that the data reception from the adapter microcomputer 302 is completed. Then, the processing proceeds to step S2710.

In step S2706, the camera microcomputer 205 connects the signal line DATA to the data input unit by operating the input/output switching switch 2082. Then, the processing proceeds to step S2707.

In step S2707, the camera microcomputer 205 cancels the Low output to the signal line CS by turning OFF (disconnecting) the ground switch 2081 in order to detect that the data transmission from the adapter microcomputer 302 is completed. Then, the processing proceeds to step S2708.

In step S2708, the camera microcomputer 205 stands by until the data transmission from the adapter microcomputer 302 is completed, that is, until the signal line CS becomes Low (NO in step S2708). If the signal line CS becomes Low (YES in step S2708), the camera microcomputer 205 determines that the data transmission from the adapter microcomputer 302 has been completed, and the processing proceeds to step S2709. In this case, the number of bytes of data to be received is not limited, and the recognition between the camera microcomputer 205 and the adapter microcomputer 302 only needs to match each other. Further, the camera microcomputer 205 may determine whether the maximum number of bytes of the data is received from the adapter microcomputer 302 in the similar manner to the data to be transmitted from the camera microcomputer 205 to the adapter microcomputer 302, and if the maximum number of bytes is received, the processing may proceed to step S2709.

In step S2709, the camera microcomputer 205 transfers the data received from the signal line DATA to the smartphone 2000. Next, in step S2710, the camera microcomputer 205 stands by until the signal line CS becomes Hi (NO in step S2709). If the signal line CS becomes Hi (YES in step S2709), the camera microcomputer 205 determines that the current other example of the bandwidth occupancy communication is completed, and the processing proceeds to step S2711.

In step S2711, the camera microcomputer 205 determines whether to start the broadcast communication through the subsequent communication, and when the broadcast communication is to be started (YES in step S2711), the processing proceeds to step S2713. When the other example of the bandwidth occupancy communication is to be continued (NO in step S2711), the third P2P transmission processing ends with the other example of the bandwidth occupancy communication mode being maintained. Based on the instruction from the smartphone 2000, the camera microcomputer 205 determines whether to start the broadcast communication in the subsequent communication. Further, for example, whether to start the broadcast communication in the subsequent communication may be determined based on the operation on the camera body 200.

In step S2713, the camera microcomputer 205 shift to the broadcast communication mode to end the second P2P transmission processing.

In step S2720 of Fig. 28B, the adapter microcomputer 302 determines whether the signal line CS is Low. When the signal line CS is Low (YES in step S2720), it is determined that the data transmission from the camera microcomputer 205 has been completed, and the processing proceeds to step S2723. When the signal line CS is Hi (NO in step S2720), the processing proceeds to step S2721.

In step S2721, the adapter microcomputer 302 determines whether the maximum number of bytes of data has been received. At this time, the maximum number of bytes of data to be received is notified by the first or the second adapter attribute information. Accordingly, if the maximum number of bytes of data is received (YES in step S2721), the processing proceeds to step S2722. If predetermined-length data is not received (NO in step S2721), the processing returns to step S2520.

In step S2722, the adapter microcomputer 302 analyzes the received data, and then the processing proceeds to step S2733.

In step S2723, the adapter microcomputer 302 analyzes the received data. Next, in step S2724, the adapter microcomputer 302 stands by until the signal line CS becomes Hi, that is, until the processing in step S2705 or step S2706 is completed (NO in step S2723). If the signal line CS becomes Hi (YES in step S2723), the processing proceeds to step S2725.

In step 2725, the adapter microcomputer 302 determines whether the data analyzed in step S2723 is a bidirectional command also including the data transmission from the adapter microcomputer 302. The processing proceeds to step S2726 when it is not bidirectional command (NO in step S2725), and the processing proceeds to step S2727 when it is a bidirectional command (YES in step S2725).

In step S2726, the adapter microcomputer 302 starts providing the Low output to the signal line CS by turning the ground switch 3031 ON (grounding) in order to notify that the data reception in the camera microcomputer 205 has been completed. Then, the processing proceeds to step S2731.

In step S2727, the adapter microcomputer 302 connects the signal line DATA to the data output unit by operating the input/output switching switch 3032. Next, in step S2728, the adapter microcomputer 302 uses the signal line DATA to perform the data transmission, and if the transmission of all the data has been completed, the processing proceeds to step S2729. At this time, the number of bytes of data to be transmitted is not limited, and the recognition between the camera microcomputer 205 and the adapter microcomputer 302 only need to match each other.

Next, in step S2729, the adapter microcomputer 302 starts providing the Low output to the signal line CS by connecting the ground switch 3031 to on (grounding). In this way, the completion of the data transmission in the other example of the bandwidth occupancy communication notifies, is notified to the camera microcomputer 205.

Next, in step S2730, the adapter microcomputer 302 connects the signal line DATA to the data input unit by operating the input/output switching switch 3032. Then, the processing proceeds to step S2731.

In step S2731, the adapter microcomputer 302 cancels the Low output to the signal line CS by turning OFF (disconnecting) the ground switch 3031 in order to notify the camera microcomputer 205 that the other example of the bandwidth occupancy communication is completed. Next, in step S2732, the adapter microcomputer 302 stands by until the signal line CS becomes Hi in order to detect that the camera microcomputer 205 completed the other example of the bandwidth occupancy communication (NO in step S2732). If the signal line CS becomes Hi (YES in step S2732), the adapter microcomputer 302 ends the P2P processing.

Further, since the lens microcomputer 111 is not specified as a communication partner of the bandwidth occupancy communication, the broadcast communication reception processing in Fig. 7B is executed without outputting a signal to the signal line CS and the signal line DATA.

Through the above-described processing, the data transmission can be performed using the other example of the bandwidth occupancy communication from the camera microcomputer 205, which is the communication master, to the adapter microcomputer 302, which is the communication slave.

Other Exemplary Embodiments

In the above-described first exemplary embodiment, the camera microcomputer 205 may perform the communication for notifying the adapter microcomputer 302 of the property of the detection of the ring operation (start and end) and the property of the sampling of the ring operation state information. In this way, it is possible to reduce unnecessary communication and processing by the adapter microcomputer 302, while capturing an image in a state where the aperture drive is unnecessary. In this case, in step S1115, the adapter microcomputer 302 may transmit only the operation amount in step S1115. The camera microcomputer 205 determines the start and the end of the ring operation based on the operation amount. For example, the camera microcomputer 205 determines that the ring operation has started when the operation amount is greater than 0. Further, for example, the camera microcomputer 205 may determine that the ring operation has ended when the operation amount becomes 0 again after the operation amount becomes greater than 0. Further, when the operation amount 0 is detected a predetermined number of times or more after the ring operation has started, it may be determined that the ring operation has ended.

Further, in the above-described exemplary embodiments, the information indicating whether the ring operation has ended may be transmitted together with the information (e.g., the operation amount) relating to the operation state of the ring may be transmitted. In this case, for example, when the ring operation has not ended, the information that the ring operation has not ended is transmitted together with the operation amount of the ring.

Further, in the above-described exemplary embodiments, the processing performed onto the adapter 300 is described, but when an accessory (including the interchangeable lens) other than the adapter having an operation ring exists, the same effect as in the above-described exemplary embodiments can be obtained by performing the similar processing.

Further, in the above-described exemplary embodiments, the processing in FIGS. 9 and 10 is performed via the first communication units of the camera body 200, the interchangeable lens 100, and the adapter 300. On the other hand, the communication via the lens first communication unit 112 and the adapter first communication unit 303 do not have to be used. In this case, for example, steps S903 and S904 of Fig. 9 and steps S1003 and S1004 of Fig. 10 can be omitted. Further, each aperture drive request transmitted from the camera microcomputer 205 to the lens microcomputer 111 is transmitted through communication via the camera second communication unit 242 and the lens second communication unit 142. In other words, communication via each first communication unit is used in order for the camera body 200 and the adapter 300 to communicate, and communication via each second communication unit is used in order for the camera body 200 and the adapter 300 to communicate. The camera system may not initially have a path for performing the communication via the lens first communication unit 112 and the adapter first communication unit 303. Further, in this case, in Fig. 9 and Fig. 10, only the P2P communication may be performed without using the broadcast communication.

In the fourth exemplary embodiment, the camera microcomputer 205 controls whether to perform communication between the smartphone and the adapter based on the comparison of the first identification information and the second identification information in step S1507, but it is not limited thereto. For example, the second identification information may be compared with the first identification information stored in the camera body 200 in advance.

Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

**Claims**

1.  An imaging apparatus to which an accessory apparatus is attachable, comprising:

    a first communication means configured to execute communication with an external device;
    a second communication means configured to communicate with the accessory apparatus; and
    a communication control means configured to control initial communication via the second communication means by a first communication method;
    wherein the communication control means acquires, by the initial communication, first information indicating whether or not communication by a second communication method is performable or not, and is configured to change the communication method to the second communication method based on the first information, and
    wherein the second communication method is communication method where second information acquired from the external device via the first communication means is transferred to the accessory apparatus.

2.  The imaging apparatus according to claim 1, wherein the communication control means is configured to change the communication method to the second communication method according to the operation of the external device by a user.

3.  The imaging apparatus according to claim 1, wherein the initial communication is performed according to power supply from the imaging apparatus to the accessory apparatus.

4.  The imaging apparatus according to claim 1,
    wherein the communication control means is configured to communicate with the accessory apparatus by the first communication method according to second information acquired from the external device, and
    wherein the communication control means is configured to transfer, by the second communication method, the second information acquired from the external device to the accessory apparatus regardless of the first information.

5.  The imaging apparatus according to claim 1, wherein the communication control means is configured to communicate the first information acquired from the accessory apparatus by the initial communication, to the external device.

6.  The imaging apparatus according to claim 5, wherein the first information acquired from the accessory apparatus by the initial communication includes third information indicating that a firmware update by the second communication method is performable, and
    wherein the communication control means is configured to perform the firmware update by the second communication method according to the third information.

7.  An accessory apparatus to which an imaging apparatus comprising a first communication means configured to execute communication with an external device, is attachable, comprising:

    a second communication means configured to communicate with the imaging apparatus; and
    a communication control means configured to control initial communication via the second communication means by a first communication method;
    wherein the communication control means is configured to transmit, by the initial communication, first information indicating whether or not communication by a second communication method is performable or not, and configured to change the communication method to the second communication method based on the first information,
    wherein the second communication method is a communication method where second information acquired by the imaging apparatus via the first communication means is transferred to the communication control means.

8.  The accessory apparatus according to claim 7, wherein the communication control means is configured to change the communication method to the second communication method according to operation of the external device by a user.

9.  The accessory apparatus according to claim 7, wherein the initial communication is performed according to power supply from the imaging apparatus to the accessory apparatus.

10. The accessory apparatus according to claim 7,
    wherein the communication control means is configured to communicate with the imaging apparatus by the first communication method according to first information transmitted from the external device,
wherein the communication control means acquires, by the second communication method, second information acquired by the first communication means of the imaging apparatus from the external device regardless of the first information.

11. The accessory apparatus according to claim 7, wherein the first information transmitted via the second communication means by the initial communication is transmitted to the external device by the first communication means of the imaging apparatus.

12. The accessory apparatus according to claim 11,
wherein the first information transmitted from the accessory apparatus by the initial communication includes third information indicating that a firmware update by the second communication method is performable, and
wherein the imaging apparatus performs the firmware update by the second communication method according to this third information.

13. A control method for an imaging apparatus to which an accessory apparatus is attachable and including a first communication means configured to execute communication with an external device, and a second communication means configured to communicate with the accessory apparatus, the control method comprising:

controlling initial communication communicated via the second communication by a first communication method, wherein the controlling is controlled so that first information indicating whether or not communication by a second communication method is performable or not, is acquired, and the communication method is changed to the second communication method based on the first information,
wherein the second communication method is a communication method where second information acquired from the external device via the first communication means is transferred to the accessory apparatus.

14. A control method for an accessory apparatus to which an imaging apparatus comprising a first communication means configured to execute communication with an external device is attachable, and including a second communication means configured to communicate with the imaging apparatus, the control method comprising:

controlling initial communication communicated via the second communication by a first communication method, wherein the controlling is controlled so that first information indicating whether or not communication by a second communication method is performable or not, is transmitted, and the communication method is changed to the second communication method based on the first information, and
wherein the second communication method is a communication method where second information acquired from the external device via the first communication means is acquired via the second communication means.

# FIG.1

# FIG.2A

# FIG.2B

# FIG.2C

# FIG.3A

# FIG.3B

# FIG.4A

# FIG.4B

# FIG.5

# FIG.6

# FIG.7A

CAMERA MICROCOMPUTER
BROADCAST COMMUNICATION
TRANSMISSION PROCESSING

↓ S700
START LOW OUTPUT TO CS

↓ S701
CONNECT DATA TO OUTPUT

↓ S702
DATA OUTPUT (TRANSMISSION)

↓ S703
IS COMMAND BIDIRECTIONAL? —NO→

YES ↓ S705                                    S704
CONNECT DATA TO INPUT        CANCEL LOW
                             OUTPUT TO CS

↓ S706
CANCEL LOW OUTPUT TO CS

↓ S707
CS = Hi? —NO→

YES ↓ S708
CS = Low? —NO→

YES ↓ S709
PERMIT DATA RECEPTION

↓ S710
START BIT RECEIVED? —NO→

YES ↓ S711
START LOW OUTPUT TO CS

↓ S712
ALL DATA RECEIVED? —NO→

YES ↓ S713
PROHIBIT DATA RECEPTION

↓ S714
CANCEL LOW OUTPUT TO CS

↓ S715
CS = Hi? —NO→

YES ↓

S716
SLAVE SPECIFIED? —NO→

YES ↓ S717
SHIFT TO P2P
COMMUNICATION MODE

↓
END

54

# FIG.7B

LENS AND ADAPTER MICROCOMPUTER
BROADCAST RECEPTION PROCESSING

S720
PERMIT DATA RECEPTION

S721
START BIT RECEIVED? — NO

S722
CS = Hi? — NO

YES

S723
PROHIBIT DATA RECEIVE

YES
S724
SHIFT TO BROADCAST COMMUNICATION MODE

S725
START LOW OUTPUT TO CS

S726
ALL DATA RECEIVED? — NO

YES
S727
PROHIBIT DATA RECEIVE

S728
CANCEL LOW OUTPUT TO CS

S729
IS COMMAND BIDIRECTIONAL? — NO

YES

S730
CS = Hi? — NO

YES
S731
START LOW OUTPUT TO CS

S732
CONNECT DATA TO OUTPUT

S733
DATA OUTPUT (TRANSMISSION)

S734
CANCEL LOW OUTPUT TO CS

S735
CS = Hi? — NO

YES

S736
SLAVE SPECIFIED? — NO

YES
S737
PERMIT DATA RECEPTION

S738
SHIFT TO P2P COMMUNICATION MODE

END

# FIG.8A

```
┌─────────────────────────────┐
│   LENS MICROCOMPUTER        │
│   P2P COMMUNICATION         │
│   TRANSMISSION PROCESSING   │
└─────────────────────────────┘
              │
              ▼           S800
┌─────────────────────────────┐
│   CONNECT DATA TO OUTPUT    │
└─────────────────────────────┘
              │
              ▼           S801
┌─────────────────────────────┐
│  DATA OUTPUT (TRANSMISSION) │
└─────────────────────────────┘
              │
              ▼           S802
┌─────────────────────────────┐
│   START LOW OUTPUT TO CS    │
└─────────────────────────────┘
              │
              ▼           S803
        ╱IS COMMAND╲          NO
       ╱BIDIRECTIONAL?╲──────────┐
        ╲            ╱           │
          ╲        ╱             │        S804
        YES │                    ▼  ┌──────────────┐
            ▼       S805            │ CANCEL LOW   │
┌─────────────────────────┐        │ OUTPUT TO CS │
│  CONNECT DATA TO INPUT   │       └──────────────┘
└─────────────────────────┘              │
            │       S806                  │
            ▼                             │
┌─────────────────────────┐              │
│ CANCEL LOW OUTPUT TO CS  │              │
└─────────────────────────┘              │
            │←─────────────┐             │
            ▼     S807      │            │
        ╱CS = Low?╲  NO     │            │
         ╲       ╱──────────┘            │
        YES │                            │
            ▼       S808                 │
┌─────────────────────────┐             │
│  ANALYZE RECEPTION DATA  │             │
└─────────────────────────┘             │
            │←───────────────────────────┘
            ▼      S809
        ╱CS = Hi?╲   NO
         ╲      ╱────────┐
        YES │            │
            ▼   S810      │
       ╱BROADCAST╲        │
      ╱COMMUNICATION╲ NO  │
      ╲EVENT       ╱──────┤
       ╲GENERATED?╱       │
        YES │←────────────┘
            ▼   S811
┌─────────────────────────┐
│   SHIFT TO BROADCAST    │
│   COMMUNICATION MODE    │
└─────────────────────────┘
            │
            ▼
        ┌───────┐
        │  END  │
        └───────┘
```

# FIG.8B

ADAPTER MICROCOMPUTER
P2P COMMUNICATION
RECEPTION PROCESSING

↓ S820

ANALYZE RECEPTION DATA

↓

S821 — CS = Hi? —NO→

YES ↓

S822 — IS COMMAND BIDIRECTIONAL? —NO→

YES ↓ S824

CONNECT DATA TO OUTPUT

S823
START LOW OUTPUT TO CS

↓ S825

DATA OUTPUT (TRANSMISSION)

↓ S826

START LOW OUTPUT TO CS

↓ S827

CONNECT DATA TO INPUT

↓ S828

CANCEL LOW OUTPUT TO CS

↓

S829 — CS = Hi? —NO→

YES ↓

END

EP 3 640 729 A1

# FIG.9

INTERCHANGEABLE LENS
CAMERA BODY
ADAPTER

S900
START OF RING OPERATION
S902 BROADCAST COMMUNICATION REQUEST
S903 SPECIFICATION OF P2P COMMUNICATION SLAVE
S904 CONFIRMATION OF COMMUNICATION EVENT
S905 SPECIFICATION OF P2P COMMUNICATION SLAVE
S906 CONFIRMATION OF COMMUNICATION EVENT
S907 SPECIFICATION OF P2P COMMUNICATION SLAVE

S901
SAMPLING RING OPERATION STATE INFORMATION
S908 ACQUISITION OF RING OPERATION STATE INFORMATION
S909 APERTURE DRIVE REQUEST
SPECIFICATION OF P2P COMMUNICATION SLAVE
ACQUISITION OF RING OPERATION STATE INFORMATION
APERTURE DRIVE REQUEST

S910
END OF RING OPERATION
SPECIFICATION OF P2P COMMUNICATION SLAVE
S911 ACQUISITION OF RING OPERATION STATE INFORMATION
S912 APERTURE DRIVE REQUEST

# FIG.10

# FIG.11A

ADAPTER RING
OPERATION START PROCESSING

S1101
BROADCAST COMMUNICATION REQUEST

S1102
SAMPLING OF RING OPERATION STATE INFORMATION

S1103
HAS RING OPERATION ENDED? —— NO

YES

END

# FIG.11B

ADAPTER RING
OPERATION P2P COMMUNICATION
PROCESSING

S1111
P2P COMMUNICATION ANALYSIS

S1112
COMMUNICATION
EVENT REQUESTED? —— NO

YES

S1114
RING OPERATION
STATE INFORMATION
OBTAINED? —— NO

YES S1115
TRANSMISSION OF
RING OPERATION
STATE INFORMATION

S1117
P2P
COMMUNICATION
PROCESSING

S1116
RESET OF RING
OPERATION AMOUNT

S1113
COMMUNICATION EVENT
TRANSMISSION

END

# FIG.12A

```
CAMERA BODY
CONFIRMATION OF COMMUNICATION
EVENT PROCESSING
        │
        ▼                    ╭─S1201
INTERCHANGEABLE LENS
COMMUNICATION EVENT CONFIRMATION
        │
        ▼           S1202
   DOES INTERCHANGEABLE         NO        S1203
   LENS HAVE A COMMUNICATION ────────►  ADAPTER COMMUNICATION
   REQUEST?                             EVENT CONFIRMATION
        │ YES
        ▼
       END
```

# FIG.12B

```
CAMERA BODY
RING OPERATION STATE INFORMATION
OBTAINMENT PROCESSING
        │
        ▼                      S1211
   RING OPERATION                    NO
   STATE INFORMATION ──────────────────►
   ACQUISITION TIMING?
        │ YES       ╭─S1212
OBTAIN RING OPERATION STATE INFORMATION
        │
        ▼              S1213
   APERTURE DRIVE TIMING?            NO
        │ YES       ╭─S1214
   APERTURE DRIVE REQUEST
        │
        ▼              S1215
   RING OPERATION ENDED?
   NO ◄──                │ YES
        ▼
       END
```

# FIG.13

```
    ┌─────────────────────────────────┐
    │     INTERCHANGEABLE LENS         │
    │  P2P COMMUNICATION PROCESSING    │
    └─────────────────────────────────┘
                    │
                    ▼              ⌐S1301
    ┌─────────────────────────────────┐
    │      P2P COMMUNICATION           │
    │          ANALYSIS                │
    └─────────────────────────────────┘
                    │
                    ▼                 S1302
              ◇─────────────────◇
             ╱  CONFIRMATION OF   ╲        NO
            ◇  COMMUNICATION EVENT? ◇──────────────┐
             ╲                     ╱               │
              ◇─────────────────◇                 │
          YES │         S1303                      │  S1304
    ┌──────────────────────┐          ┌──────────────────────┐
    │    COMMUNICATION      │          │  P2P COMMUNICATION    │
    │  EVENT TRANSMISSION   │          │     PROCESSING        │
    └──────────────────────┘          └──────────────────────┘
                │                                  │
                ▼◄─────────────────────────────────┘
           ┌─────────┐
           │   END   │
           └─────────┘
```

# FIG.14

START OF RING OPERATION → *S900*

*S902* BROADCAST COMMUNICATION REQUEST

*S903* SPECIFICATION OF P2P COMMUNICATION SLAVE

*S904* CONFIRMATION OF COMMUNICATION EVENT

*S905* SPECIFICATION OF P2P COMMUNICATION SLAVE

*S906* CONFIRMATION OF COMMUNICATION EVENT

PROHIBITION OF BROADCAST COMMUNICATION REQUEST

*S1401*

*S901* SAMPLING OF RING OPERATION STATE INFORMATION

*S907* SPECIFICATION OF P2P COMMUNICATION SLAVE

*S908* OBTAIN RING OPERATION STATE INFORMATION

*S909* APERTURE DRIVE REQUEST

SPECIFICATION OF P2P COMMUNICATION SLAVE

ACQUISITION OF RING OPERATION STATE INFORMATION

APERTURE DRIVE REQUEST

T

Δt

*S910* END OF RING OPERATION

SPECIFICATION OF P2P COMMUNICATION SLAVE

*S911* ACQUISITION OF RING OPERATION STATE INFORMATION

*S912* APERTURE DRIVE REQUEST

T

PERMISSION OF BROADCAST COMMUNICATION REQUEST

*S1402*

Δt

ADAPTER          CAMERA BODY          INTERCHANGEABLE LENS

# FIG.15

# FIG.16

START

POWER SOURCE SUPPLY ——S1501

*S1502*
OBTAIN LENS ATTRIBUTE INFORMATION BY SECOND COMMUNICATION

*S1503*
OBTAIN ACCESSORY ATTRIBUTE INFORMATION (INCLUDING FIRST IDENTIFICATION INFORMATION) BY FIRST COMMUNICATION

S1504
CONNECT WITH SMART PHONE? — NO

YES
CONNECT WITH SMART PHONE ——S1505

OBTAIN SECOND IDENTIFICATION INFORMATION FROM SMART PHONE ——S1506

S1507
DOES FIRST IDENTIFICATION INFORMATION COINCIDE WITH SECOND IDENTIFICATION INFORMATION? — NO

S1512
USER NOTIFICATION

S1513
ROUTINE STATE

YES
TRANSMISSION OF BANDWIDTH OCCUPANCY COMMAND SPECIFYING ADAPTER 300 BY BROADCAST COMMUNICATION MODE (FIRST COMMUNICATION MODE) ——S1508

COMMUNICATION BETWEEN SMART PHONE AND ADAPTER ——S1509

S1510
IS COMMUNICATION BETWEEN SMART PHONE AND ADAPTER DISCONNECTED? — NO

YES
SHIFT TO BROADCAST COMMUNICATION MODE (FIRST COMMUNICATION MODE), AND TRANSMIT BANDWIDTH RELEASE COMMAND ——S1511

# FIG.17A

S1700

ADAPTER                    CAMERA BODY                    SMART PHONE

START-UP OF ⇒
CAMERA SYSTEM

START-UP OF ⇒
SMART PHONE

S1701 SPECIFICATION OF P2P
COMMUNICATION SLAVE

BROADCAST
COMMUNICATION {

S1702    TRANSMISSION REQUEST
OF FIRST ADAPTER
ATTRIBUTE INFORMATION

P2P
COMMUNICATION {    TRANSMISSION OF FIRST ADAPTER
ATTRIBUTE INFORMATION

CONNECTION WITH ⇒
SMART PHONE

S1703    CONNECTION
WITH SMART PHONE ⇒

S1704    TRANSMISSION REQUEST
OF SMART PHONE
ATTRIBUTE INFORMATION ⇒

TRANSMISSION OF SMART PHONE
ATTRIBUTE INFORMATION

S1705    TRANSMISSION OF
FIRST ADAPTER
ATTRIBUTE INFORMATION ⇒

S1706    TRANSMISSION REQUEST
OF SECOND ADAPTER
ATTRIBUTE INFORMATION

S1707 SPECIFICATION OF P2P
COMMUNICATION SLAVE

BROADCAST
COMMUNICATION {

S1708    TRANSMISSION REQUEST
OF SECOND ADAPTER
ATTRIBUTE INFORMATION

P2P
COMMUNICATION {    TRANSMISSION OF SECOND
ADAPTER ATTRIBUTE INFORMATION

S1709    TRANSMISSION OF
SECOND ADAPTER
ATTRIBUTE INFORMATION ⇒

S1710
START OF ADAPTER ⇒
FIRMWARE UPDATE

S1712    TRANSMISSION
OF BANDWIDTH
OCCUPANCY COMMAND

S1711    REQUEST OF
BANDWIDTH OCCUPANCY

BROADCAST
COMMUNICATION {

S1713    TRANSMISSION
OF COMPLETION OF
BANDWIDTH OCCUPANCY ⇒

① ② ③

66

# FIG.17B

# FIG.18A

START

~S1801
POWER SOURCE SUPPLY

~S1802
OBTAIN INTERCHANGEABLE LENS ATTRIBUTE
INFORMATION BY SECOND COMMUNICATION

~S1803
OBTAIN FIRST ACCESSORY ATTRIBUTE
INFORMATION BY FIRST COMMUNICATION

S1804
CONNECT WITH SMART PHONE? — NO

S1814
ROUTINE STATE

YES ~S1805
CONNECT WITH SMART PHONE

~S1806
TRANSMISSION OF FIRST ACCESSORY
ATTRIBUTE INFORMATION TO SMART PHONE

~S1807
COMMUNICATION BETWEEN
SMART PHONE AND ACCESSORY

S1808
DISCONNECT WITH
SMART PHONE? — YES

NO
S1809
IS FIRST COMMUNICATION
BANDWIDTH OCCUPIED? — NO

YES ~S1810
TRANSMISSION OF BANDWIDTH OCCUPANCY
COMMAND IN BROADCAST COMMUNICATION MODE

~S1811
COMMUNICATION OF
SMART PHONE - ACCESSORY OCCUPANCY

S1812
IS FIRST COMMUNICATION
BANDWIDTH RELEASED? — NO

YES ~S1813
TRANSMISSION OF BANDWIDTH RELEASE
COMMAND IN BROADCAST COMMUNICATION MODE

# FIG.18B

```
                        ( START )
                            │
                            ▼                        ┌─S1821
        ┌──────────────────────────────────────────┐
        │         CONNECTION WITH CAMERA            │
        └──────────────────────────────────────────┘
                            │
                            ▼                        ┌─S1822
        ┌──────────────────────────────────────────┐
        │      RECEPTION OF FIRST ACCESSORY         │
        │   ATTRIBUTE INFORMATION FROM CAMERA       │
        └──────────────────────────────────────────┘
                            │
                            ▼                        ┌─S1823
        ┌──────────────────────────────────────────┐
        │   OBTAIN SECOND ACCESSORY ATTRIBUTE       │
        │ INFORMATION BY COMMUNICATION BETWEEN      │
        │     SMART PHONE AND ACCESSORY             │
        └──────────────────────────────────────────┘
                            │
                            ▼
                      S1824
              ╱─────────────────────╲   YES
             ╱     DISCONNECT         ╲──────────►
             ╲     FROM CAMERA?       ╱
              ╲─────────────────────╱
                       NO │    S1825
                          ▼
              ╱─────────────────────╲   YES
             ╱      FIRMWARE OF       ╲──────────►
             ╲  ACCESSORY UPDATED?    ╱
              ╲─────────────────────╱
                       NO │              ┌─S1826
                          ▼
        ┌──────────────────────────────────────────┐
        │      COMMUNICATION BETWEEN                │
        │    SMART PHONE AND ACCESSORY              │
        └──────────────────────────────────────────┘
                          │              ┌─S1827
                          ▼
        ┌──────────────────────────────────────────┐
        │    REQUEST BANDWIDTH OCCUPANCY            │
        │      OF COMMUNICATION BETWEEN             │
        │      SMART PHONE AND ACCESSORY            │
        └──────────────────────────────────────────┘
                          │              ┌─S1828
                          ▼
        ┌──────────────────────────────────────────┐
        │ SMART PHONE AND ACCESSORY OCCUPANCY       │
        │    COMMUNICATION AND ACCESSORY            │
        │  FIRMWARE UPDATE COMMUNICATION            │
        └──────────────────────────────────────────┘
                          │    S1829
                          ▼
     NO   ╱─────────────────────╲
    ◄─────╱    HAS FIRMWARE       ╲
          ╲    UPDATE ENDED?      ╱
           ╲─────────────────────╱
                    YES │              ┌─S1830
                        ▼
        ┌──────────────────────────────────────┐      ┌────────┐
        │    REQUEST BANDWIDTH RELEASE          │      │  END   │
        │    OF COMMUNICATION BETWEEN           │      └────────┘
        │    SMART PHONE AND ACCESSORY          │
        └──────────────────────────────────────┘
```

# FIG.18C

```
                        ┌──────────┐
                        │  START   │
                        └────┬─────┘
                             │         S1841
                    ┌────────▼─────────────┐
                    │    ANALYSIS OF       │
                    │ BROADCAST COMMUNICATION │
                    └────────┬─────────────┘
                             │        S1842
                      ◇ BANDWIDTH RELEASE ◇──YES──►  S1843
                      ◇     COMMAND?      ◇      ┌─────────────────┐
                             │                   │ SHIFT TO BROADCAST │
                            NO                   │ COMMUNICATION MODE │
                             │  S1844            └────────┬────────┘
                      ◇  BANDWIDTH  ◇──NO──►              │
                      ◇  OCCUPANCY  ◇           ┌────▼────┐
                      ◇  COMMAND?   ◇           │   END   │
                             │                  └─────────┘
                            YES
```

HAS P2P COMMUNICATION OBJECT BEEN SPECIFIED?   S1845

— YES — SHIFT TO P2P COMMUNICATION MODE   S1847 — END

— NO — BROADCAST COMMUNICATION PROCESSING   S1846 — END

HAS BANDWIDTH OCCUPANCY OBJECT BEEN SPECIFIED?   S1848

— YES — SHIFT TO BANDWIDTH OCCUPANCY COMMUNICATION MODE   S1849 — END

— NO — SHIFT TO BANDWIDTH ASSIGNMENT MODE   S1850

## FIG.19A

| FIRMWARE ABNORMALITY IN ACCESSORY |
| --- |
| THE ACCESSORY FOR WHICH THE FIRMWARE UPDATE ENDED ABNORMALLY HAS BEEN MOUNTED. PLEASE PERFORM A FIRMWARE UPDATE OF THE ACCESSORY OR MOUNT THE NORMAL ACCESSORY.<br><br>OK |

## FIG.19B

| FIRMWARE UPDATE OF ACCESSORY |
| --- |
| WHEN UPDATING, PLEASE CONNECT WITH THE TARGET SMART PHONE.<br><br>OK |

## FIG.19C

| FIRMWARE UPDATE OF ACCESSORY |
| --- |
| PLEASE SELECT A FIRMWARE UPDATE FILE OF THE ACCESSORY. |
| FIRMWARE UPDATE FILE A OF ACCESSORY<br>FIRMWARE UPDATE FILE B OF ACCESSORY<br>FIRMWARE UPDATE FILE C OF ACCESSORY |

## FIG.19D

| FIRMWARE UPDATE OF ACCESSORY |
| --- |
| UPDATE OF THE FIRMWARE HAS FAILED |

# FIG.20

EP 3 640 729 A1

# FIG.21

COMMUNICATION
REQUEST

CS

CS (CAMERA) — 2803

— 2804

CS (ADAPTER)

CS (LENS)

DATA

DATA (CAMERA)
2801

2802

DATA (ADAPTER)

2806

2805

DATA (LENS)

# FIG.22A

*S1700*

ADAPTER                    CAMERA BODY                    SMART PHONE

START-UP OF ⇨
CAMERA SYSTEM

START-UP OF ⇨
SMART PHONE

*S1701* SPECIFICATION OF P2P
COMMUNICATION SLAVE

BROADCAST
COMMUNICATION {

*S1702* ACQUISITION OF
FIRST ADAPTER
ATTRIBUTE INFORMATION

P2P
COMMUNICATION {

CONNECTION WITH ⇨
SMART PHONE

*S1703* CONNECTION
WITH SMART PHONE

*S1704* OBTAINING SMART
PHONE ATTRIBUTE
INFORMATION

*S1705* TRANSMISSION OF
FIRST ADAPTER
ATTRIBUTE INFORMATION

*S1706* TRANSMISSION REQUEST
OF SECOND ADAPTER
ATTRIBUTE INFORMATION

*S1707* SPECIFICATION OF P2P
COMMUNICATION SLAVE

BROADCAST
COMMUNICATION {

*S1708* ACQUISITION OF
SECOND ADAPTER
ATTRIBUTE INFORMATION

P2P
COMMUNICATION {

*S1709* TRANSMISSION OF
SECOND ADAPTER
ATTRIBUTE INFORMATION

*S1710A*
SHIFT TO ADAPTER ⇨
OPERATION MODE

*S1711* REQUEST OF
BANDWIDTH OCCUPANCY

*S1712* TRANSMISSION
OF BANDWIDTH
OCCUPANCY COMMAND

BROADCAST
COMMUNICATION {

*S1713* TRANSMISSION
OF COMPLETION OF
BANDWIDTH OCCUPANCY

①                    ②                    ③

# FIG.22B

# FIG.23A

START

S1801
POWER SOURCE SUPPLY

S1802
OBTAIN INTERCHANGEABLE LENS ATTRIBUTE INFORMATION BY SECOND COMMUNICATION

S1803
OBTAIN FIRST ACCESSORY ATTRIBUTE INFORMATION BY FIRST COMMUNICATION

S1804
CONNECT WITH SMART PHONE? — NO

YES
S1805
CONNECT WITH SMART PHONE

S1814
ROUTINE STATE

S1806
TRANSMISSION OF FIRST ACCESSORY ATTRIBUTE INFORMATION TO SMART PHONE

S1807
COMMUNICATION BETWEEN SMART PHONE AND ACCESSORY

S1808
DISCONNECTED WITH SMART PHONE? — YES

NO
S1809A
IS FIRST COMMUNICATION BANDWIDTH OCCUPIED? — NO

YES
S1810
TRANSMISSION OF BANDWIDTH OCCUPANCY COMMAND IN BROADCAST COMMUNICATION MODE

S1811A
COMMUNICATION OF SMART PHONE - ACCESSORY OCCUPANCY

S1812A
IS FIRST COMMUNICATION BANDWIDTH RELEASED? — NO

YES
S1813
TRANSMISSION OF BANDWIDTH RELEASE COMMAND IN BROADCAST COMMUNICATION MODE

# FIG.23B

```
            ┌─────────────┐
            │    START    │
            └──────┬──────┘
                   │                    ┌─S1821
         ┌─────────▼─────────────────────────┐
         │     CONNECTION WITH CAMERA        │
         └─────────┬─────────────────────────┘
                   │                    ┌─S1822
         ┌─────────▼─────────────────────────┐
         │   RECEPTION OF FIRST ACCESSORY    │
         │ ATTRIBUTE INFORMATION FROM CAMERA │
         └─────────┬─────────────────────────┘
                   │                    ┌─S1823
         ┌─────────▼─────────────────────────┐
         │ OBTAIN SECOND ACCESSORY ATTRIBUTE │
         │ INFORMATION BY COMMUNICATION      │
         │ BETWEEN SMART PHONE AND ACCESSORY │
         └─────────┬─────────────────────────┘
```

DISCONNECT FROM CAMERA?  S1824  — YES → END

BANDWIDTH OCCUPANCY COMMUNICATION WITH ACCESSORY?  S1825A  — YES

COMMUNICATION BETWEEN SMART PHONE AND ACCESSORY  S1826

REQUEST BANDWIDTH OCCUPANCY OF COMMUNICATION BETWEEN SMART PHONE AND ACCESSORY  S1827

COMMUNICATION BETWEEN SMART PHONE AND ACCESSORY  S1828A

HAS BANDWIDTH OCCUPANCY COMMUNICATION ENDED?  S1829A  — NO

REQUEST BANDWIDTH RELEASE OF COMMUNICATION BETWEEN SMART PHONE AND ACCESSORY  S1830

END

# FIG.23C

START

S1841
ANALYSIS OF
BROADCAST COMMUNICATION

S1842
BANDWIDTH RELEASE
COMMAND? — YES →
S1843
SHIFT TO BROADCAST
COMMUNICATION MODE
END

NO

S1844
BANDWIDTH
OCCUPANCY
COMMAND? — NO →
S1845
HAS P2P
COMMUNICATION
OBJECT BEEN
SPECIFIED? — YES →
S1847
SHIFT TO P2P
COMMUNICATION
MODE
END

NO
S1846
BROADCAST
COMMUNICATION
PROCESSING
END

YES

S1848
HAS BANDWIDTH
OCCUPANCY OBJECT
BEEN SPECIFIED? — NO →
S1850
SHIFT TO BANDWIDTH
ASSIGNMENT MODE

YES
S1849
SHIFT TO BANDWIDTH
OCCUPANCY
COMMUNICATION MODE

END

**FIG.24A**

**FIG.24B**

⎕~2300

⚡~2301
⎕~2300

**FIG.24C**

~2310

2321    2322

| END OF APPLICATION | START OF ADAPTER OPERATION | ~2320 |

STILL IMAGE CAPTURE ~2323

START OF MOVING IMAGE CAPTURE ~2324

**FIG.24D**

~2310

~2320

WAS CONNECTION MADE TO ACCESSORY TO OPERATE ACCESSORY?

YES    NO

**FIG.24E**

~2310

2321    2322A

| END OF APPLICATION | END OF ADAPTER OPERATION | ~2320 |

SPD ⊢—o—~2326 ⊢~2325

2327 ◄▲►▼

STILL IMAGE CAPTURE ~2323

START OF MOVING IMAGE CAPTURE ~2324

# FIG.25

# FIG.26A

```
      ┌─────────────────────────────────┐
      │     CAMERA MICROCOMPUTER          │
      │ BANDWIDTH OCCUPANCY COMMUNICATION │
      │   TRANSMISSION PROCESSING         │
      └─────────────────────────────────┘
                    │
                    ▼              ⌐S2500
      ┌─────────────────────────────────┐
      │      CONNECT DATA TO OUTPUT       │
      └─────────────────────────────────┘
                    │
                    ▼              ⌐S2501
      ┌─────────────────────────────────┐
      │     DATA OUTPUT (TRANSMISSION)    │
      └─────────────────────────────────┘
                    │
                    ▼          S2502
              ◇─────────────────────◇      NO
              ◇  TRANSMISSION REQUEST? ◇──────────┐
              ◇─────────────────────◇            │
                    │ YES            ⌐S2503       │
      ┌─────────────────────────────────┐        │
      │     START LOW OUTPUT TO CS        │        │
      └─────────────────────────────────┘        │
                    │              ⌐S2504        │
      ┌─────────────────────────────────┐        │
      │      CONNECT DATA TO INPUT        │        │
      └─────────────────────────────────┘        │
                    │              ⌐S2505        │
      ┌─────────────────────────────────┐        │
      │     CANCEL LOW OUTPUT TO CS       │        │
      └─────────────────────────────────┘        │
                    │              ⌐S2506        │
      ┌─────────────────────────────────┐◄───────┘
      │     TRANSFER RECEPTION DATA       │◄──┐
      │        TO SMART PHONE             │   │
      └─────────────────────────────────┘   │
                    │          S2507          │
              ◇─────────────────────◇      NO │
              ◇ WAS CONSTANT LENGTH  ◇────────┘
              ◇  DATA RECEIVED?      ◇
              ◇─────────────────────◇
                    │ YES
                    ▼          S2508
              ◇─────────────────────◇      NO
              ◇     BROADCAST        ◇──────────┐
              ◇ COMMUNICATION EVENT  ◇          │
              ◇    GENERATED?        ◇          │
              ◇─────────────────────◇          │
                    │ YES           ⌐S2509      │
      ┌─────────────────────────────────┐       │
      │      SHIFT TO BROADCAST           │       │
      │     COMMUNICATION MODE            │       │
      └─────────────────────────────────┘       │
                    │◄─────────────────────────┘
                    ▼
              ┌───────────┐
              │    END     │
              └───────────┘
```

# FIG.26B

ADAPTER MICROCOMPUTER
BANDWIDTH OCCUPANCY COMMUNICATION
RECEPTION PROCESSING

*S2520*

CS = Low?

NO

YES

*S2521*

CONSTANT
LENGTH DATA
RECEIVED?

NO

YES

*S2522*

ANALYSIS OF
RECEPTION DATA

*S2523*

CS = Hi?

NO

YES

CONNECT DATA TO OUTPUT  *S2524*

DATA OUTPUT (TRANSMISSION)  *S2525*

CONNECT DATA TO INPUT  *S2526*

END

# FIG.27

**FIG.28A**

CAMERA MICROCOMPUTER
PROCESSING BANDWIDTH OCCUPANCY COMMUNICATION
(ANOTHER EXAMPLE) TRANSMISSION PROCESSING

S2700
CONNECT DATA TO OUTPUT

S2701
DATA OUTPUT (TRANSMISSION)

S2702
DATA WHICH IS LESS THAN MAXIMUM LENGTH TRANSMITTED? — NO

YES

S2703
START LOW OUTPUT TO CS

S2704
IS COMMAND BIDIRECTIONAL? — NO

YES

S2705
CANCEL LOW OUTPUT TO CS

S2706
CONNECT DATA TO INPUT

S2707
CANCEL LOW OUTPUT TO CS

S2708
CS = Low? — NO

YES

S2709
TRANSFER RECEPTION DATA TO SMART PHONE

S2710
CS = Hi? — NO

YES

S2711
BROADCAST COMMUNICATION EVENT GENERATED? — NO

YES

S2713
SHIFT TO BROADCAST COMMUNICATION MODE

END

# FIG.28B

ADAPTER MICROCOMPUTER
PROCESSING BANDWIDTH OCCUPANCY
COMMUNICATION (ANOTHER EXAMPLE)
RECEPTION PROCESSING

S2720

CS = Low? — NO

YES — S2723

ANALYSIS OF RECEPTION DATA

S2724

CS = High? — NO

YES

S2725

IS COMMAND BIDIRECTIONAL? — NO

YES — S2727

CONNECT DATA TO OUTPUT

S2728

DATA OUTPUT (TRANSMISSION)

S2729

START LOW OUTPUT TO CS

S2730

CONNECT DATA TO INPUT

S2731

CANCEL LOW OUTPUT TO CS

S2721

MAXIMUM LENGTH DATA RECEIVED? — NO

YES — S2722

ANALYSIS OF RECEPTION DATA

S2726

START LOW OUTPUT TO CS

S2732

CS = Hi? — NO

YES

END

Europäisches
Patentamt

European
Patent Office

Office européen
des brevets

# EUROPEAN SEARCH REPORT

Application Number

EP 19 20 1913

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 001 697 B2 (CANON KK [JP]) 19 June 2018 (2018-06-19) | 1,2,4, 6-8,10, 12-14 | INV. G03B17/14 G03B17/38 |
| Y | * columns 4-12; figures 1,2,3 * * column 9, line 62 - column 10, line 7 * | 3,5,6,9, 11,12 | G03B17/56 H04N5/232 |
| X | US 2017/187945 A1 (IKEDA KAORI [JP]) 29 June 2017 (2017-06-29) | 1,2,4,5, 7,8,10, 11,13,14 | |
| Y | * paragraphs [0037] - [0134]; figures 1,2,5 * | 3,5,6,9, 11,12 | |
| Y | US 4 853 733 A (WATANABE YOUJI [JP] ET AL) 1 August 1989 (1989-08-01) * column 4, lines 5-12 * | 3,9 | |
| Y | US 2014/184893 A1 (IMAFUJI KAZUHARU [JP]) 3 July 2014 (2014-07-03) * paragraphs [0092] - [0095]; figures 1,3 * | 3,9 | |

TECHNICAL FIELDS SEARCHED (IPC)

G03B
H04N

The present search report has been drawn up for all claims

| Place of search | Date of completion of the search | Examiner |
|---|---|---|
| Munich | 6 March 2020 | Rückerl, Ralph |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 19 20 1913

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2020

| Patent document cited in search report | | Publication date | Patent family member(s) | | Publication date |
|---|---|---|---|---|---|
| US 10001697 | B2 | 19-06-2018 | JP | 2017146421 A | 24-08-2017 |
| | | | US | 2017235214 A1 | 17-08-2017 |
| US 2017187945 | A1 | 29-06-2017 | JP | 2017116866 A | 29-06-2017 |
| | | | US | 2017187945 A1 | 29-06-2017 |
| US 4853733 | A | 01-08-1989 | NONE | | |
| US 2014184893 | A1 | 03-07-2014 | CN | 103827743 A | 28-05-2014 |
| | | | CN | 106937050 A | 07-07-2017 |
| | | | JP | 6127975 B2 | 17-05-2017 |
| | | | JP | 6477768 B2 | 06-03-2019 |
| | | | JP | 2017167540 A | 21-09-2017 |
| | | | JP | 2019095805 A | 20-06-2019 |
| | | | JP | 2019113852 A | 11-07-2019 |
| | | | JP | WO2013039120 A1 | 26-03-2015 |
| | | | US | 2014184893 A1 | 03-07-2014 |
| | | | WO | 2013039120 A1 | 21-03-2013 |

EPO FORM P0459

For more details about this annex : see Official Journal of the European Patent Office, No. 12/82

**REFERENCES CITED IN THE DESCRIPTION**

**Patent documents cited in the description**

- JP 2006171392 A